# EUROPEAN PATENT APPLICATION

(11) **EP 1 338 994 A1**
(43) Date of publication of application: **27.08.2003**
(21) Application number: 01998923.5
(22) Date of filing: 28.11.2001
(51) Int. Cl.: G06F 17/60

(54) **SYSTEM AND METHOD FOR PROVIDING SERVICE BY PROXY**

(30) Priority: 28.11.2000 JP 2000361770
(71) Applicant: Sony Corporation, Tokyo 141-0001 (JP)
(72) Inventor: TADANO, Hiroshi, SONY CORPORATION, Tokyo 141-0001 (JP); ANZAKI, Tomosuke, c/o SONY CORPORATION, Tokyo 141-0001 (JP); NAKASHIMA, Hirofumi, c/o SONY CORPORATION, Tokyo 141-0001 (JP); HASHIZUME, Naoyoshi. c/o SONY CORPORATION, Tokyo 141-0001 (JP)
(74) Representative: Horner, David Richard
(86) International application number: JP0110402
(87) International publication number: WO02044972

(57) **Abstract**

A network 3 is used to connect a terminal (5) of a customer (9), a member store server (7) and a service provision server (8) of a member store (11), and a service surrogate server (13) with each other. An administrator of the member store (11) accesses the service surrogate server (13) to enter a reservation target resource, etc. The reservation target resource etc. are registered to the service surrogate server (13). The service surrogate server (13) also generates a time-based reservation screen (607). When the customer (9) applies for a reservation via the member store (11), the time-based reservation screen (607) is displayed. The customer (9) uses the time-based reservation screen (607) to make a reservation. Consequently, the present invention can provide a surrogate system etc. without necessitating the member store etc. to build a reservation system etc. for electronic business transaction using the Internet, etc.

## Description

### Technical Field

The present invention relates to a surrogate system which surrogates charging, etc. for the electronic business transaction, etc. using the Internet, etc.

### Background Art

Recently, there is an increasing need for the electronic business transaction using the Internet, etc. In such electronic business transaction, a customer accesses a member store server from the customer's terminal to purchase commodities or subscribe to a service.

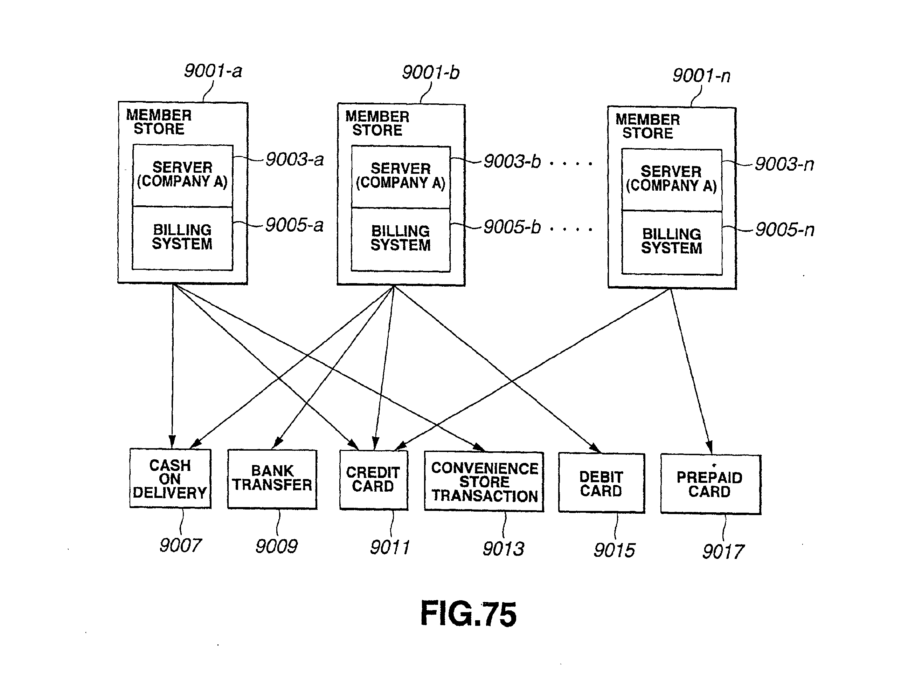

FIG. 75 schematically shows a conventional transaction system via the Internet. Servers 9003-a, 9003-b, and so on of member stores 9001-a, 9001-b ···, and 9001-n are connected to network such as the Internet (not shown). A customer's (user's) terminal (not shown) is connected to the network. The customer uses the terminal to access, e.g., server 9003-a and purchase commodities, etc. Servers 9003-a, 9003-b, and so on are provided with billing systems 9005-a, 9005-b, and so on, respectively.

The billing system 9005-a performs billing processing for member store 9001-a. The billing processing includes cash on delivery 9007, bank transfer 9009, credit-card transaction 9011, convenience store transaction 9013, debit card transaction 9015, prepaid card transaction 9017, etc. When the credit-card transaction 9011 is performed, for example, the billing system 9005-a allows a customer to enter his or her credit card number, etc. for accessing a credit company's server. The price is transferred from the customer's bank account later on. In order to make a reservation in such system, each member store 9001 conventionally establishes a reservation system.

In such system, however, independently providing member stores 9001-a, 9001-b, and so on with reservation systems consumes time and costs for constructing reservation systems.

Further, such system cannot comply with continued services.

Moreover, the system needs to require billing systems 9005-a, 9005-b, and so on for member stores 9001-a, 9001-b, and so on, respectively.

The member store 9001 provides a service accompanied by continuous billing such as a monthly fee and must establish a billing system for its continued service. In recent years, there is widely used a general-purpose billing system package for processing such billing. Although a billing system need not be constructed from scratch, there is required not a negligible additional fee for operational procedures, etc.

In such system, the member store 9001 may issue a digital ticket. A customer may purchase the digital ticket for receiving commodities or services provided by the member store 9001.

In such system, however, the member stores 9001-a, 9001-b, and so on must be respectively provided with systems for issuing digital tickets. The time and costs are required for building a digital ticket issuing system.

Conventionally, there is increasing the network-related business including not only telecommunication business represented by telephone services, VAN services, Internet connection services, but also Internet shops for selling goods or electronic contents such as music, videos, still pictures, computer applications software, documents, etc.

Further, there are rapidly increasing various service business information delivery services of news etc., Internet education services, mail magazines, etc.

In such situation, there is a need for versatile billing means for selling commodities or providing services on the network. One possible solution is a server-managed digital ticket.

The digital ticket is used for managing an issuer and a purchaser and is becoming a consumer-friendly versatile billing means usable for consumers like a coupon ticket or a season ticket.

When there is a remarkably long period between the date to make a reservation and the date to start using a service, the customer may lose an intention to use the service or forget the reservation itself. Also in this case, the credit-card transaction 9011 cannot settle the reservation, requiring complicated processing such as reconfirmation, etc.

### Disclosure of the Invention

The present invention has been made in consideration of the foregoing. It is therefore an object of the present invention to provide a surrogate system etc. for allowing a member store etc. to eliminate the need for building a reservation system, a billing system, a digital ticket issuing system, etc. or performing complicated reconfirmation and to comply with continued services in the electronic business transaction by using the Internet, etc.

In order to achieve the above-mentioned objects, a service surrogate system according to the present invention comprises a plurality of provider servers; a plurality of terminals; and a service surrogate server.

The plurality of provider servers, terminals, and service surrogate server are networked, the terminal accesses the provider server for being provided with a commodity or service, and then the service surrogate server performs billing processing.

A service surrogate server according to the present invention is networked to a plurality of provider servers and terminals and comprises: a registration means for receiving registration of a commodity or service from the provider server; an order form creation means for creating an order form screen for a commodity or service registered by the registration means from the provider server; and a billing means for performing billing processing of the commodity or service on behalf of the provider server in response to an order according to the order form from the terminal.

A service surrogate server according to the present invention processes billing processing corresponding to an order of a commodity or service to a provider server from a terminal on behalf of the provider server and comprises: a reception means for receiving from the provider server a billing condition about billing for a commodity or service provided according to a request from the terminal; a billing means building means for building a billing means for the provider server based on the billing condition received by the reception means; and a billing surrogate means for performing billing processing of the commodity or service on behalf of the provider server based on the billing condition received by the reception means.

A service surrogate method according to the present invention concerns a plurality of networked provider servers and terminals, and comprises the steps of: receiving registration of a commodity or service from the provider server; creating an order form screen for a commodity or service registered from the provider server; and performing billing processing of the commodity or service on behalf of the provider server in response to an order according to the order form ordered from the terminal.

A service surrogate method according to the present invention performs billing processing corresponding to an order of a commodity or service placed to a provider server from a terminal on behalf of the provider server and comprises the steps of: receiving from the provider server a billing condition about billing for a commodity or service provided according to a request from the terminal; building a billing means for the provider server based on the received billing condition; and performing billing processing of the commodity or service on behalf of the provider server based on the billing condition.

A computer-readable recording medium according to the present invention stores a program which allows a computer to function as: a reception means for receiving from a provider server a billing condition about billing for a commodity or service provided according to a request from a terminal; a billing means building means for building a billing means for the provider server based on the billing condition received by the reception means; and a billing surrogate means for performing billing processing of the commodity or service on behalf of the provider server based on the billing condition received by the reception means.

A computer-readable recording medium according to the present invention stores a program which allows a computer to function as: a registration means for receiving registration of a commodity or service from a provider server; an order form creation means for creating an order form screen for a commodity or service registered by the registration means from the provider server; and a billing surrogate means for performing billing processing of the commodity or service on behalf of the provider server in response to an order according to the order form from the terminal.

A provider server according to the present invention is networked to a plurality of terminals and a service surrogate server comprising: a registration means for registering a commodity or service to the service surrogate server; and a transmission means for transmitting a catalog screen of a commodity or service in response to an access from the terminal. When an order is placed via the catalog screen, the service surrogate server surrogately performs billing processing.

A provider service method according to the present invention uses a plurality of terminals and a service surrogate server networked with each other, comprising the steps of: registering a commodity or service to the service surrogate server; and transmitting a catalog screen of a commodity or service in response to an access from the terminal. When an order is placed via the catalog screen, the service surrogate server surrogately performs billing processing.

A service surrogate server according to the present invention is networked to a plurality of provider servers and terminals, comprising: a means for creating a digital ticket according to a request to create a digital ticket from the provider server; and an acceptance means for accepting purchase of a digital ticket at the terminal via the provider server to provide the digital ticket in response to a request for a digital ticket from the terminal.

A service surrogate method according to the present invention concerns a plurality of networked provider servers and terminals and comprises the steps of: creating digital tickets according to a request to create a digital ticket for a commodity or service from the provider server; and accepting purchase of a digital ticket at the terminal via the provider server to provide the digital ticket in response to a request for a digital ticket from the terminal.

A computer-readable recording medium according to the present invention stores a program which allows a computer to function as: a means for creating a digital ticket according to a request to create a digital ticket for a commodity or service from the provider server; and an acceptance means for accepting purchase of a digital ticket at the terminal via the provider server to provide the digital ticket in response to a request for a digital ticket from the terminal.

A service surrogate server according to the present invention is networked to a plurality of provider servers and terminals and comprises: a registration means for registering reservation target information about a commodity or service from the provider server; a creating means for creating a reservation board of a commodity or service registered by the registration means; and a service surrogate means for making a reservation on behalf of the provider server upon acceptance of a reservation of the commodity or service from the terminal via the provider server.

A service surrogate method according to the present invention concerns a plurality of networked provider servers and terminals and comprises the steps of: registering reservation target information about a commodity or service from the provider server; creating a reservation board for a commodity or service registered at the step; and receiving a reservation of the commodity or service from the terminal via the provider server and processes a reservation on behalf of the provider server.

A computer-readable recording medium according to the present invention stores a program which allows a computer to function as: a registration means for registering reservation target information about a commodity or service from a provider server; a means for creating a reservation board of a commodity or service registered by the registration means; and a service surrogate means for making a reservation on behalf of the provider server upon acceptance of a reservation of the commodity or service from the terminal via the provider server.

### Brief Description of the Drawings

FIG. 1 shows a hardware configuration of a surrogate system 1;
FIG. 2 shows a customer database 41;
FIG. 3 shows the customer database 41;
FIG. 4 shows a member store database 43;
FIG. 5 shows a commodity/service database 45;
FIG. 6 shows a purchase/subscription management database 47;
FIG. 7 shows a digital ticket database 49;
FIG. 8 shows a reservation target resource database 53;
FIG. 9 shows a reservation information management database 51;
FIG. 10 shows a configuration of the surrogate system 1;
FIG. 11 schematically shows the configuration of the surrogate system 1;
FIG. 12 is a flowchart showing processing of the surrogate system 1;
FIG. 13 is a flowchart showing processing of the surrogate system 1;
FIG. 14 is an explanatory diagram illustrating processing of the surrogate system 1;
FIG. 15 shows a catalog screen 123;
FIG. 16 shows the catalog screen 123;
FIG. 17 shows an order form screen 125;
FIG. 18 shows the order form screen 125;
FIG. 19 shows the order form screen 125;
FIG. 20 shows the order form screen 125;
FIG. 21 is a flowchart showing processing of the surrogate system 1;
FIG. 22 is a flowchart showing processing of the surrogate system 1;
FIG. 23 is an explanatory diagram illustrating processing of the surrogate system 1;
FIG. 24 shows a service registration/management screen 201;
FIG. 25 shows the service registration/management screen 201;
FIG. 26 shows a service catalog screen 203;
FIG. 27 shows a service subscription screen 205;
FIG. 28 shows the service subscription screen 205;
FIG. 29 is a flowchart showing processing of the surrogate system 1;
FIG. 30 is a flowchart showing processing of the surrogate system 1;
FIG. 31 is an explanatory diagram illustrating processing of the surrogate system 1;
FIG. 32 shows a digital ticket issuance/management screen 303;
FIG. 33 shows the digital ticket issuance/management screen 303;
FIG. 34 shows the digital ticket issuance/management screen 303;
FIG. 35 shows a digital ticket purchase screen 307;
FIG. 36 shows a digital ticket confirmation screen 309;
FIG. 37 is a flowchart showing processing of the surrogate system 1;
FIG. 38 is a flowchart showing processing of the surrogate system 1;
FIG. 39 is an explanatory diagram illustrating processing of the surrogate system 1;
FIG. 40 shows a first-come-first-served reservation board registration/management screen 401;
FIG. 41 shows a reservation target resource registration/management screen 403;
FIG. 42 shows the reservation target resource registration/management screen 403;
FIG. 43 shows the reservation target resource registration/management screen 403;
FIG. 44 shows the reservation target resource registration/management screen 403;
FIG. 45 shows the reservation target resource registration/management screen 403;
FIG. 46 shows the reservation target resource registration/management screen 403;
FIG. 47 shows a first-come-first-served reservation screen 407;
FIG. 48 shows the first-come-first-served reservation screen 407;
FIG. 49 shows the first-come-first-served reservation screen 407;
FIG. 50 is a flowchart showing processing of the surrogate system 1;
FIG. 51 is a flowchart showing processing of the surrogate system 1;
FIG. 52 is a flowchart showing processing of the surrogate system 1;
FIG. 53 is an explanatory diagram illustrating processing of the surrogate system 1;
FIG. 54 shows a reservation target resource registration/management screen 503;
FIG. 55 shows a lottery reservation screen 507;
FIG. 56 shows the lottery reservation screen 507;
FIG. 57 shows the lottery reservation screen 507;
FIG. 58 is a flowchart showing processing of the surrogate system 1;
FIG. 59 is a flowchart showing processing of the surrogate system 1;
FIG. 60 is an explanatory diagram illustrating processing of the surrogate system 1;
FIG. 61 is an explanatory diagram showing process screens for the surrogate system 1;
FIG. 62 shows a reservation target resource registration/management screen 603;
FIG. 63 shows the reservation target resource registration/management screen 603;
FIG. 64 shows a reservation target resource registration/management screen 623;
FIG. 65 shows a time-based reservation screen 607;
FIG. 66 is a flowchart showing processing of the surrogate system 1;
FIG. 67 shows a processing time scale for the surrogate system 1;
FIG. 68 shows the processing time scale for the surrogate system 1;
FIG. 69 shows a confirmation screen 609 for reservation content;
FIG. 70 shows a confirmation screen 619 for provisional reservation;
FIG. 71 shows a login screen 625.
FIG. 72 shows a reconfirmation screen 627;
FIG. 73 shows a reconfirmation screen 628;
FIG. 74 shows a cancel confirmation screen 629; and
FIG. 75 is an explanatory diagram of billing processing for a conventional electronic business transaction.

### Best Mode for Carrying out the Invention

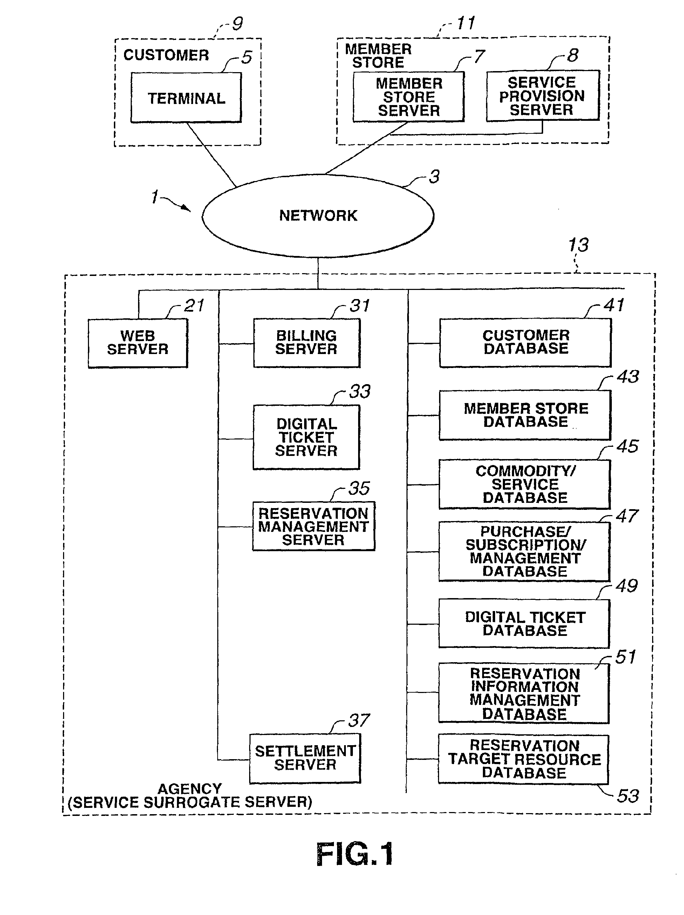

Embodiments of the present invention will be described in further detail with reference to the accompanying drawings. FIG. 1 schematically shows a hardware configuration of a surrogate system 1 according to an embodiment of the present invention.

As shown in FIG. 1, the surrogate system 1 uses a network 3 to connect with a terminal 5 owned by a customer 9, a member store server 7 owned by a member store 11, a service provision server 8, a service surrogate server (agency) 13, etc.

The network 3 includes, e.g., the Internet, etc. The customer 9 is an ordinary user. The terminal 5 signifies a computer, a portable telephone, a mobile terminal, etc. owned by the customer 9. The member store 11 builds a shopping mall, etc. in the surrogate system 1 via the network 3. When accessed by the customer 9, the member store server 7 displays a commodity catalog, etc. The member store 11 surrogates the agency 13 for billing processing, etc. The required fee is paid as follows. When the customer 9 purchases commodities etc. from the member store 11, the member store 11 pays part of the sales to the agency 13. Alternatively, the member store 11 monthly pays a given amount as a condition for membership to the surrogate system 1.

The service provision server 8 is used for the member store 11 to provide the customer 9 with services on the network 3. For providing a service such as an online game, for example, the service provision server 8 provides the game. A provider server comprises the member store server 7, the service provision server 8, etc. The provider is equivalent to the member store. One server may have capabilities of the member store server 7 and the service provision server 8 and may be referred to as a member store server or a provider server.

The agency 13 has a web server 21, a billing server 31, a digital ticket server 33, a reservation management server 35, a settlement server 37, a customer database 41, a member store database 43, a commodity/service database 45, a purchase/subscription management database 47, a digital ticket database 49, a reservation information management database 51, a reservation target resource database 53, etc.

When the customer 9 purchases commodities from the member store 11 or subscribes to a service provided by the member store 11, the service surrogate server 13 performs billing processing, etc. on behalf of the member store 11. In addition, the service surrogate server 13 surrogately issues a digital ticket or makes a reservation to the member store 11 on behalf of the customer 9.

The web server 21 is responsible for screen display, etc. when an administrator etc. of the member store 11 accesses the service surrogate server 13. The billing server 31 is responsible for billing processing when the customer 9 purchases commodities from the member store 11 or subscribes to a service. The billing processing can be one-time or continuous. The one-time billing processing occurs when the customer 9 purchases commodities from the member store 11. The continuous billing processing is needed when the customer 9 is provided with a continued service from the member store 11. The service surrogate server 13 is also responsible for a surrogate service with respect to digital tickets or reservation processing such as first-come-first-served reservation, lottery reservation, etc. In such case, the billing server 31 is also responsible for the billing required.

When the member store 11 needs to issue a digital ticket, the digital ticket server 33 surrogately issues or manage the digital ticket. Here, the digital ticket is a form of billing for commodities price or services price when the member store 11 provides commodities or services on the network 3.

For example, the digital ticket server 33 issues a digital ticket for the member store 11, and the customer 9 purchases the digital ticket. By using the digital ticket, the customer 9 can purchase commodities or receive services from the member store 11.

The reservation management server 35 surrogately makes a reservation to the member store 11 on behalf of the customer 9, for example. The surrogate system 1 enables the customer 9 to make a reservation to the member store 11. Namely, the member store 11 may sell the limited number of commodities etc. via the network 3. In such case, the member store 11 accepts reservations from the customers 9 on a first-come-first-served basis. Alternatively, the member store 11 determines the applied customers 9 by lot and provides commodities etc. to the prizewinning customers 9.

When the service provision server 8 provides online games, for example, reservations are accepted from the customers 9 within a specified time-based. The reservation management server 35 is responsible for these first-come-first-served, lottery, time-based reservations, etc. and processes the related reconfirmation from the customer 9.

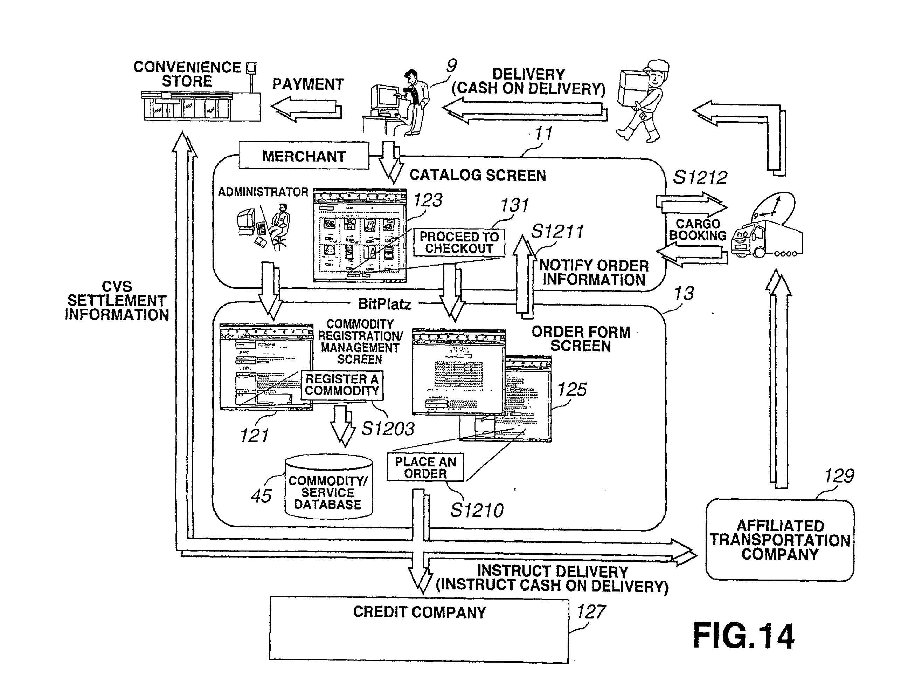

The settlement server 37 performs processing such as charging prices to credit companies etc. When the customer 9 purchases a commodity etc. from the member store 11, for example, a credit card number of the customer 9 is notified. The billing server 31 determines what commodity the customer purchased from the member store 11, and calculates the price thereof etc. The billing server 31 sends information about the credit card of the customer 9 and the price to the settlement server 37. Based on this information, the settlement server 37 accesses the credit company 127 (FIG. 14) via the network 3, and sends the billing information to the credit company 127. Based on this billing information, the credit company 127 charges the price to the bank account of the customer 9.

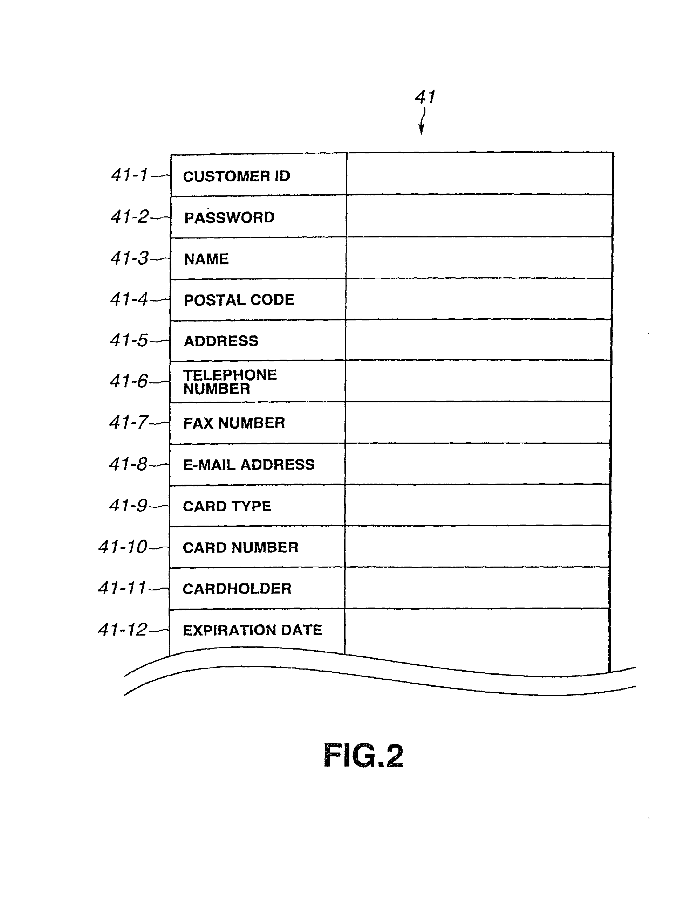

The customer database 41 maintains various information about the customer 9. FIG. 2 shows customer data maintained in the customer database 41. A customer ID 41-1 is an identification number for identifying the customer 9. A password 41-2 is a personal identification number etc. needed for authentication of the customer 9 to use the surrogate system 1 from the terminal 5. The other personal information about the customer 9 includes a name 41-3, a postal code 41-4, an address 41-5, a telephone number 41-6, a fax number 41-7, and an e-mail address 41-8.

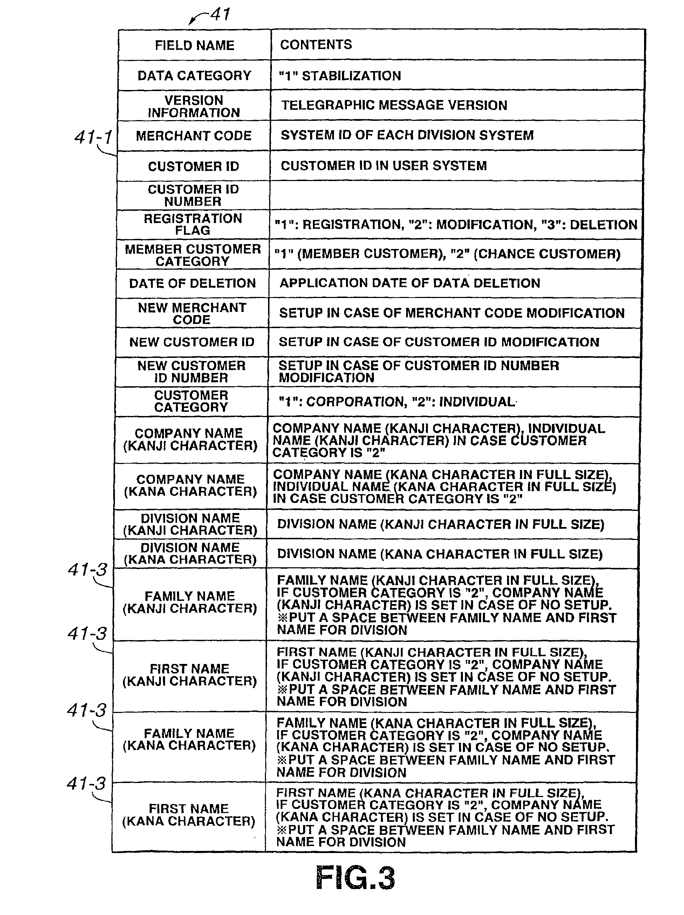

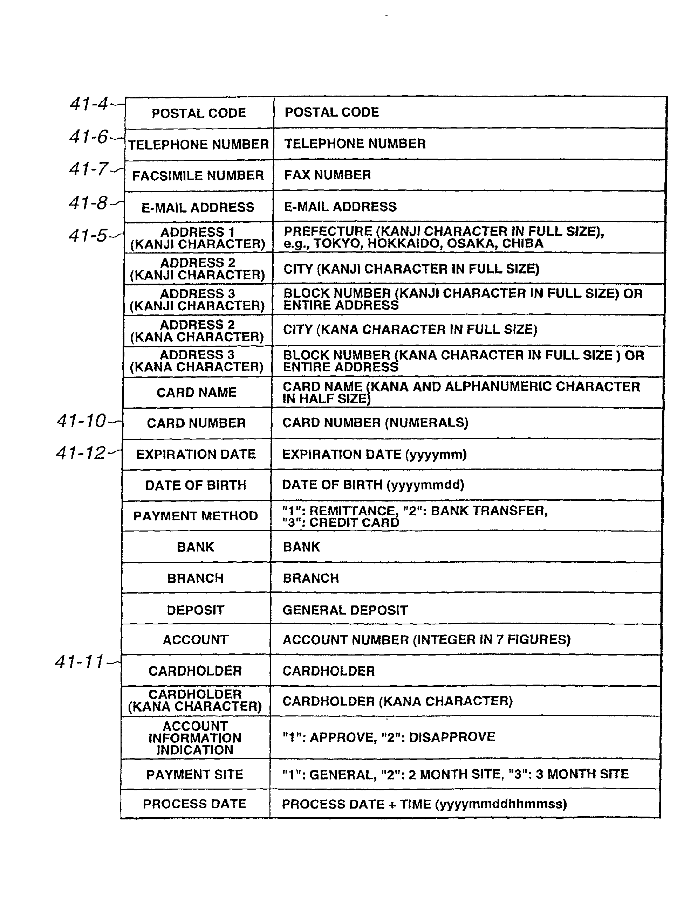

A card type 41-9 indicates the type of credit card etc. The other information about the credit card owned by the customer 9 includes a card number 41-10, a cardholder 41-11, and an expiration date 41-12. FIG. 3 shows the content of the customer database 41 in more detail. The customer database 41 is created as follows. The customer 9 accesses the member store server 7, then accesses the service surrogate server 13, and enters the necessary data items.

When purchasing commodities etc. via the network 3, the customer 9 accesses the member store server 7 and specifies a commodity to purchase. The customer 9 is then automatically linked to the service surrogate server 13. The customer 9 enters the password 41-2, the name 41-3, etc. for purchasing the commodity. The entered information is retained in the customer database 41. At this time, the billing server 31 may issue the customer ID 41-1, for example. The customer ID 41-1 is registered to the customer database 41. The customer ID 41-1 may be not only determined by the service surrogate server 13, but also selected by the customer 9.

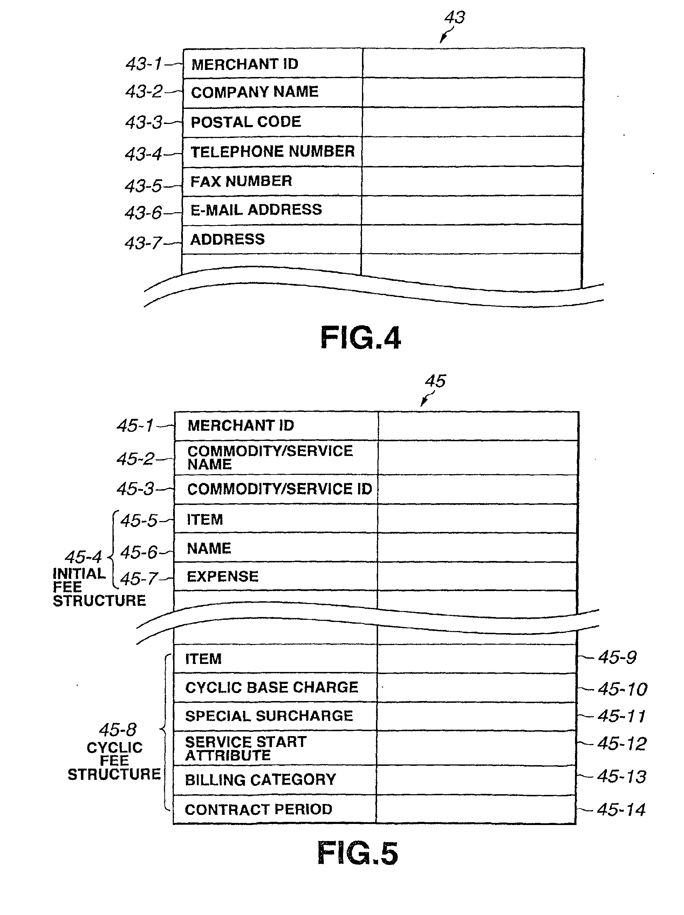

The member store database 43 maintains various attributes of the member store 11. FIG. 4 shows the content of the member store database 43. A merchant ID 43-1 an identification number for identifying the member store 11. The merchant here signifies a member store (provider). A company name 43-2 is a name of the member store 11. The other information about the member store 11 includes a postal code 43-3, a telephone number 43-4, a fax number 43-5, an e-mail address 43-6, and an address 43-7, etc.

The member store database 43 is created as follows. An administrator etc. of the member store 11 accesses the service surrogate server 13 to subscribe to the surrogate system 1 and completes registration procedures to receive services provided by the service surrogate server 13. Namely, the administrator of the member store 11 accesses the service surrogate server 13 and enters the company name 43-2, the postal code 43-3, the telephone number 43-4, etc. For example, the billing server 31 of the service surrogate server 13 issues a merchant ID 43-1 to the customer 9.

The commodity/service database 45 maintains data indicating commodities and services provided by the member store 11. FIG. 5 shows the content of the commodity/service database 45. A merchant ID 45-1 is an identification number for identifying the member store 11. A commodity/service name 45-2 indicates a commodity or service name. A commodity/service ID 45-3 is an identification number for identifying a commodity or service. .

An item 45-5 denotes an item of the commodity or service provided by the member store 11. A name 45-6 corresponds to the item. An expense 45-7 is a charge needed for the item. The item 45-5, the name 45-6, and the expense 45-7 relate to an initial fee structure 45-4. The initial fee structure 45-4 is first charged when the customer 9 purchases the commodity, etc.

The commodity/service database 45 also maintains information about a cyclic fee structure 45-8. The cyclic fee structure 45-8 is charged periodically. For example, the cyclic fee structure 45-8 is charged monthly when the customer 9 uses his or her terminal 5 to continuously access the service provision server 8 of the member store 11 for receiving services.

An item 45-9 is a commodity or service provided by the member store 11. A cyclic base charge 45-10 corresponds to a monthly amount which is periodically charged and special surcharge 45-11 may be added to cyclic base charge 45-10. A service start attribute 45-12 maintains information about whether to initiate a service just after the online sign-up or from the first day of a month next to that of the sign-up. A billing category 45-13 specifies whether to charge a monthly amount this month or next month. A contract period 45-14 indicates a period of contract, etc.

The commodity/service database 45 is created as follows. An administrator or the like of the member store 11 accesses the service surrogate server 13 and registers information about commodities and services provided by the member store 11. Specifically, the administrator or the like ofthe member store 11 enters the name 45-6, the expense 45-7, etc. for the commodity/service name 45-2 and the item 45-5.

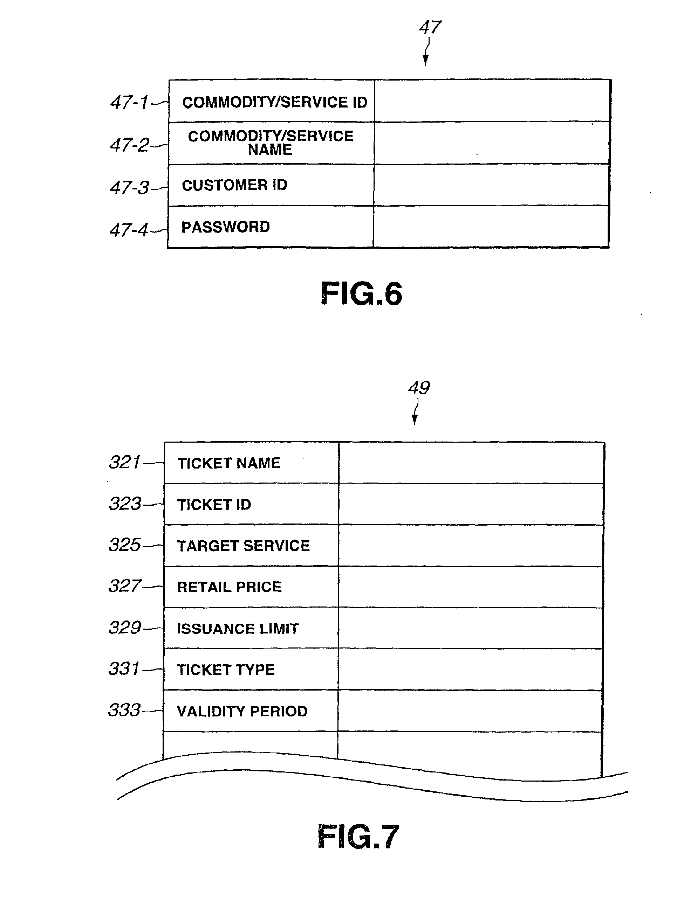

The purchase/subscription management database 47 in FIG. 6 maintains data indicating commodities and services in case of purchasing commodities from the member store 11, and subscribing to a service.

A commodity/service ID 47-1 is an identification number corresponding to a commodity or service in case of purchasing commodities from the member store 11, and subscribing to a service provided to the customer 9 from the member store 11. A commodity/service name 47-2 is assigned to the commodity or service. A customer ID 47-3 and a password 47-4 are used for identifying number the customer 9 and personal identification number.

The purchase/subscription management database 47 is created as follows. When the customer 9 accesses the member store server 7 and subscribes to a service etc., for example, the customer 9 is automatically linked to the service surrogate server 13. The customer 9 specifies subscription to the service etc. and registers the commodity/service name 45-2, the commodity/service ID 45-3, etc. associated with the commodity.

FIG. 7 shows the digital ticket database 49. A ticket name 321 is a digital ticket name, e.g., "One-year-valid Vaio Support Plus Ticket" (Vaio: Sony Corp. trademark). A ticket ID 323 is an identification number of the digital ticket. A target service 325 indicates a service to be provided. An issuance limit 329 is entered to specify whether to issue digital tickets with or without limitations. A ticket type 331 denotes the type of ticket such as a one-time ticket, a coupon ticket, a season ticket, etc. A validity period 333 corresponds to the digital ticket's validity period.

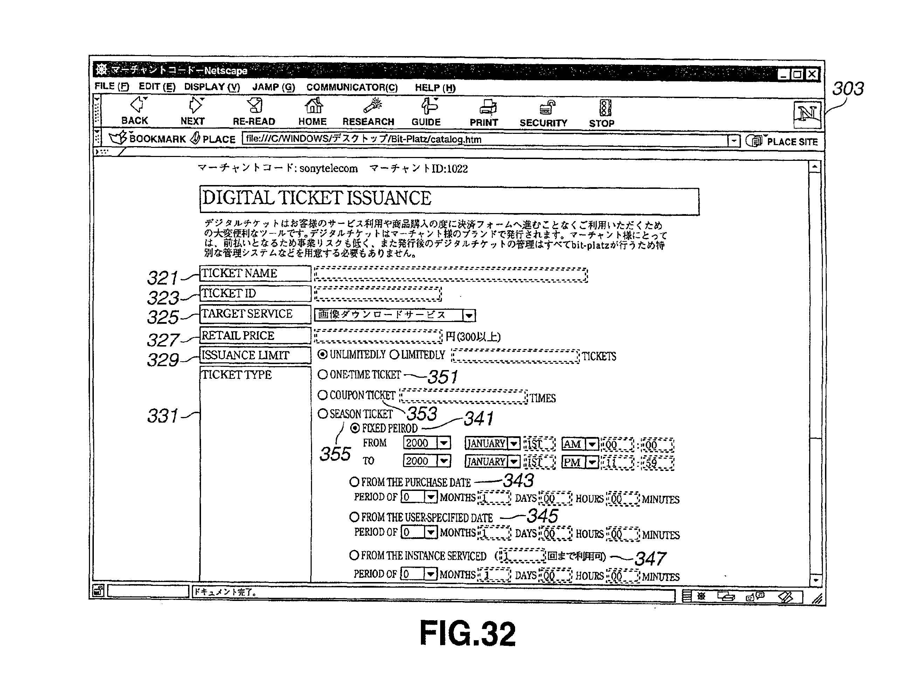

The digital ticket database 49 is created as follows. When an administrator of the member store 11 accesses the service surrogate server 13 and requests it to issue a digital ticket, a digital ticket issuance/management screen 303 (FIG. 32) is displayed. The administrator enters the ticket name 321, the ticket ID 323, etc. The entered information is maintained in the digital ticket database 49. The digital ticket server registers the data to the digital ticket database 49.

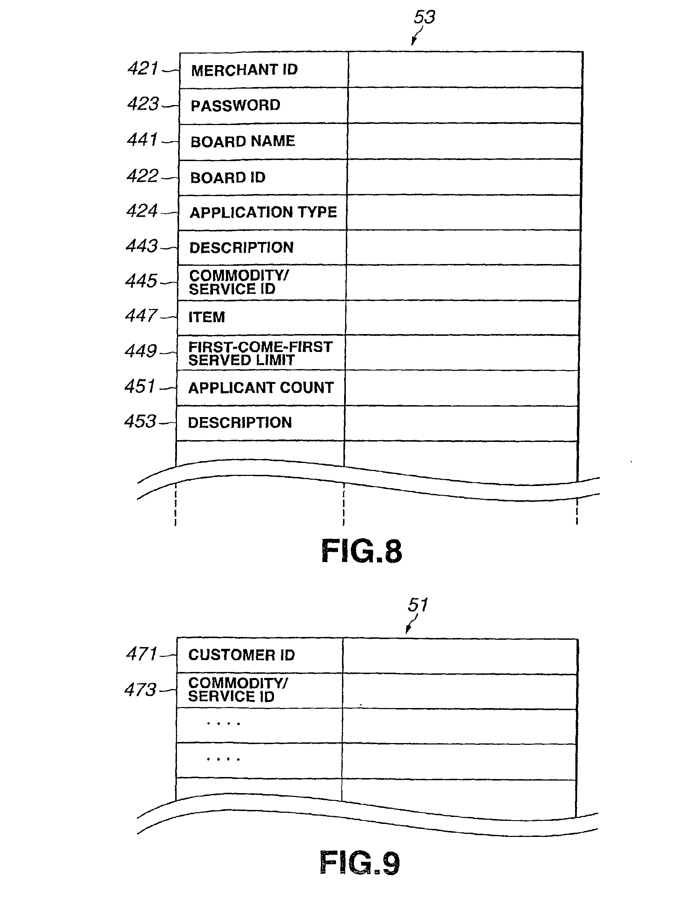

FIG. 8 shows the reservation target resource database 53. A reservation target resource is information about commodities etc. handled by reservation services such as the first-come-first-served reservation, the lottery reservation, the time-based reservations, etc. provided by the member store 11.

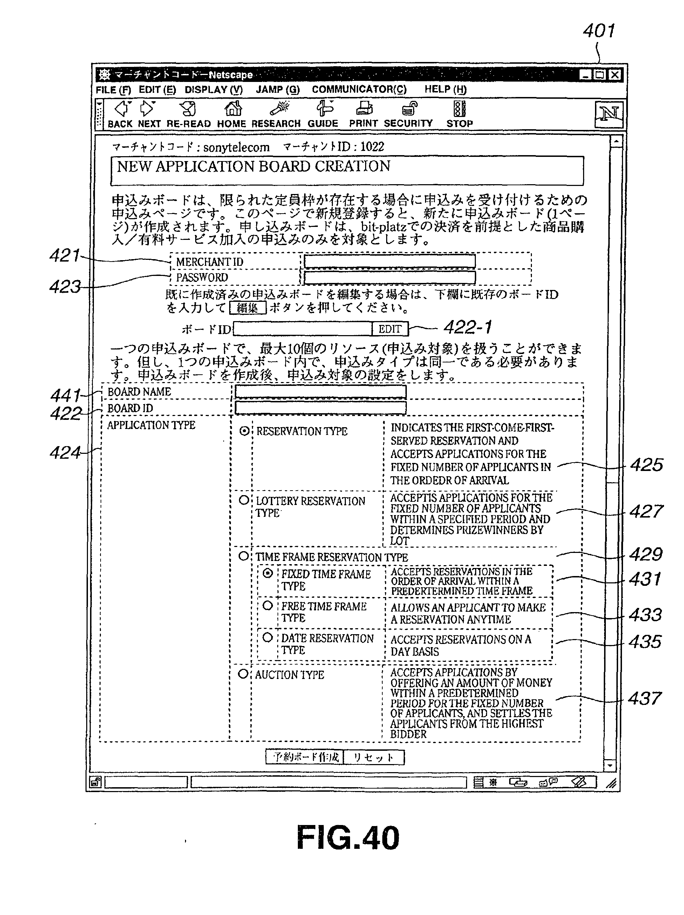

A merchant ID 421 is an identification of the member store 11. A password 423 is assigned to the member store 11. A board name 441 is assigned to a board. A board ID 422 is an identification number for identifying the board. An application type 424 specifies, a (first-come-first-served) reservation type 425, a lottery reservation type 427, a time-based reservation type 429 (FIG. 40), etc.

A description 443 is a comment about the commodity or service. An item 447 specifies a commodity name, etc. A first-come-first-served limit 449 specifies the number of applicants capable of purchasing commodities etc. for the first-come-first-served reservation. An applicant count 451 shows the number of applicants at the point. A description 453 explains the commodity etc.

The first-come-first-served reservation applies to a case where the member store 11 limitedly offers 30 bottles of given sake (Japanese alcoholic beverage). When a plurality of customers 9 applies for the purchase, the reservation service provides the commodity to the first 30 applicants. The reservation target resource database 53 in FIG. 8 maintains data about the first-come-first-served reservation. The similar data is registered for the lottery reservation, the time-based reservation, etc.

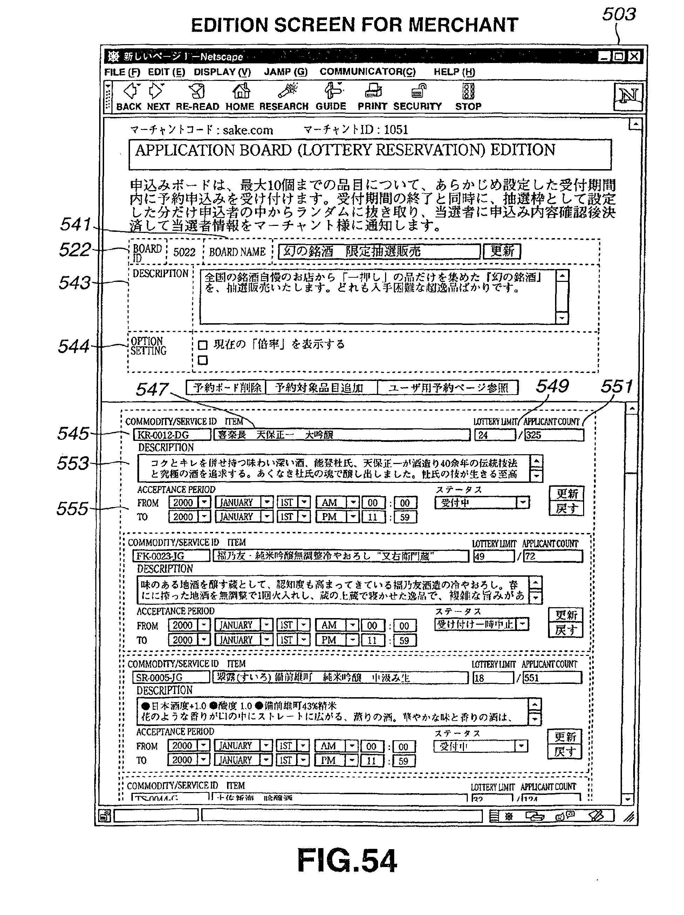

In the lottery reservation, for example, the reservation target resource database 53 not only the merchant ID and the password, but also a board name 541, a board ID 522, a description 543, a commodity/service ID 545, an item 547, a lottery limit 549, an applicant count 551, a description 553, and an acceptance period 555 are registered (FIG. 54).

In the time-based reservation, the reservation target resource database 53 not only the merchant ID and the password, but also a board name 647, a description 649, a reservable period and time slot 651, a non-reservation day 653, a minimum service time 655, a reservation limit 657, a sales completion timing 659, a cancelable limit 661, a cancel charge 663, and other options 665 are registered.

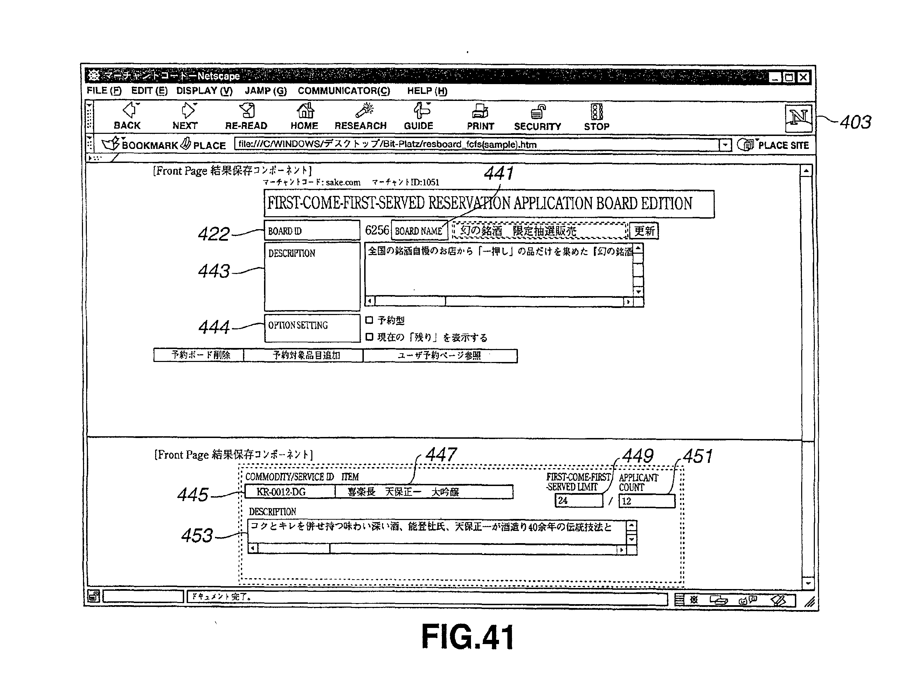

Data in the reservation target resource database 53 is generated as follows. An administrator of the member store 11 accesses the service surrogate server 13 for making reservations such as a first-come-first-served reservation, a lottery reservation, etc. The reservation management server 35 displays a reservation target resource registration/management screen 403 (FIG. 41) etc. The administrator of the member store 11 enters the merchant ID 421, the password 423, the board name 441, the board ID 422, etc. on the reservation target resource registration/management screen 403. The entered data is maintained in the reservation target resource database 53.

FIG. 9 shows the reservation information management database 51. When the customer 9 purchases a commodity by using the service such as a first-come-first-served reservation provided by the member store 11, the reservation information management data specifies which customer purchased which commodity.

The reservation information management database 51 maintains a customer ID 471, a commodity/service ID 473, and data for distinction between first-come-first-served, lottery, time-based reservations, etc. Namely, the reservation information management database 51 maintains information about which customer reserves which commodity or service. Data maintained in the reservation information management database 51 is generated as follows.

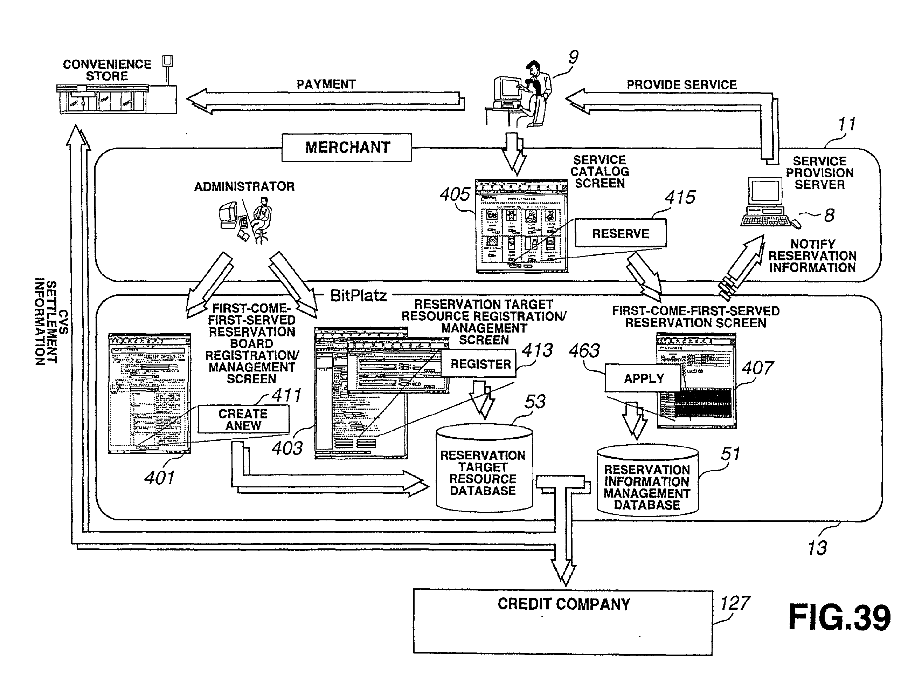

The customer 9 accesses the member store server 7 and clicks a button 415 indicating "reserve" on the service catalog screen 405. Then, a first-come-first-served reservation screen 407 (FIG. 39) is displayed, for example. The customer 9 applies for purchase of the commodity on the first-come-first-served reservation screen 407. The reservation information management database 51 maintains the corresponding customer ID 471, the commodity/service ID 473 identifying the commodity, and the information indicating distinction between first-come-first-served, lottery, time-based reservations, etc.

The service surrogate server 13 in FIG. 1 independently maintains the customer database 41, the member store database 43, the commodity/service database 45, the purchase/subscription management database 47, etc. It may be also preferable to manage various types of data in a single database. The service surrogate server 13 allows to function a plurality of servers such as the billing server 31, the digital ticket server 33, the reservation management server 35, the settlement server 37, etc. A single server may be used to implement these functions.

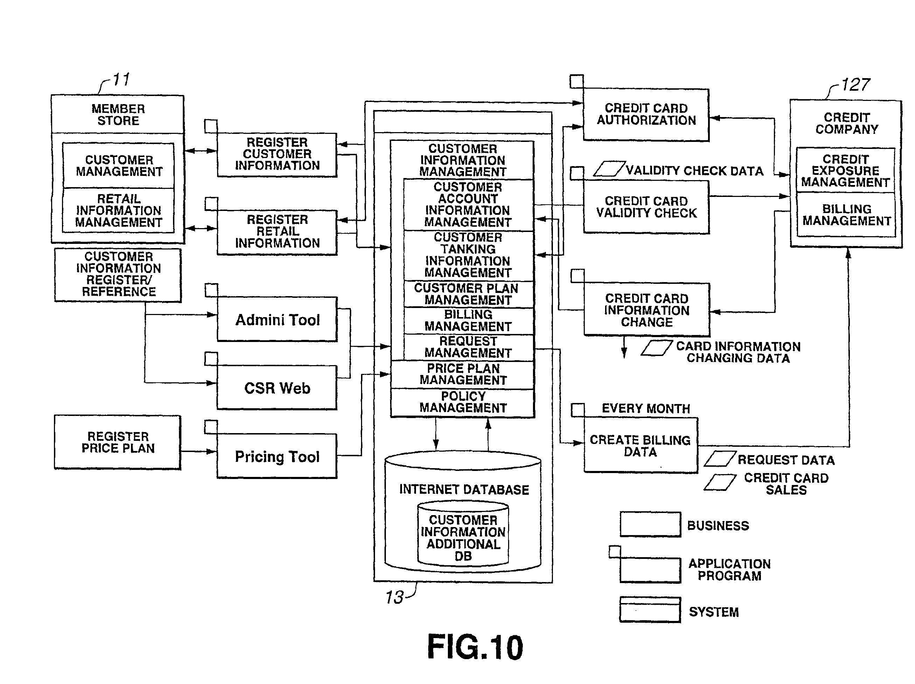

FIG. 10 is a schematic diagram of the surrogate system 1. The member store 11 is responsible for customer management and sales information management. The service surrogate server 13 is responsible for customer information management, price plan management, and policy management. The credit company 127 is responsible for credit exposure management and request management.

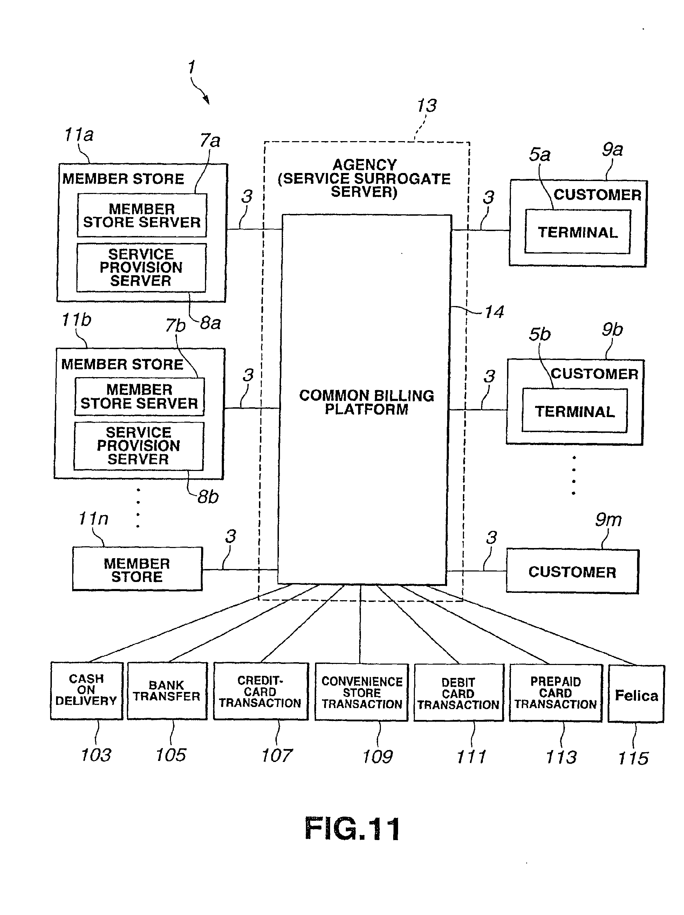

FIG. 11 shows a schematic configuration of the surrogate system 1 according to a first embodiment of the present invention and presents substantially the same configuration as that in FIG. 1. As shown in FIG. 11, the agency (service surrogate server) 13 contains a common billing platform 14. Via the network 3, the service surrogate server 13 connects with member store server 7a, service provision server 8a, and so on of a member store 11a, and a member store server 7b, a service provision server 8b, and so on of a member store 11b. Further, a terminal 5a of a customer 9a, a terminal 5b of a customer 9b, and so on are connected thereto.

As mentioned above, the service surrogate server 13 is surrogately responsible for billing etc. for the member stores 11a, 11b, ... and 11n. The billing processing includes a cash on delivery 103, a bank transfer 105, a credit-card transaction 107, a convenience store transaction 109, a debit card transaction 111, a prepaid card transaction 113, a FeliCa transaction 115, etc.

When a customer 9a purchases a commodity from the member store 11a or subscribes to a service thereof, the service surrogate server 13 performs billing processing. Likewise, when the customer 9a purchases a commodity from the member store 11b, the service surrogate server 13 performs billing processing. Namely, the service surrogate server 13 surrogately performs billing processing for the member stores 11a, 11b, ... and 11n.

The cash on delivery 103 takes place as follows, for example. When the customer 9a purchases a commodity from the member store 11a, the service surrogate server 13 consigns delivery etc. of the commodity to a transportation company (not shown). The transportation company delivers the commodity to the customer 9a and receives the charge from the customer 9a.

More specifically, the service surrogate server 13 requests an affiliated transportation company 129 (FIG. 14) for cash on delivery. At the same time, the service surrogate server 13 instructs the affiliated transportation company 129 to go to the member store 11 and assemble the commodity the customer 9 purchased.

Namely, the service surrogate server 13 notifies the affiliated transportation company 129 of the name of the customer who purchased the commodity, the name of the member store that provides the commodity, the member store's name and address, information about the purchased commodity, etc. The service surrogate server 13 notifies the member store 11 of the order information. The order information contains the name and address of the customer 9, the name of the purchased commodity, the requested date of delivery, etc. Further, the order information includes the name of the affiliated transportation company 129, etc.

The affiliated transportation company 129 goes to the member store 11, assembles the commodity, and delivers it to the customer 9. Namely, the affiliated transportation company 129 receives the commodity ordered by the customer 9 from the member store 11 and delivers the commodity to the customer 9 at a specified date and time. The member store 11 consigns the commodity with a bill to the affiliated transportation company 129. The affiliated transportation company 129 delivers the commodity with the bill to the customer 9. Upon reception of the commodity, the customer 9 paid the price. Part of the price is paid to the agency (service surrogate server) 13 as a service charge. The remainder is paid to the member store. The agency pays a transportation charge to the affiliated transportation company 129.

The bank transfer 105 takes place as follows. When the customer 9a purchases a commodity from the member store 11a, the service surrogate server 13 consigns delivery etc. of the commodity to a transportation company (not shown). The transportation company delivers the commodity with a bill to the customer 9a. The customer 9a pays the price to the member store 11a at a bank etc. Part of the price is paid to the agency 13 as a service charge.

The credit-card transaction 107 takes place as follows. When purchasing a commodity from the member store 11a, the customer 9a notifies the service surrogate server 13 of his or her credit number, etc. The service surrogate server 13 uses the credit number to charge the credit company, etc.

The convenience store transaction 109 takes place as follows. When the customer 9a purchases a commodity from the member store 11a, a transportation company or the like delivers the commodity with a bill to the customer 9a. The customer 9a goes to a convenience store, and pays the price for the bill.

The debit card transaction 111 takes place as follows. When the customer 9a purchases a commodity from the member store 11a, a transportation company or the like delivers the commodity with a bill to the customer 9a. The customer 9a goes to a bank etc. and completes the payment using a debit card.

In the case of the prepaid card transaction 113, the customer 9a already purchased a prepaid card. When the customer 9a purchases a commodity etc. from the member store 11a, a transportation company or the like delivers the commodity to the customer 9a. A delivery person carries a handy terminal and inserts the prepaid card into the terminal to complete the payment.

In the case of the FeliCa transaction 115, the customer 9a already owns a FeliCa card (electronic money). When the customer 9a purchases a commodity from the member store 11a, a transportation company or the like delivers the commodity to the customer 9a. A delivery person carries a handy terminal and inserts the FeliCa card into the terminal to complete the payment.

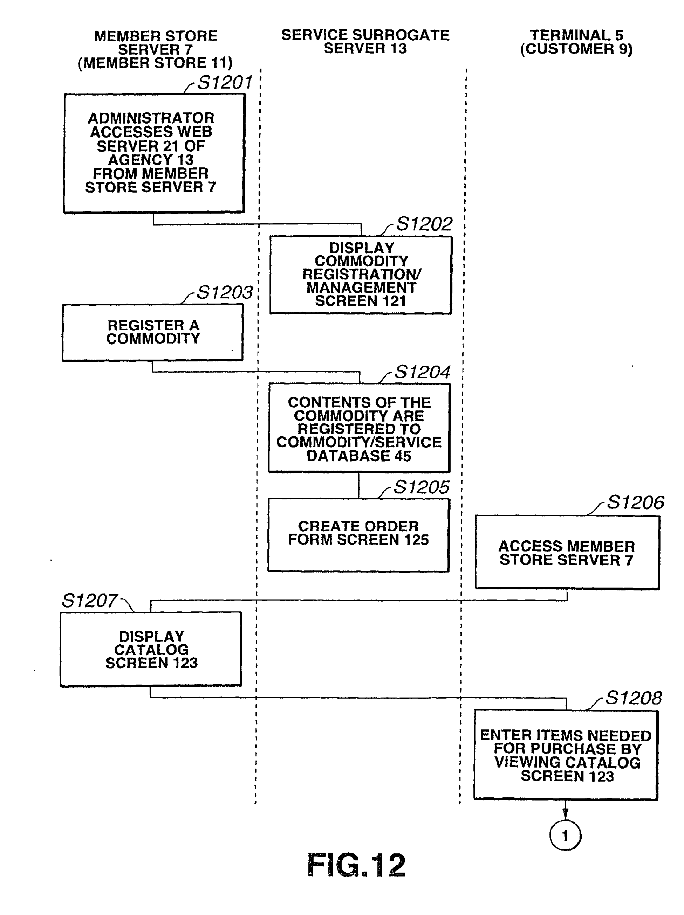

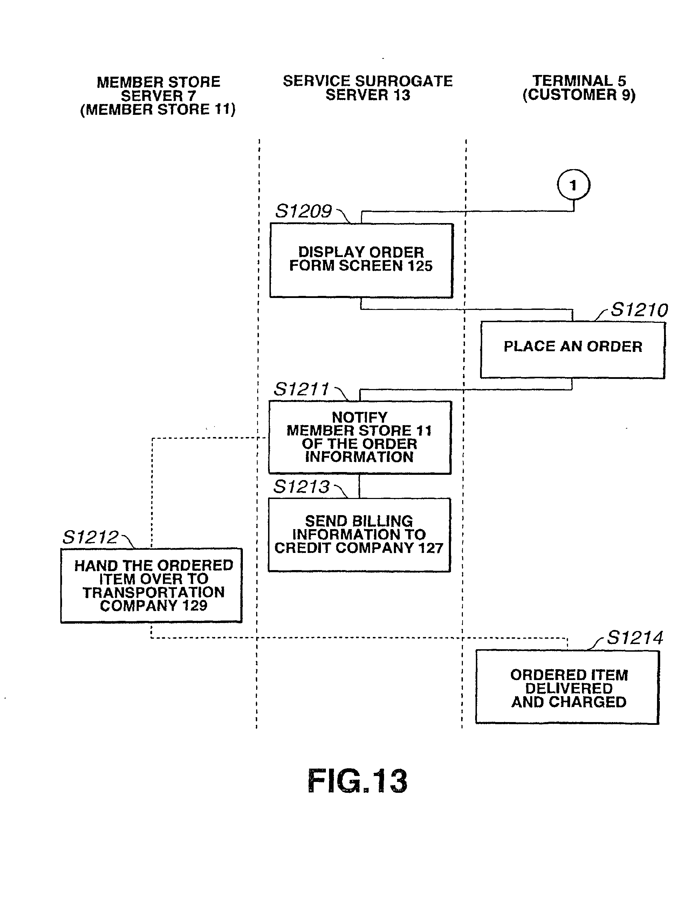

The following describes in further detail the case where the customer 9a purchases a commodity from the member store 11a according to the first embodiment. FIGs. 12 and 13 are flowcharts showing the processing according to the first embodiment. FIG. 14 is a schematic diagram showing the processing according to the first embodiment.

As shown in FIGs. 12 through 14, an administrator of the member store 11 accesses the web server 21 of the agency 13 via a terminal (not shown) connected to the member store server 7 (step S1201). The service surrogate server 13 displays a commodity registration/management screen 121 (step S1202). The administrator of the member store 11 registers commodities on the commodity registration/management screen 121 (step S1203).

When the member store 11 uses the surrogate system 1 for the first time, the administrator or the like of the member store 11 registers his or her own name, etc. The information about the member store 11 is stored in the member store database 43. Further, the administrator of the member store 11 registers names of commodities to be provided, prices, etc. These information are registered to the commodity/service database 45 (step S1204). At this time, the service surrogate server 13 automatically generates an order form screen 125 (step S1205).

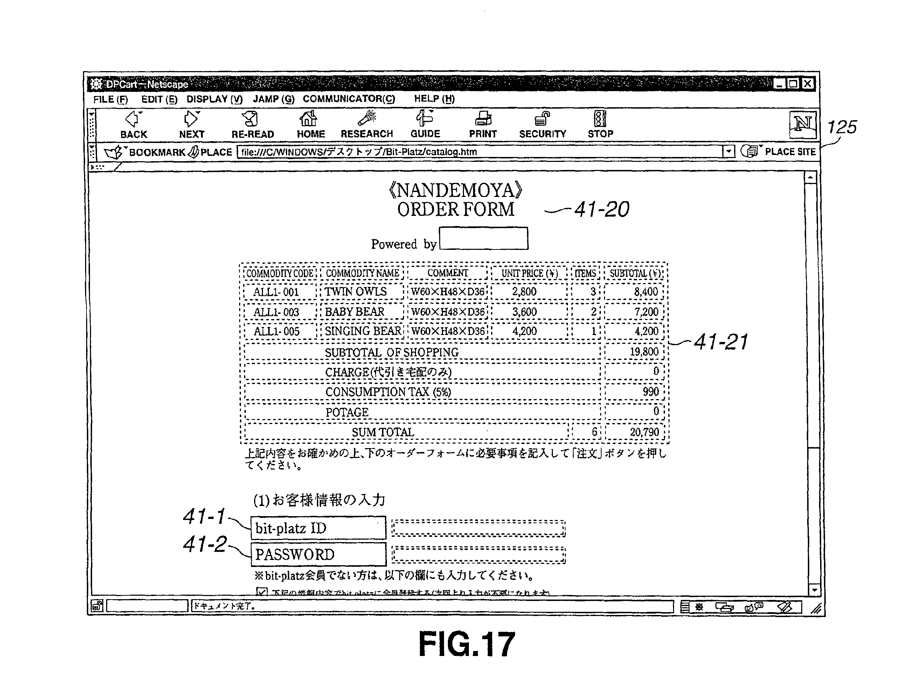

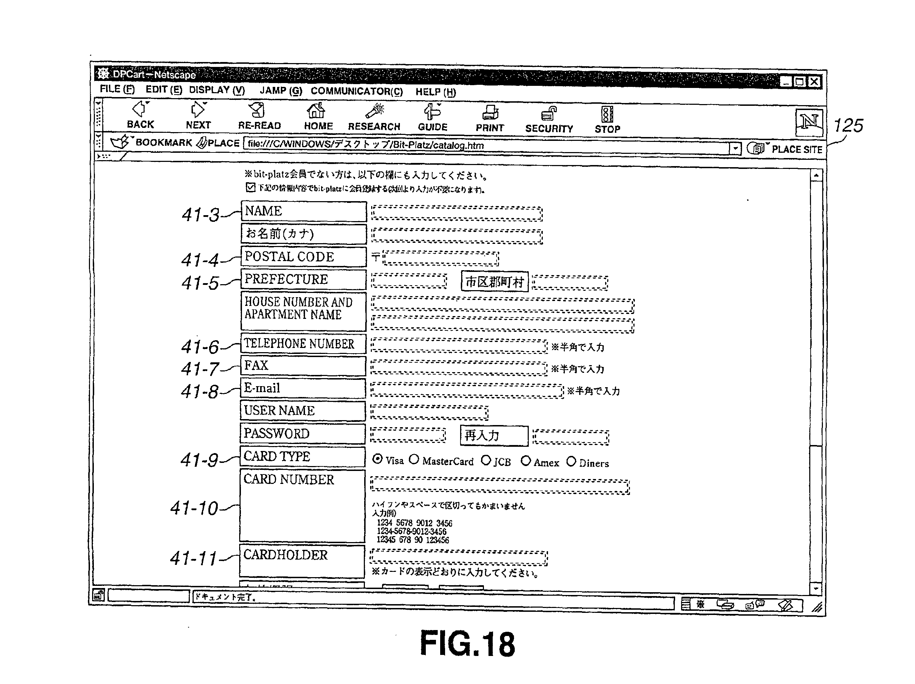

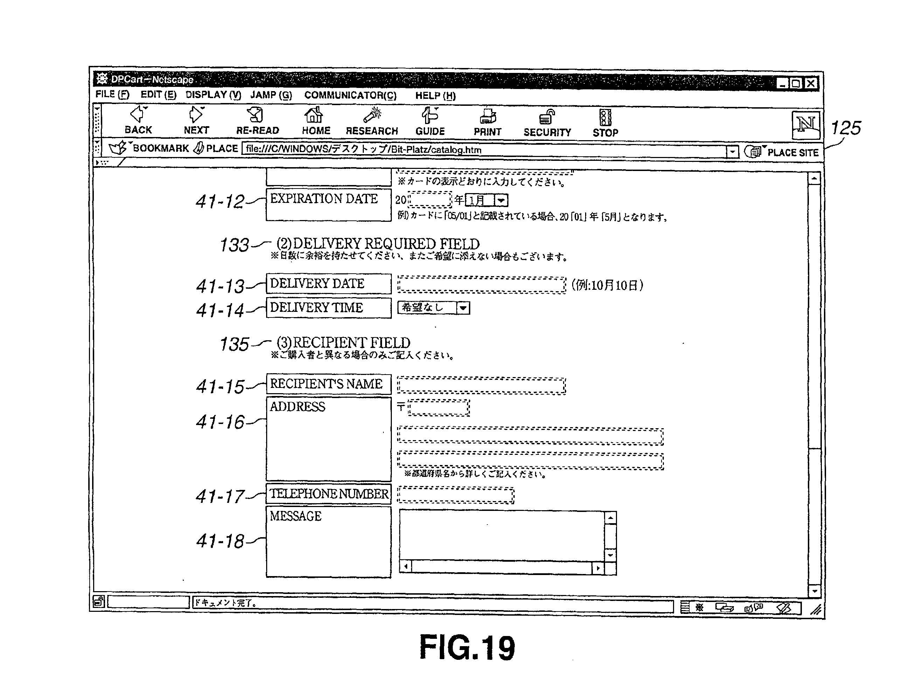

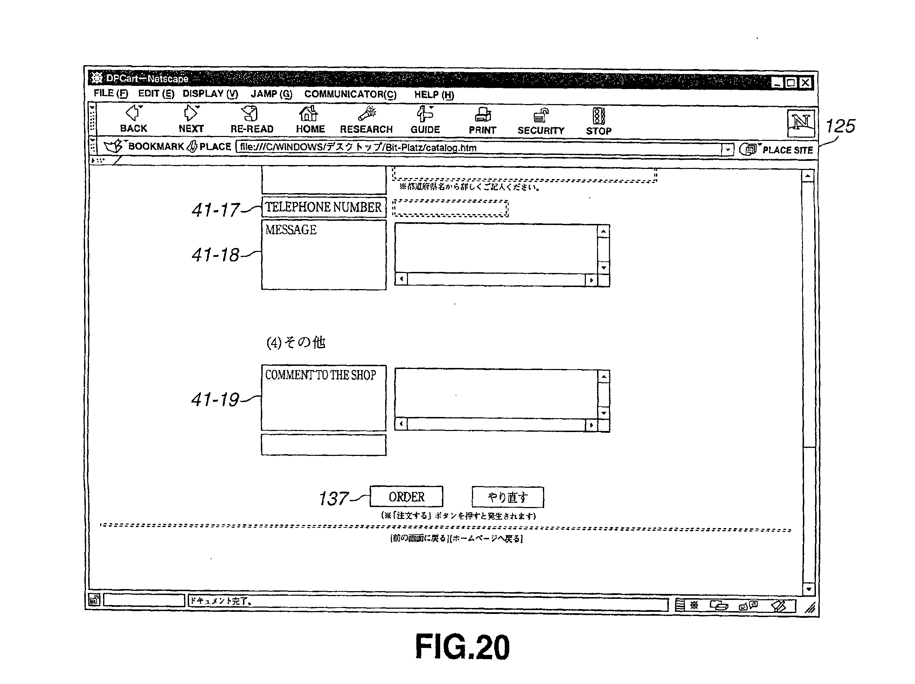

Namely, the web server 21 generates the order form screen 125 by referencing the contents of the member store database 43, the commodity/service database 45, etc. The order form screen 125 is dedicated to that member store. FIGs. 17 through 20 show the order form screens 125. A field 41-20 indicates a shop name "Nandemoya" of the member store 11.

The order form screen 125 is provided with descriptions and input fields for entering the customer ID 41-1, the password 41-2, etc. of the customer 9. The service surrogate server 13 automatically generates the order form screen 125 dedicated to the member store 11. Accordingly, the member store 11 itself need not create the order form screen 125.

The customer 9 as an ordinary user accesses the member store server 7 of the member store 11 via the terminal 5 (step S1206). The member store server 7 displays a catalog screen 123 (step S1207). Viewing the catalog screen 123, the customer 9 enters items needed for the purchase (step S1208).

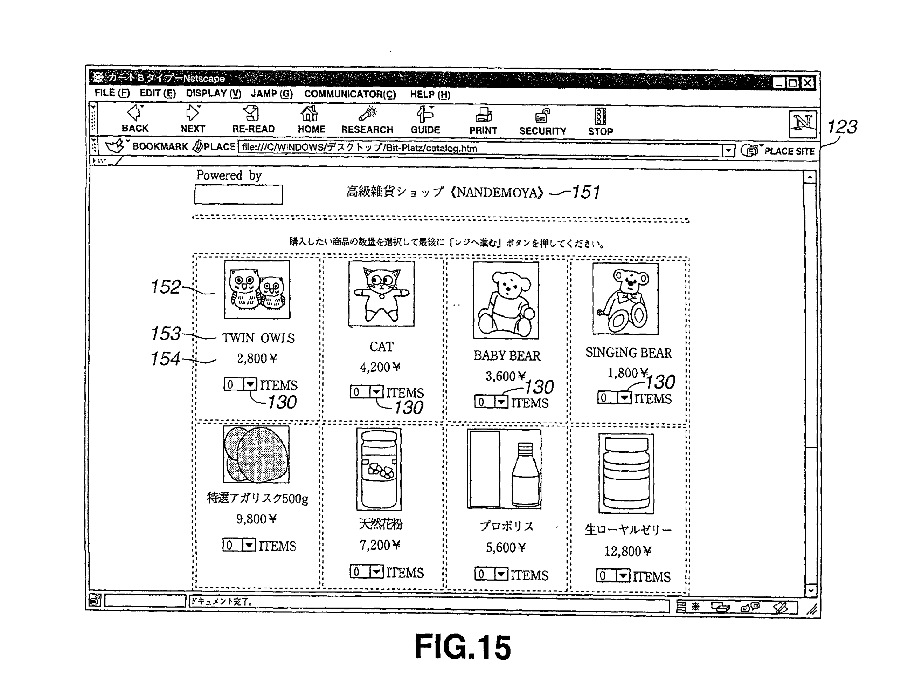

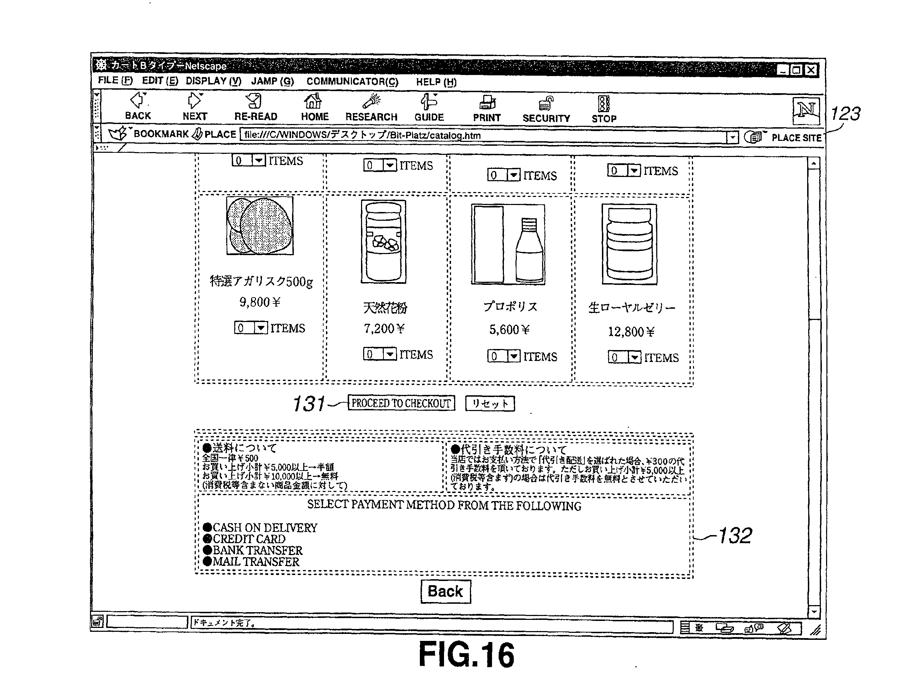

FIGs. 15 and 16 show the catalog screen 123. As shown in FIGs. 15 and 16, the catalog screen 123 is dedicated to the member store 11 (Nandemoya) and displays a photo 152, a commodity name 153, a price 154, etc. of a commodity. When the customer 9 wishes to purchase the commodity, he or she enters the number of items in a quantity field 130, and then presses a button 131 "proceed to checkout" to complete the purchase.

As described in a field 132 of FIG. 16, the customer 9 can select the payment method from the cash on delivery, credit card, bank transfer, mail transfer, etc. The member store 11 itself may create the catalog screen 123 on the member store server 7. Alternatively, the agency 13 may create the catalog screen 123 ofthe member store 11 on the member store server 7.

The service surrogate server 13 then displays the order form screen 125 (step S1209). FIGs. 17 through 20 show the order form screen. As mentioned above, the order form screen 125 is dedicated to the member store 11. As shown in FIG. 17, the field 41-20 on the order form screen 125 indicates the shop name "Nandemoya" of the member store 11.

A commodity purchase confirmation section 41-21 shows the commodity, its price, etc. specified by the customer 9 on the catalog screen 123. The customer 9 views the purchase confirmation section 41-21 on the order form screen 125 for confirmation and places an order (step S1210).

As shown in FIGs. 17 through 20, the customer 9 is already registered as a member. The customer 9 enters the customer ID 41-1, the password 41-2, and necessary information for delivery required 133 and recipient 135, and then clicks a button 137 indicating "order". In the delivery required field 133, the customer enters a desired delivery date 41-13, a desired delivery time 41-14, etc. In the recipient field 135, the customer enters a recipient's name 41-15, an address 41-16, a telephone number 41-17, a message 41-18, etc.

The customer enters a comment 41-19 if needed, and then clicks the button 137 indicating the "order". When the customer 9 uses the surrogate system 1 for the first time, he or she needs to register necessary information. For this purpose, the customer 9 enters his or her name 41-3, the postal code 41-4, the address 41-5, the telephone number 41-6, the fax number 41-7, the e-mail address 41-8, the card type 41-9, the card number 41-10, the cardholder 41-11, the card expiration date 41-12, etc. This information is maintained in the customer database 41.

After the order is placed, the service surrogate server 13 notifies the member store 11 of the order information (step S1211). The order information is used for identifying the customer 9, the commodity ordered by the customer 9, etc. Namely, the billing server 31 sends the information about the customer's name and address, the commodity the customer 9 purchased, the requested delivery date, etc. to the member store server 7.

When the customer 9 selects the credit-card transaction, the billing information is sent to the credit company 127 (step S1213). The credit company 127 charges the bill to a bank account of the customer 9. A specified service charge is deducted for the agency (service surrogate server) 13 from the bill charged to the bank account of the customer 9. The remainder is paid to the member store 11.

The member store 11 hands the ordered item over to the affiliated transportation company 129 (step S1212). Namely, the service surrogate server 13 instructs the member store 11 about the delivery. When the affiliated transportation company 129 goes to the member store 11, the member store 11 confirms the customer's name etc. and hands the commodity purchased by the customer 9 over to the transportation company 129.

When the customer 9 selects the cash on delivery 103, the member store 11 hands the ordered item to the affiliated transportation company 129. The affiliated transportation company 129 goes to the customer 9 and delivers the commodity to complete the cash on delivery.

When the customer 9 selects the convenience store transaction 109, it is processed as follows. When the customer 9 purchases a commodity from the member store 11, the transportation company etc. delivers the commodity to the customer 9 with a bill. The customer 9 goes to a convenience store and pays the price for the bill.

Also in the cash-on-delivery or convenience store transaction, a specified service charge is deducted for the agency (service surrogate server) 13. The remaining amount is paid to the member store 11. The bank transfer 105, the prepaid card transaction 113, etc. in FIG. 11 may be applicable to cases other than the credit card transaction and the cash-on-delivery transaction.

According to the embodiment, the service surrogate server 13 provides the predefined commodity registration/management screen 121 so that the member store 11 can register commodities to the service surrogate server 13. The contents of a commodity or service are registered to the service surrogate server 13 just by entering specified items on the commodity registration/management screen 121. The service surrogate server 13 then automatically creates the order form screen 125.

The customer 9 accesses the member store server 7. When the catalog screen 123 is displayed, the customer 9 can purchase the commodity by clicking the button 131 for "proceed to checkout". Then, the service surrogate server 13 is automatically linked to display the order form screen 125. When the customer 9 places an order, the service surrogate server 13 performs billing processing, etc.

Accordingly, the member store 11 can build a shopping mall etc. on the Internet just by registering commodities and creating the catalog screen 123. Once accessing the member store 11, the customer 9 can be automatically linked to the service surrogate server 13 for placing an order, etc.

According to the embodiment, the member stores 11a, 11b, and so on need not maintain the billing systems as conventionally practiced. The service surrogate server 13 performs billing processing etc. for the member stores 11a, 11b, and so on. The member stores can run an Internet business.

The service surrogate server 13 receives conditions about billing techniques requested by plurality of member stores 11. Based on the conditions, the service surrogate server 13 builds a billing system compliant with a plurality of member stores 11. Based on the billing system, the service surrogate server 13 can provide the member stores 11 with a surrogate billing service.

From the member store 11, the service surrogate server 13 receives a billing condition corresponding to a commodity or service provided to the customer 9 by the member store 11. Based on the billing condition, the service surrogate server 13 prepares a billing function complying with the member store 11. By using the billing function, the service surrogate server 13 can surrogately perform billing tasks required for the commodity or service provided to the customer 9 by the member store 11.

The service surrogate server 13 receives a billing condition about the commodity or service purchased by the customer 9 from the member store 11. Based on the billing condition, the service surrogate server 13 configures a billing function complying with the member store 11. Using the billing function, the service surrogate server 13 can perform billing tasks required for the commodity or service purchased by the customer 9 on behalf of the member store 11.

The service surrogate server 13 receives a plurality of billing conditions requested by a plurality of member stores therefrom. The service surrogate server 13 provides a billing platform applicable to each billing condition. Using the billing platform, the service surrogate server 13 can perform billing tasks on behalf of the member store 11.

The service surrogate server 13 receives a request concerning billing processing for a commercial transaction service provided to the customer 9 by the member store 11. Based on the request, the service surrogate server 13 prepares a billing function complying with the member store. The service surrogate server 13 can provide a billing service using the billing function for the customer 9 or the member store.

From the member store 11, the service surrogate server 13 receives billing information about the billing processing required for a commercial transaction service provided to customers by the member store 11. The service surrogate server 13 prepares a billing function based on the billing information. Using the billing function, the service surrogate server 13 can surrogately perform billing processing for a commercial transaction between the member store 11 and the customer 9.

The service surrogate server 13 prepares a billing function to support billing processing required for a commodity or service provided to the customer 9 by the member store 11. When the member store 11 provides the customer 9 with a commodity or service, the billing function performs the billing processing requested by the member store 11 for the customer 9.

The service surrogate server 13 prepares a billing function to support billing processing required for a service provided to the customer 9 by the member store 11. When the customer 9 purchases a commodity or is provided with service from the member store 11, the billing function performs the billing processing requested by the member store 11 for the customer 9.

A second embodiment will now be described. According to the second embodiment, the service surrogate server 13 performs billing processing etc. needed when the customer 9 subscribes to a continuous service provided by the member store 11. The continuous service signifies that the member store 11 provides the customer 9 with a long-term service. When the continuos service is provided, for example, the service provision server 8 may work as a server for providing online games. The customer 9 may receive the online game service for half a year. Alternatively, the service provision server 8 may work as a server for providing the online study for English conversation. The customer 9 may attend the online study for a year.

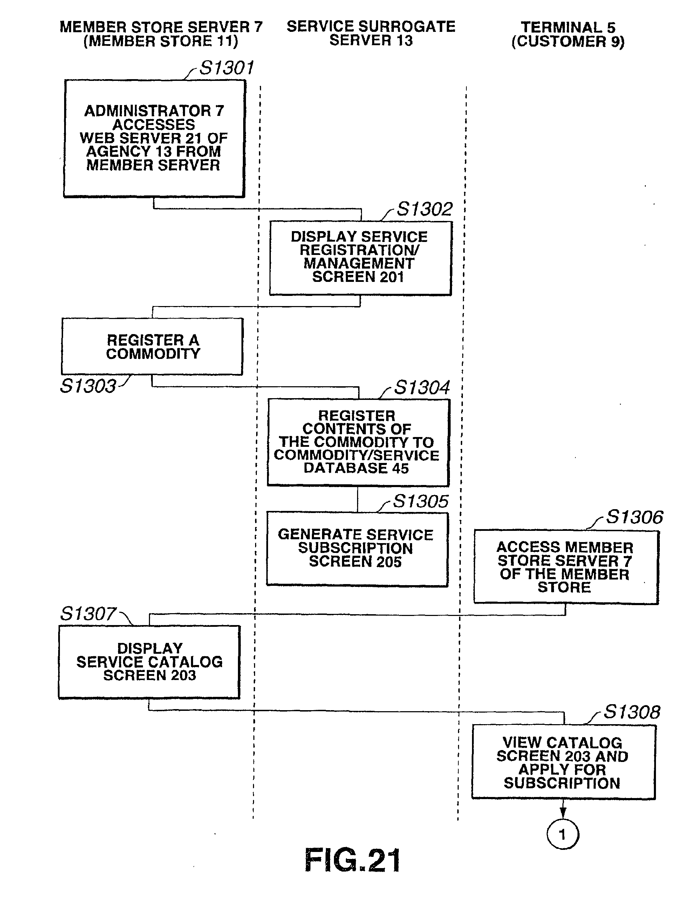

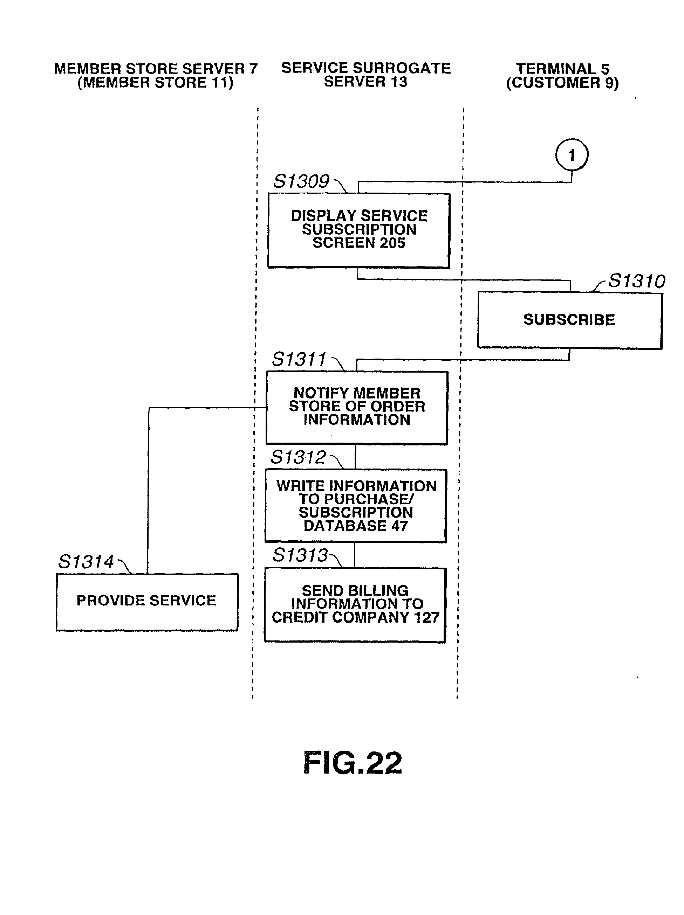

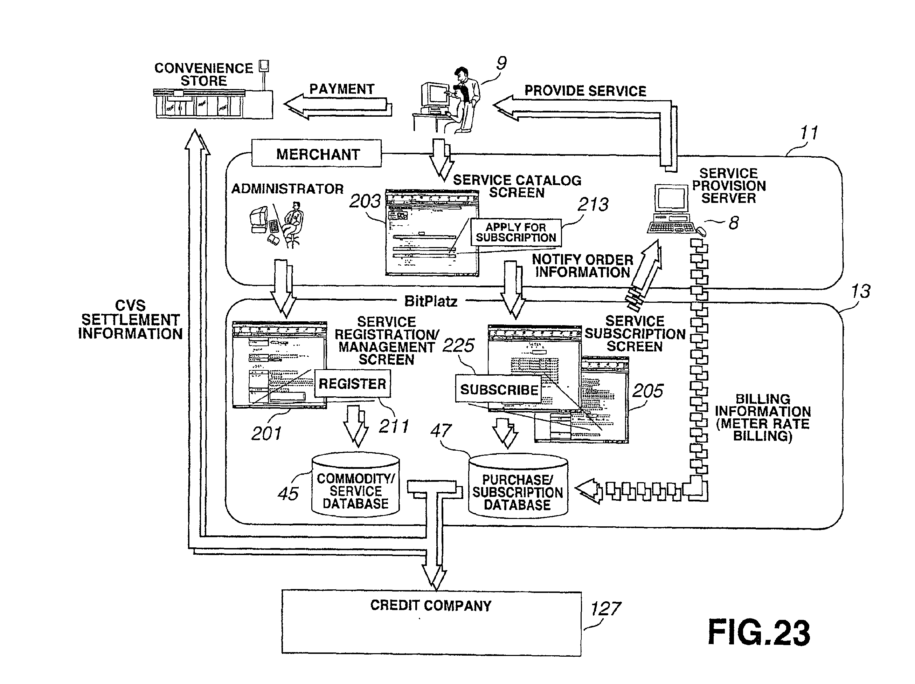

The member store 11 charges the customer 9 for the continuous service once a month, for example. The service surrogate server 13 performs billing required for the continuous service on behalf of the member store 11. FIGs. 21 and 22 are flowcharts showing processing according to the second embodiment. FIG. 23 is an explanatory diagram for illustrating processing according to the second embodiment.

As shown in FIGs. 21 through 23, an administrator of the member store 11 accesses the web server 21 of the agency 13 via a terminal etc. connected to the member server 7 (step S1301). The service surrogate server 13 displays a service registration/management screen 201 (step S1302). The administrator of the member store 11 registers commodities on the service registration/management screen 201 (step S1303).

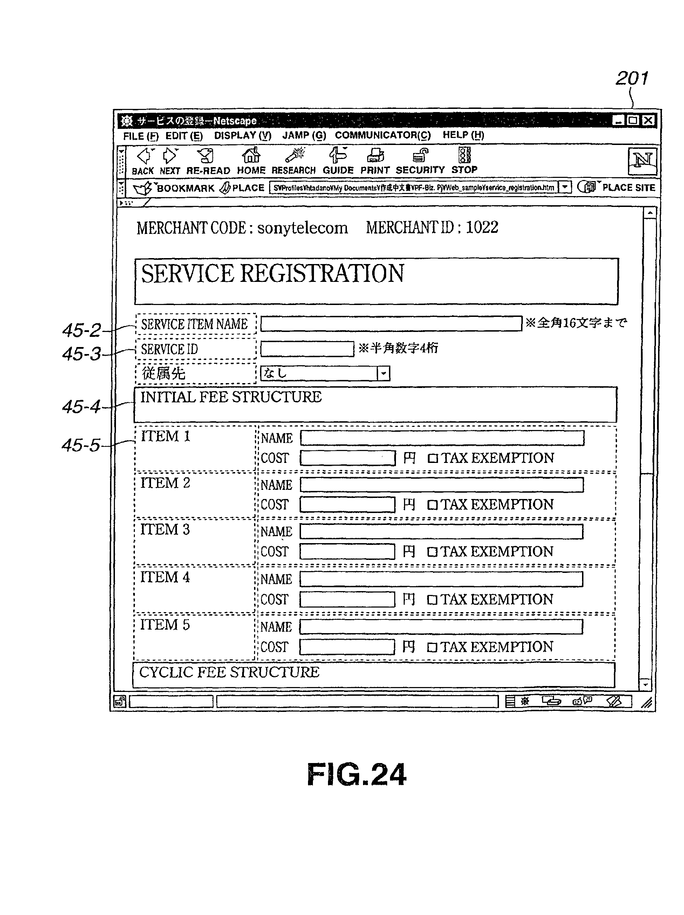

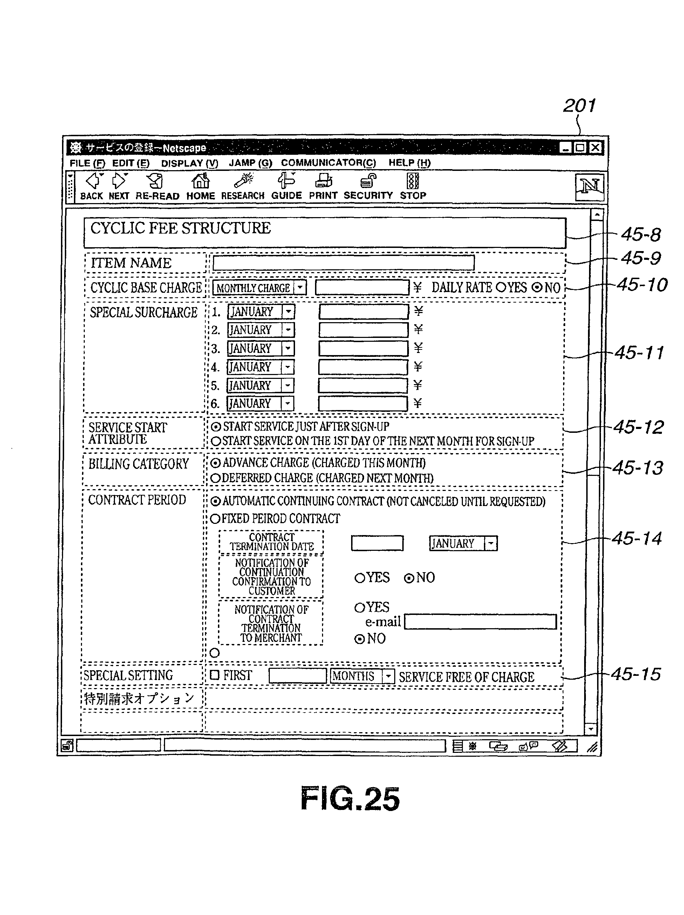

FIGs. 24 and 25 show the service registration/management screen 201. The administrator of the member store 11 enters the service item name 45-2, the service ID 45-3, the initial fee structure 45-4, and the cyclic fee structure 45-8. As the initial fee structure 45-4, for example, the administrator enters an item, a name, an expense, etc.

As the cyclic fee structure 45-8, the administrator enters the item name 45-9, the cyclic base charge 45-10, the special surcharge 45-11, the service start attribute 45-12, the billing category 45-13, the contract period 45-14, etc. When the service surrogate server 13 surrogates the member store 11 and charges the customer 9, the service surrogate server 13 charges the customer 9 on behalf of the member store 11 according to the contents specified on the service registration/management screen 201.

The initial fee structure 45-4 is a price of the commodity to be purchased or an initial charge of the continuous service to which the customer 9 will subscribe. The cyclic fee structure 45-8 is, e.g., a monthly fee for the continuous service to which the customer 9 will subscribe.

As shown in FIG. 25, the cyclic base charge 45-10 is a monthly basic charge. When the customer applies for membership in the middle of a month, the basic charge can be calculated at a daily rate. When the "daily rate" is enabled, let us assume that the customer 9 is serviced on and after the 20th day of a month. The service surrogate server 13 charges the customer 9 for the monthly sum equivalent to ten or eleven days.

For example, let us assume that the cyclic base charge 45-10 is set to be the monthly payment and the "daily rate" is enabled. The service surrogate server 13 demands the payment at a daily rate in a month when the customer 9 is serviced. The service surrogate server 13 monthly demands a constant payment of the customer 9 in and after the next month.

The special surcharge 45-11 is paid in a bonus month etc. in addition to the cyclic base charge 45-10. For example, the administrator of the member store 11 defines 50,000 yen on June and December as the special surcharge 45-11. Then, the service surrogate server 13 charges 50,000 yen on June and December in addition to the cyclic base charge 45-10.

The customer 9 signs up to subscribe to a service provided by the member store 11. The service start attribute 45-12 specifies whether to start the service immediately after the sign-up or on and after the first day of a month next to that for the sign-up.

For example, the administrator of the member store 11 may select "start service just after sign-up" for the service start attribute 45-12. Then, the member store 11 starts the service immediately after the customer 9 signs up the service. When the other attribute "start service on the 1st day of the next month for sign-up" is selected, the member store 11 starts the service on and after the first day of a month next to the month when the customer 9 signs up the service.

The billing category 45-13 specifies an advance charge (charged this month) or a deferred charge (charged next month). When the "advance charge" is selected for the billing category 45-13, the service surrogate server 13 charges the customer 9 for this month's payment this month.

When the customer 9 receives a service for 30,000 yen on October, for example, the service surrogate server 13 charges 30,000 yen to the customer 9 on October 31. When the "deferred charge" is selected for the billing category 45-13, the service surrogate server 13 charges the customer 9 for the payment of this month in the next month.

In the above-mentioned example, the service surrogate server 13 demands 30,000 yen of the customer 9 on November 15, for example. The contract period 45-14 specifies an automatic continuing contract which is not canceled until requested or a fixed period contract which is valid for a predetermined period. When the "automatic continuing contract" is selected for the contract period 45-14, the service is provided until the customer 9 requests the member store 11 for cancellation. For example, the cyclic base fee is charged to the customer 9.

When the "fixed period contract" is selected for the contract period 45-14, the administrator of the member store 11 specifies "contract termination date", "notification of continuation confirmation to customer", "notification of contract termination to merchant", etc. When the "notification of continuation confirmation to customer" is set to "Yes", the customer is asked whether to continue the service before expiration of the fixed contract period. A special setting 45-15 can be used to provide the service free of charge for a first few months etc.

The administrator of the member store 11 uses the service registration/management screen 201 to specify services to be provided and the corresponding fee structures.

The service surrogate server 13 registers the services, the fee structures, etc. specified by the member store 11 to the commodity/service database 45 (step S1304). At this time, the service surrogate server 13 automatically generates a service subscription screen 205 (step S1305). The service subscription screen 205 is generated for each member store 11.

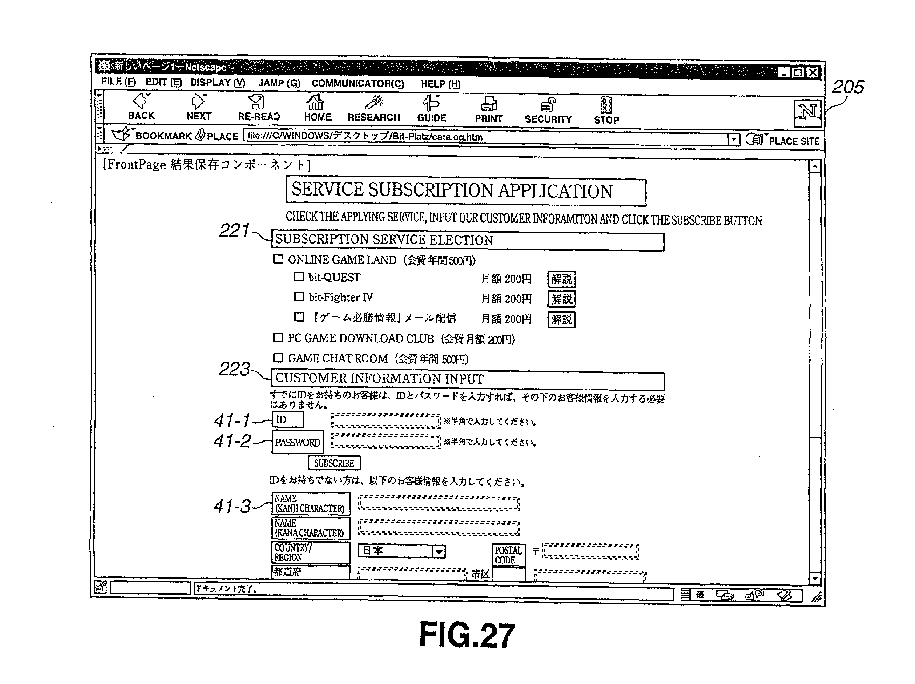

As shown in FIG. 27, the service subscription screen 205 contains a subscription service selection section 221, a customer information input section 223, etc. The subscription service selection section 221 presents a plurality of services provided by the member store 11.

The example shows "Online game land", "PC game download club", and "Game chat room". The member store 11 provides the customer 9 with these services. The customer 9 can select the desired services.

The customer information input section 223 shows a customer ID 41-1, a customer password 41-2, a name 41-3, an address 41-5, a telephone number 41-6, an e-mail address 41-8, a user ID 41-1 (2), a password 41-2 (2), a card type 41-9, a card number 41-10, an expiration date 41-12, etc.

When the customer 9 already uses the surrogate system 1 and owns the customer ID 41-1 and the password 41-2, he or she enters the customer ID 41-1 and the password 41-2, and then click a button 225 indicating "Subscribe".

When the customer 9 uses the service surrogate system 1 for the first time, he or she enters the name 41-3, the address 41-5, the telephone number 41-6, the card type 41-9, etc. Then the customer ID 41-1 (2) is issued. The customer 9 determines a password and enters it in the password 41-2 (2). This customer information is maintained in the customer database 41. The customer 9 then clicks the button 225 indicating "Subscribe".

The customer 9 as an ordinary user accesses the member store server 7 of the member store 11 via the terminal 5 (step S1306). The member store server 7 displays a catalog screen 203 (step S1307).

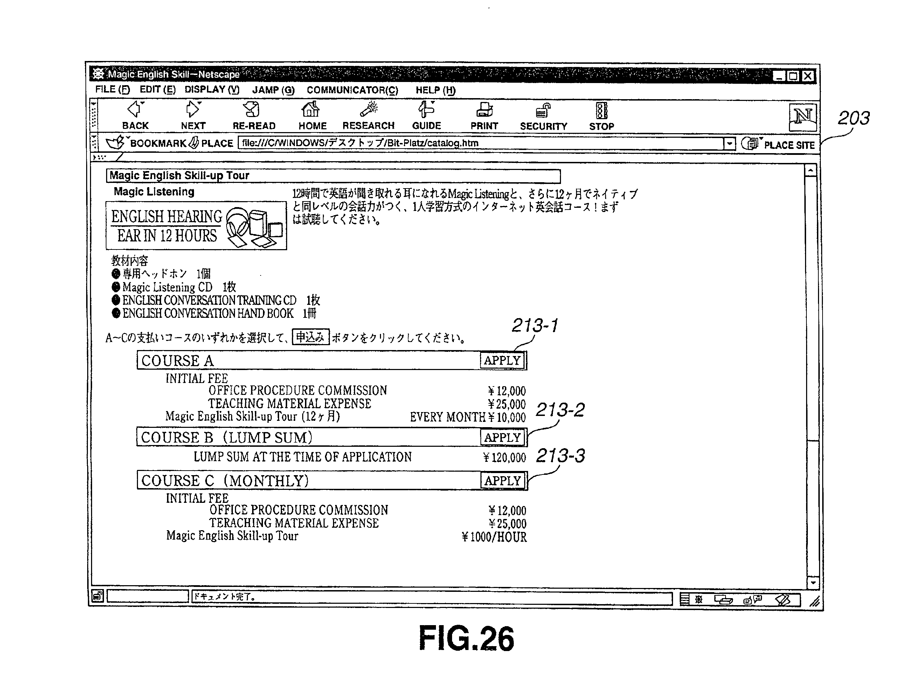

FIG. 26 shows the service catalog screen 203. In this example, the service provision server 8 provides an online English conversation lesson. Course A requires an initial fee and a monthly fee. The initial fee is needed only once and includes an office procedure commission, a teaching material expense, etc. The monthly fee is paid by the customer 9 to the member store 11 every month.

Course B is based on the lump sum payment. Course C requires the initial fee and the meter rate billing. The initial fee includes an office procedure commission and a teaching material expense. The meter rate billing charges 1,000 yen whenever the customer 9 uses the service four an hour. Thus, the member store 11 can charge the fee for one's own services monthly or once in a lump sum, or set the meter rate billing.

The customer 9 views the catalog screen 203 and applies to the subscription (step S1308). Namely, the customer 9 selects a course from the catalog screen 203 in FIG. 26, and then clicks a button 213-3 indicating "Apply", for example.

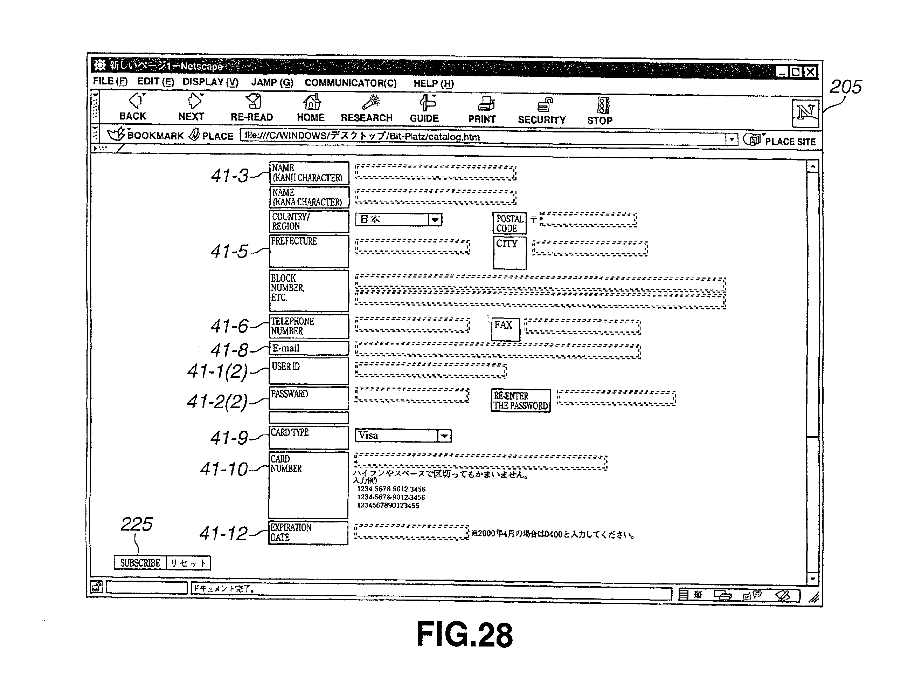

The service surrogate server 13 displays the service subscription screen 205 (step S1309). FIGs. 27 and 28 show the service subscription screen 205. Using the service subscription screen 205, the customer 9 subscribes to the service (step S1310).

As shown in FIGs. 27 and 28, the customer selects a service from the service selection section 221, enters the customer information in the customer information input section 223, and then clicks a button 225 indicating "Subscribe".

As mentioned above, when the member store 11 offers the service of providing online games, the customer selects the online game type from the service selection section 221. When already registered to the service, the customer 9 enters the customer ID 41-1 and the password 41-2 in the customer information input section 223, and then clicks the button 225 indicating "Subscribe". When the customer 9 does not own the customer ID, he or she enters the name 41-3, the address 41-5, the telephone number 41-6, etc.

When the customer 9 subscribes to the service provided by the member store 11, the service surrogate server 13 notifies the member store 11 of the order information (step S1311). The order information shows to which service provided by the member store 11 the customer 9 subscribed, how the customer 9 pays the fee, etc.

The order information is almost the same data as that maintained in the purchase/subscription management database 47. By receiving the order information, the member store 11 can determine which customer 9 subscribes to which service and how he or she pays the fee.

The embodiment also provides various billing methods such as the credit-card transaction 107, the convenience store transaction 109, etc. The information selected by the customer 9 on the service catalog screen 203 and the service subscription screen 205 is written to the purchase/subscription management database 47 (step S1312).

When the customer 9 selects the credit-card transaction, the service surrogate server 13 sends the billing information to the credit company 127 (step S1313). The credit company 127 charges the bill to the bank account of the customer 9 every month, for example. The payment method follows the selections made by the customer 9 on the service catalog screen 203 and the service subscription screen 205 based on the contents specified by the member store 11 on the service registration/management screen 211.

As shown in FIG. 26, for example, the member store 11 provides the online English conversation lesson. When the customer 9 applies for course A, the initial fee and the fixed monthly fee are charged to the customer 9. When the member store 11 provides online games, the billing takes place, e.g., every month according to the contents selected by the customer 9 from the service selection section 221 on the service subscription screen 205. The service surrogate server 13 performs the billing processing on behalf of the member store 11.

The member store 11 provides the customer 9 with the continuous service based on the order information. The customer 9 uses the terminal 5 to access the service provision server 8 of the member store 11. The customer 9 then takes English conversation lessons or enjoys online games for six months, for example.

The member store 11 can run an Internet business requiring the continuous billing just by using the service registration/management screen 211 to register services and commodities the member store 11 provides and by creating the service catalog screen 213. Once the customer 9 accesses the member store 11, he or she is linked to the service surrogate server 13 for placing an order, etc.

According to the embodiment, the member stores 11a, 11b, and so on need not maintain billing systems as conventionally practiced. The service surrogate server 13 performs billing processing etc. for continuous services of the member stores 11a, 11b, and so on. The member stores 11a, 11b, and so on can run Internet businesses requiring the continuous billing.

When the member store 11 performs a service requiring the continuous billing such as a monthly fee, etc. of the customer 9, the member store 11 itself need not build a billing system and can hold down the initial investment. The member store 11 can initiate a business in a short period of time. Even the relatively small-scale member store 11 can enter a service business requiring the continuous billing. The customer 9 may be uncertain about credibility of the relatively small-scale member store 11 and may feel uneasy about disclosing his or her credit card information. When the agency 13 is well-known and time-proven, the credit card information is not disclosed to the member store 11, etc. The customer 9 can safely use the credit card, etc.

According to the embodiment, the customer 9 uses the service subscription screen 205 created on the service surrogate server 13 to complete the subscription procedure. However, the member store 11 may create the service subscription screen on the member store server 7, and the customer 9 may apply for the service subscription. In such a case, it may be preferable to send the subscription information to the service surrogate server 13.

The member store 11 may provide the service fee structure which contains a fee other than the fixed amount. In such a case, the charged usage situation may be transmitted as billing information to the service surrogate server 13 realtime or monthly for calculating and demanding the charge. It is possible to establish various charges and meter rates such as the connection time, the number of games in the game service, etc.

A third embodiment will now be described. When the member store 11 issues a digital ticket according to the third embodiment, the service surrogate server 13 surrogately issues or manages the digital ticket, performs billing processing, etc. When the customer 9 purchases a digital ticket, he or she can receive a commodity or service presented by the digital ticket from the member store 11. When the member store 11 sells a commodity or service, the service surrogate server 13 surrogately issues a digital ticket for purchasing the commodity. The customer 9 uses the terminal 5 to purchase the digital ticket. The customer 9 receives the commodity or service indicated on the digital ticket from the member store 11.

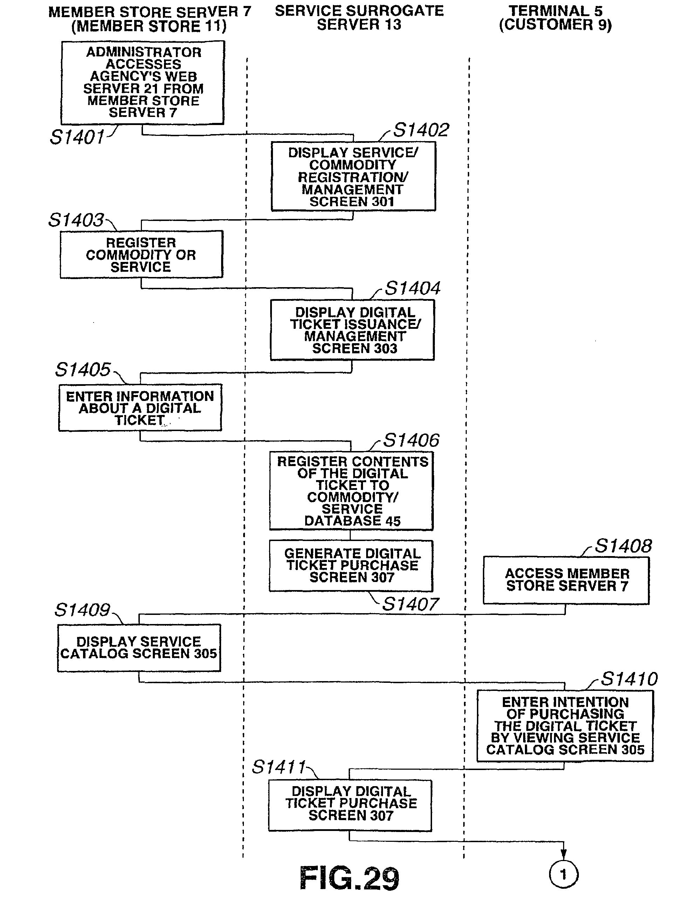

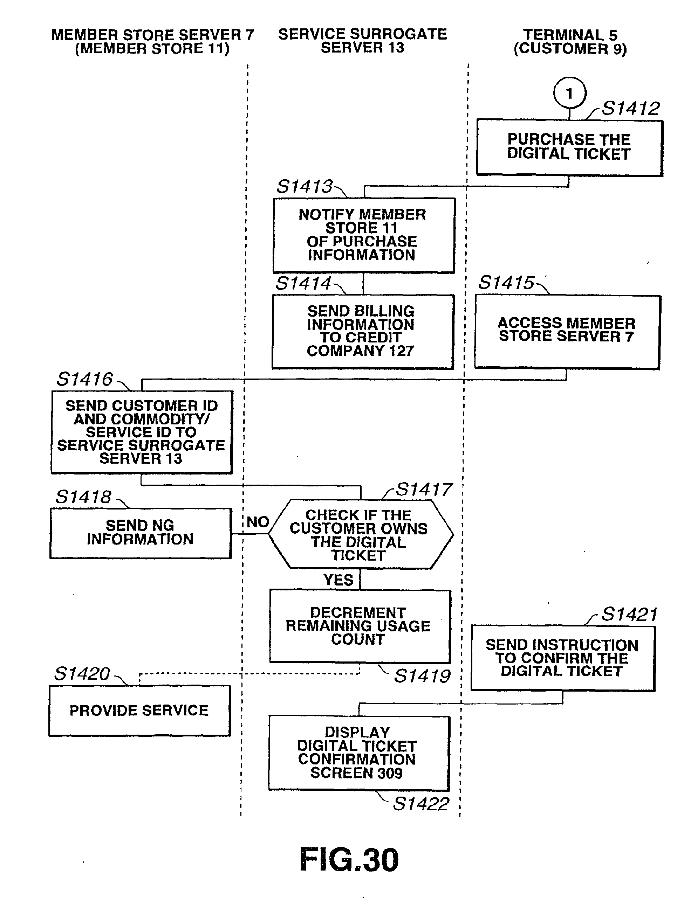

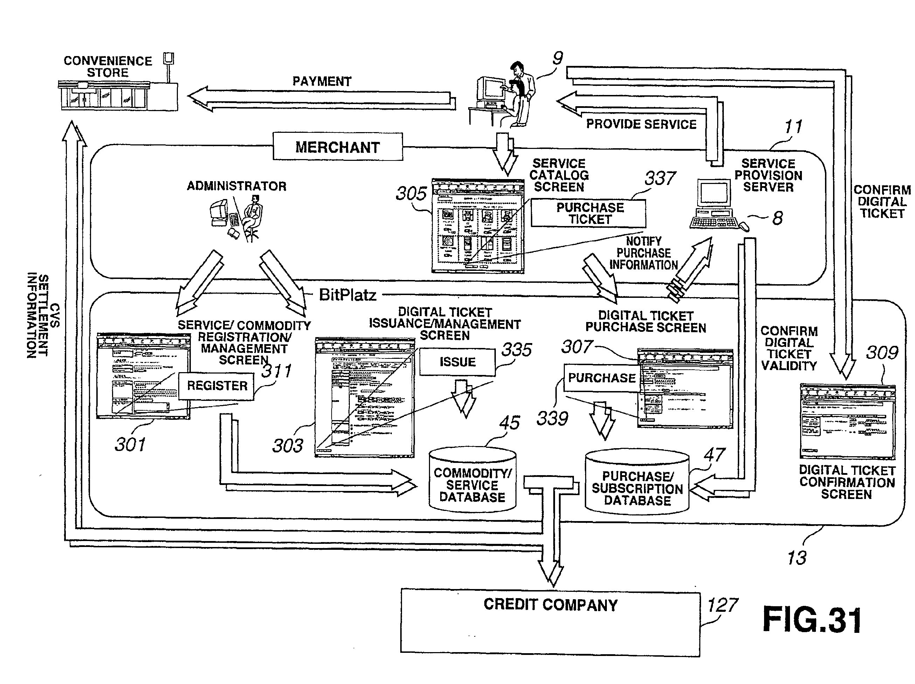

The service surrogate server 13 performs billing processing concerning the digital ticket on behalf of the member store 11. FIGs. 29 and 30 are flowcharts showing the processing according to the third embodiment. FIG. 31 schematically shows the processing according to the third embodiment.

As shown in FIGs. 29 through 31, the administrator of the member store 11 accesses the web server 21 of the agency 13 via a terminal etc. connected to the member store server 7 (step S1401). The service surrogate server 13 displays a service/commodity registration/management screen 301 (step S1402). The administrator of the member store 11 registers commodities using the service/commodity registration/management screen 301 (step S1403). Namely, services and commodities are registered to the commodity/service database 45 of the service surrogate server 13. The registered services and commodities are provided with IDs (commodity/service IDs) and are notified to the member store server 7.

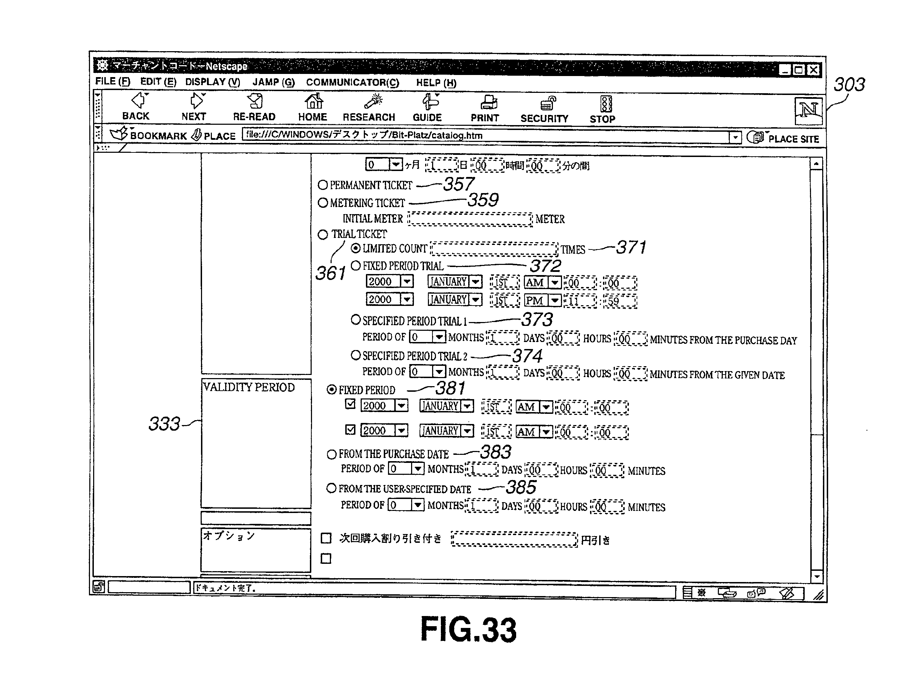

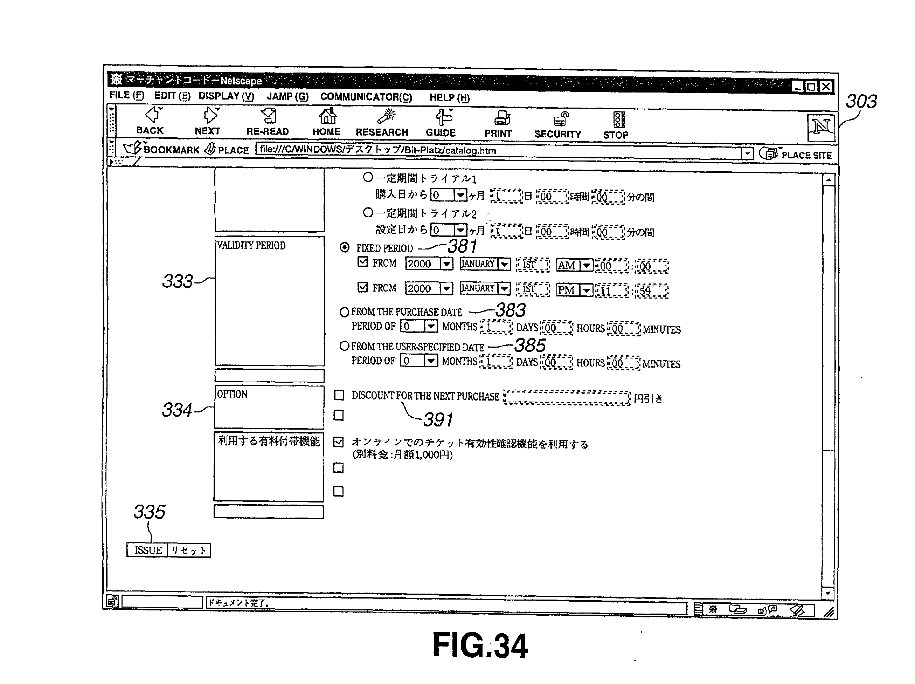

The service surrogate server 13 displays the digital ticket issuance/management screen 303 (step S1404). FIGs. 32, 33, and 34 show the digital ticket issuance/management screen 303. Using the digital ticket issuance/management screen 303, the administrator of the member store 11 enters necessary information to determine the contents of the digital ticket.

The ticket name 321 shows the name of the digital ticket. The ticket ID 323 is used for identifying the digital ticket. The target service 325 indicates a service to be targeted. The issuance limit 329 specifies whether to issue digital tickets unlimitedly or limitedly. The ticket type 331 shows a one-time ticket 351, a coupon ticket 353, a season ticket 355, a permanent ticket 357, a metering ticket 359, and a trial ticket 361.

The one-time ticket 351 shows that the digital ticket is valid only once. When the coupon ticket 353 is selected, the customer 9 can use the purchased digital ticket for the number of times specified by the administrator of the member store 11. The season ticket 355 provides options of "fixed period" 341, "from the purchase date" 343, "from the user-specified date" 345, and "from the instance serviced" 347.

In the case of the "fixed period" 341, the administrator ofthe member store 11 can specify the period from 8:00 AM on January 1, 2000 to 11:59 PM on the same day. The customer 9 who purchased the digital ticket can subscribe to the service provided by the member store 11 only during the specified period.

In the case of the "from the purchase date" 343, the customer 9 specifies a period from the date when he or she purchased the digital ticket. The customer 9 can receive the service provided by the member store 11 during the specified period. When the administrator of the member store 11 specifies "3 months", for example, the customer 9 can receive the service provided by the member store 11 for three months from the date when he or she purchased the digital ticket.

In the case of the "from the user-specified date" 345, the customer 9 can receive the service provided by the member store 11 during a given period from the date specified by the customer 9. For example, the administrator of the member store 11 specifies "2 months". When the customer 9 who purchased the digital ticket specifies a proper date, he or she can receive the service provided by the member store 11 for two months from the specified date.

In the case of the "from the instance serviced" 347, the administrator specifies a given period. The customer 9 can receive the service provided by the member store 11 only during the specified period from the instance the customer 9 uses the service for the first time. When the administrator specifies "3 months" for the "from the instance serviced" 347, the customer 9 can receive the service provided by the member store 11 only for three months from the instance the customer 9 uses the service for the first time.

When purchasing the digital ticket with the "permanent ticket" 357 specified, the customer 9 can permanently receive the service provided by the member store 11. In the case of the "metering ticket" 359, the administrator specifies a meter value. The customer 9 can receive the service provided by the member store 11 for the specified meter value.

The trial ticket 361 is used when the customer 9 receives the service provided by the member store 11 as a trial. The trial ticket 361 includes a limited count 371, a fixed period trial 372, and specified period trials 373 and 374. The limited count 371 allows the customer 9 to receive the service for the number of times specified by the administrator. For the fixed period trial 372, the administrator specifies a fixed period. The customer 9 can receive the service provided by the member store 11 only during the fixed period.

The specified period trial 373 allows the customer 9 to receive the service provided by the member store 11 during a specified period from the date when the customer 9 purchased the digital ticket. The specified period trial 374 allows the customer 9 to receive the service provided by the member store 11 during a specified period from a given date. When purchasing the trial ticket 361, the customer 9 can purchase commodities or receive services from the member store 11 corresponding to the contents indicated by the trial ticket.

The validity period 333 shows a validity period of the digital ticket. The validity period 333 includes "fixed period" 381, "from the purchase date" 383, and "from the user-specified date" 385. In the case of the "fixed period" 381, the validity period of the digital ticket is equivalent to the fixed period specified by the administrator. Only during the fixed period, the customer 9 can purchase commodities or receive services provided by the member store 11.

In other words, when the fixed period expires, the customer 9 cannot purchase commodities or receive services provided by the member store 11 by using the purchased digital ticket. In the case of the "from the purchase date" 383, the validity period corresponds to a period specified by the administrator from the date when the customer 9 purchased the digital ticket.

In the case of the "from the user-specified date" 385, the validity period corresponds to a period specified by the administrator from the date specified by the user. An option 334 is available for specifying "discount for the next purchase", etc. When the customer 9 purchases the digital ticket from the member store 11 more than once, it is possible to discount the price of the next digital ticket.

The administrator of the member store 11 enters information about the digital ticket by using the digital ticket issuance/management screen 303 (step S1405). Namely, the administrator of the member store 11 enters information in such fields as the ticket name 321, the target service 325, a retail price 327, the issuance limit 329, the ticket type 331, the validity period 333, etc. When the administrator clicks an Issue button 335, the service surrogate server 13 registers the contents of the digital ticket to the commodity/service database 45 (step S1406). The issued digital ticket is given an issuer's member store ID, enabling identification of the issuer.

At this time, the service surrogate server 13 automatically generates a digital ticket purchase screen 307 (step S1407). The digital ticket purchase screen 307 is specific to each member store 11.

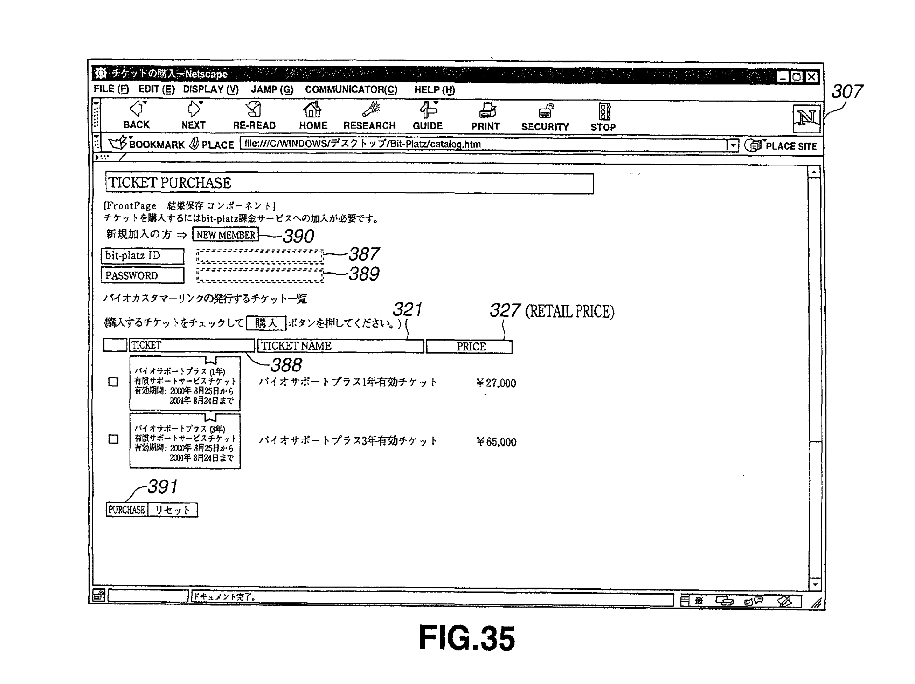

FIG. 35 shows the digital ticket purchase screen 307. The digital ticket purchase screen 307 is used for the customer 9 to enter information such as an ID 387 and a password 389 of the customer 9. The screen displays a ticket 388, the ticket name 321, and its charge (retail price) 327. To purchase a ticket, the customer 9 selects the ticket 388, and then clicks a button 391 indicating "Purchase".

As mentioned above, the digital ticket purchase screen 307 is automatically generated by the service surrogate server 13. First, the administrator of the member store 11 specifies the contents of the digital ticket by using the digital ticket issuance/management screen 303. Then, the service surrogate server 13 displays the ticket name 321 and the charge (retail price) 327 on the digital ticket purchase screen 307. The service surrogate server 13 further generates a frame etc. of the digital ticket purchase screen 307.

When purchasing a digital ticket, the customer 9 as an ordinary user accesses the member store server 7 of the member store 11 via the terminal 5 (step S 1408). The member store server 7 displays the service catalog screen 305 (step S1409). Viewing the service catalog screen 305, the customer 9 clicks a ticket purchase button 337 to express the intention of purchasing the digital ticket (step S1410). The service catalog screen 305 displays a plurality of types of digital tickets provided by the member store 11.

When the customer 9 expresses the intention of purchase, the terminal 5 of the customer 9 is automatically linked to the service surrogate server 13. The service surrogate server 13 displays the digital ticket purchase screen 307 (step S1411). Using the digital ticket purchase screen 307 as mentioned above, the customer 9 enters the customer ID and the password, selects a ticket, and then clicks a button 391 indicating "Purchase" to purchase the digital ticket (step S1412).

When the customer 9 is already registered to the surrogate system 1, the customer 9 enters the customer ID 387 and the password 389, selects an intended ticket from the ticket 388, and then clicks the button 391 indicating "Purchase". When the customer 9 uses the surrogate system 1 for the first time, he or she clicks a button 390 for "New member". Then, a screen for registering the customer is displayed (not shown). The customer 9 enters his or her name, address, etc. The entered information is maintained in the customer database 41.

When the digital ticket is purchased, the service surrogate server 13 registers the information entered by the user on the digital ticket purchase screen 307 to the purchase/subscription management database 47. The service surrogate server 13 notifies the member store 11 of the purchase information (step S 1413). The purchase information specifies the customer ID of the customer 9 and the digital ticket the customer 9 purchased.

The service surrogate server 13 also surrogately performs the billing processing for issuance of the digital ticket. When the customer 9 selects the credit-card transaction for purchasing the digital ticket, the billing information is sent to the credit company 127 (step S1414).

The service surrogate server 13 performs credit confirmation for the credit card transaction. When no credit confirmation is available, the service surrogate server 13 requests the customer 9 to change the credit card or cancel the digital ticket purchase.

The following describes processing needed when the customer 9 receives a service provided by the member store 11 by using the digital ticket. To receive a service from the member store server 7, the customer 9 accesses the member store server 7 (step S1415). The member store server 7 sends the customer ID and a commodity/service ID the customer 9 wishes to the service surrogate server 13 (step S1416). Based on the customer ID and the commodity/service ID, the service surrogate server 13 references the purchase/subscription management database 47 to check if the customer owns the digital ticket for the commodity or service (step S1417).

At step 1415, the customer 9 enters his or her customer ID and password from the terminal 5 and selects a service eligible for the digital ticket he or she owns. When the customer 9 selects the service, the member store server 7 extracts a commodity ID for the service and sends the customer ID and the commodity/service ID to the service surrogate server 13.

The purchase/subscription management database 47 maintains the information about the customer ID of the customer 9 and the digital ticket the customer 9 purchased. The member store server 7 sends the customer ID and the commodity/service ID. Based on these IDs, the service surrogate server 13 uses the purchase/subscription management database 47 to check if the customer owns the digital ticket corresponding to the commodity/service ID.

When the customer 9 does not own the digital ticket appropriate for the intended commodity or service, the service surrogate server 13 sends the NG information to the member store server 7 (step S1418). The member store server 7 informs the terminal 5 of the customer 9 that the valid digital ticket is unavailable. In such a case, the customer 9 cannot purchase commodities or services from the member store 11.

The customer 9 may own the digital ticket which is a coupon ticket. In such a case, the remaining usage count is decremented by 1 (step S1419). The member store server 7 provides the terminal 5 with the service (step S1420).

Namely, the terminal 5 can download image contents from the member store server 7 or join an online game etc. provided by the service provision server 8. Here, the service provision server 8 provides the customer 9 with a service which matches the contents of the digital ticket. When the customer 9 owns the one-time ticket 351, for example, the service is provided only once.

At step S1417, the service surrogate server 13 confirms the validity period 333 of the digital ticket. Further, the service surrogate server checks if the season ticket 355 is valid. If the validity period 333 expires for the digital ticket, for example, the service surrogate server 13 sends the NG information to the member store server 7.

When the season ticket 355 is specified for the fixed period 341, the service surrogate server 13 checks if the current point is within the fixed period. Here, the current point signifies an instance when the customer 9 accesses the member store server 7 at step S1415. When the current point is outside the fixed period, i.e., when the season ticket expires, the service surrogate server 13 sends the NG information to the member store server 7.

The customer 9 can confirm the contents of the digital ticket he or she owns. Namely, the customer 9 sends an instruction to confirm the digital ticket from the terminal 5 (step S1421). Then, the service surrogate server 13 displays a digital ticket confirmation screen 309 (step S1422). In order to confirm the digital ticket from the terminal 5, the customer 9 enters his or her ID number etc., and then clicks a button (not shown) indicating the confirmation of the digital ticket. Then, the digital ticket confirmation screen 309 is displayed on the terminal 5.

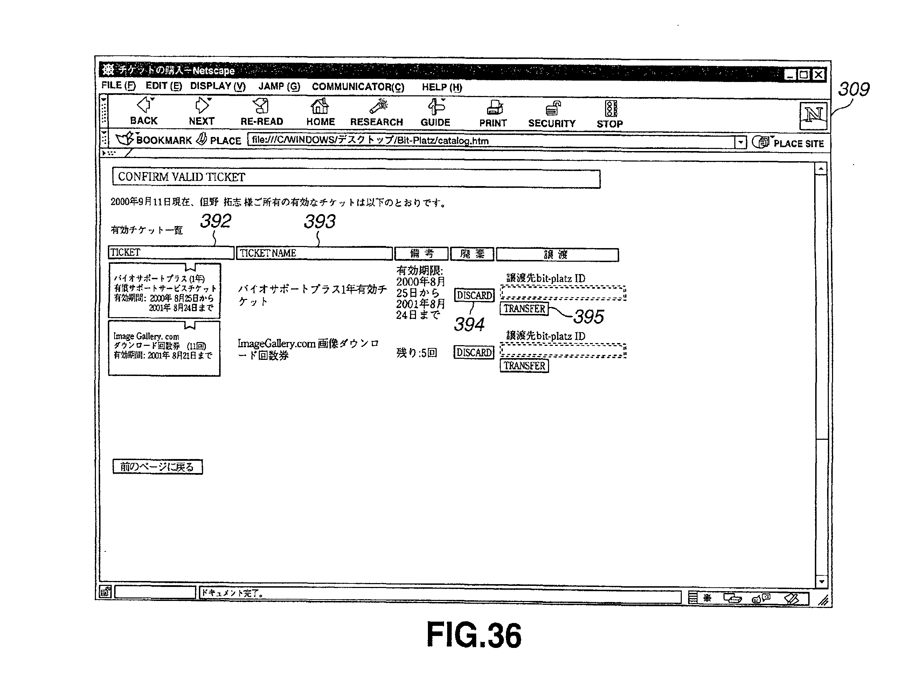

FIG. 36 shows the digital ticket confirmation screen 309. Using the digital ticket confirmation screen 309, the customer 9 can confirm the ticket he or she owns. The digital ticket confirmation screen 309 contains a ticket 392, a ticket name 393, a "Discard" button 394, a "Transfer" button 395, etc.

The ticket 392 and the ticket name 393 correspond to the currently valid ticket owned by the customer 9. The screen does not display a digital ticket whose validity period 333 or the like has expired or the season ticket 355. In addition, the screen does not display a digital ticket which is unavailable due to expiration of the fixed period 341 specified as the usage period. It is also possible to display a digital ticket whose validity period 333 or the like has expired.

The customer 9 can use the "Discard" button 394 to discard the digital ticket. Clicking the "Discard" button 394 discards the digital ticket. The purchase/subscription management database 47 may contain the information that the customer 9 holds a given digital ticket. This information is deleted when the customer 9 clicks the "Discard" button 394. The information about discarding that information is also sent to the member store 11.

The "Transfer" button 395 is used for transferring the digital ticket. When the customer 9 intends to transfer the digital ticket to a friend, etc., the customer 9 enters a customer ID 396 of the transfer destination, and then clicks the "Transfer" button 395. The digital ticket is transferred to the destination customer.

The purchase/subscription management database 47 maintains the information that the customer 9 holds a given digital ticket. This information is deleted from the purchase/subscription management database 47 when the customer 9 transfers the digital ticket. Instead, there is generated information that the transfer destination customer owns that digital ticket. Using the transferred digital ticket, the destination customer can purchase commodities or services provided by the member store 11.

According to the embodiment, the member store 11 can access the service surrogate server 13 and register commodities etc. on the service/commodity registration/management screen 301. Further, the member store 11 can settle the contents of an intended digital ticket just by setting them on the digital ticket issuance/management screen 303.

Namely, the member store 11 can generate the service catalog screen 305 and enter the necessary infonnation on the service/commodity registration/management screen 301 and the digital ticket issuance/management screen 303. Just by doing so, the member store 11 can provide commodities and services using the digital ticket without needing to build a system etc. for issuing digital tickets for itself.

The customer 9 accesses the member store 11 and clicks the ticket purchase button 337 on the service catalog screen 305. Then, the customer 9 is automatically linked to the service surrogate server 13 and can purchase a digital ticket on the digital ticket purchase screen 307. Further, the service surrogate server 13 performs the billing processing for issuing a digital ticket on behalf of the member store 11.

According to the embodiment, the settlement server 37 of the service surrogate server performs settlement for a credit company, etc. However, it may be also preferable that the member store 11 has a billing server and performs billing processing for a credit company, etc. by using the billing server.

According to the embodiment, the member store 11 can sell commodities and provide services without needing to independently build a digital ticket issuing system for operating digital tickets. The member store 11 can provide services and sell commodities using the digital ticket with a small initial investment and in a short time.

It is possible to design digital tickets having various types and attributes such as the one-time ticket 351, the coupon ticket 353, the season ticket 355, the permanent ticket 357, etc. Accordingly, there are available versatile methods and means for selling digital contents and providing online services, improving convenience for the customer 9.

A fourth embodiment will now be described. When the member store 11 provides commodities and services, the fourth embodiment allows the service surrogate server 13 to process a service which the customer 9 can reserve. Available reservations include the first-come-first-served reservation, the lottery reservation, the time-based reservation, etc. The fourth embodiment relates to the first-come-first-served reservation. According to the first-come-first-served reservation, the member store 11 prepares 30 limited commodities, for example. The customers 9 purchase 30 commodities in the order of arrival.

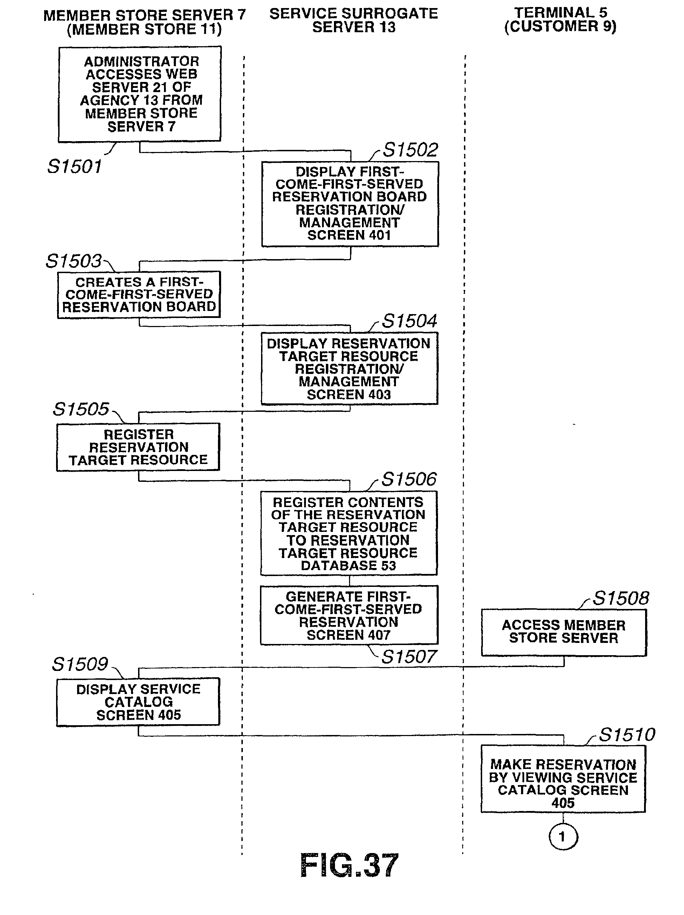

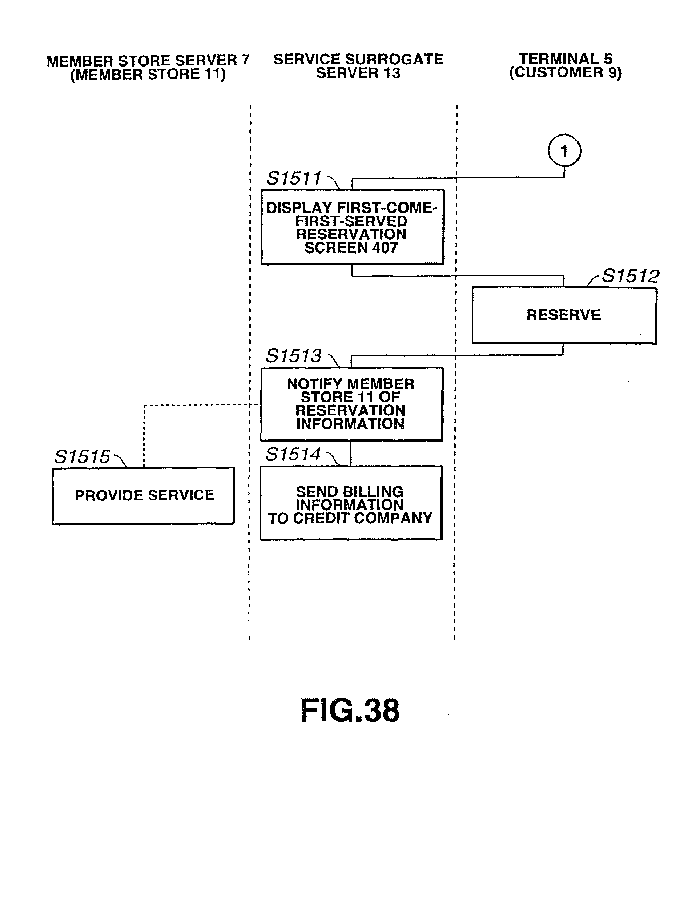

FIGs. 37 and 38 are flowcharts showing the processing according to the fourth embodiment. FIG. 39 schematically shows the processing according to the fourth embodiment.

As shown in FIGs. 37 through 39, the administrator of the member store 11 accesses the web server 21 of the agency 13 via a terminal etc. connected to the member store server 7 (step S1501). The service surrogate server 13 displays a first-come-first-served reservation board registration/management screen 401 (step S1502). The administrator of the member store 11 creates a first-come-first-served reservation board on the first-come-first-served reservation board registration/management screen 401 (step S1503).

FIG. 40 shows a reservation board registration/management screen 401. Using the reservation board registration/management screen 401, the administrator of the member store 11 specifies the first-come-first-served reservation, the lottery reservation, the time-based reservation, etc. For creating an application board, the member store 11 specifies the merchant ID 421 and the password 423.

The administrator of the member store 11 can edit commodities on the application board for the first-come-first-served reservation, etc. The merchant ID 421 is an identification number of the member store 11. The password 423 is assigned to the member store 11. The board name 441 is given to the application board. The board ID 422 is an identification number of the application board. Available application types are the reservation (first-come-first-served) type 425, the lottery reservation type 427, and the time-based reservation type 429.

The reservation type 425 indicates the first-come-first-served reservation and accepts applications for the fixed number of applicants in the order of arrival. The lottery reservation type 427 accepts applications for the fixed number of applicants within a specified period and determines prizewinners by lot. The time-based reservation type 429 includes a fixed time-based type 431 and a free time-based type 433, and a date reservation type 435.

The fixed time-based type 431 accepts reservations in the order of arrival within a predetermined time-based. The free time-based type 433 allows an applicant to make a reservation anytime. The date reservation type 435 accepts reservations on a day basis. An auction type 437 accepts applications by offering an amount of money within a predetermined period for the fixed number of applicants, and settles the applicants from the highest bidder.

The service surrogate server 13 displays the reservation target resource registration/management screen 403 (step S1504). The administrator of the member store 11 registers a reservation target resource (step S1505).

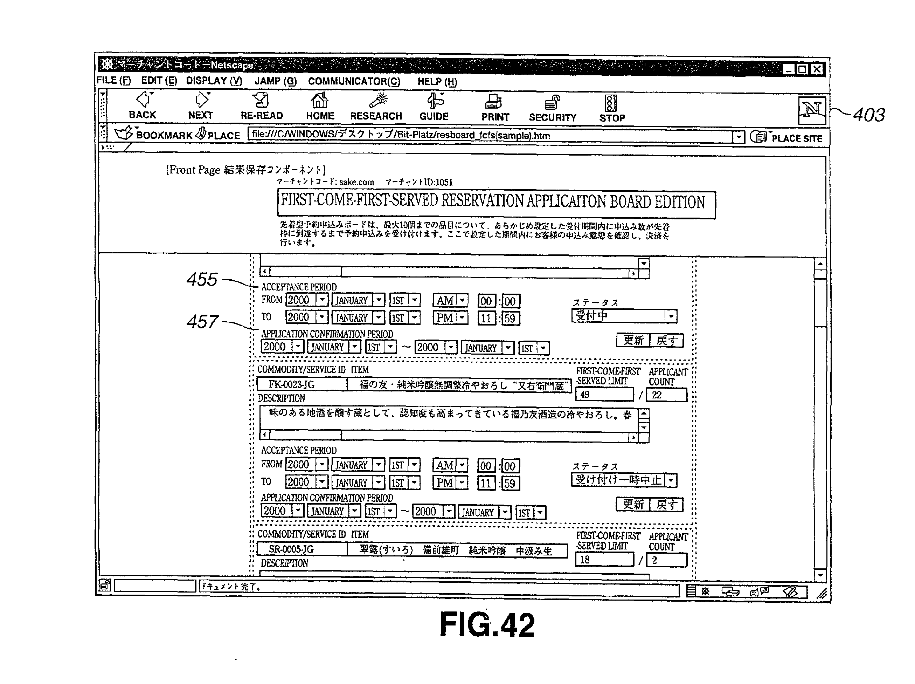

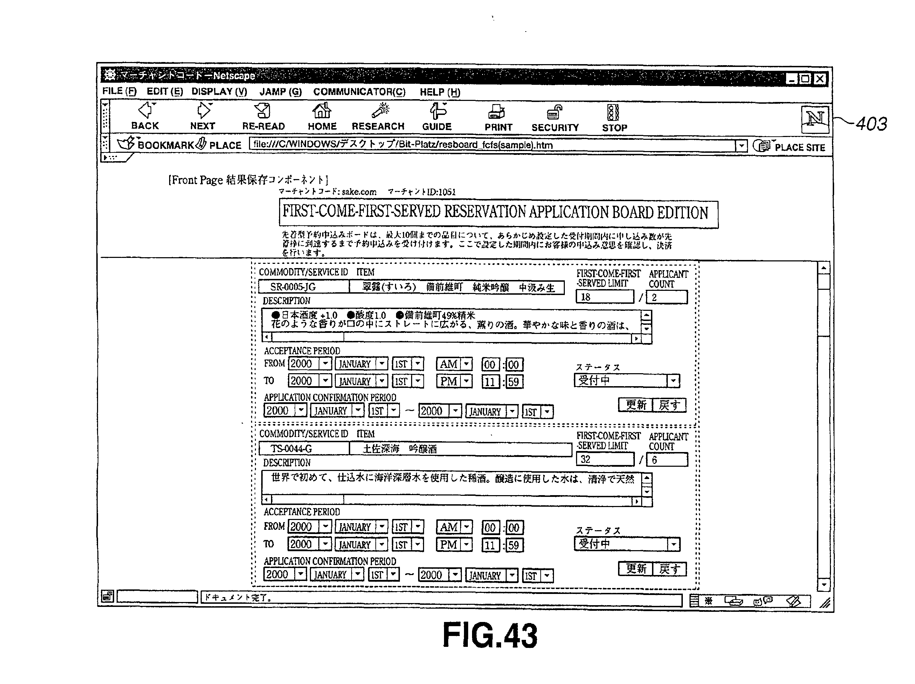

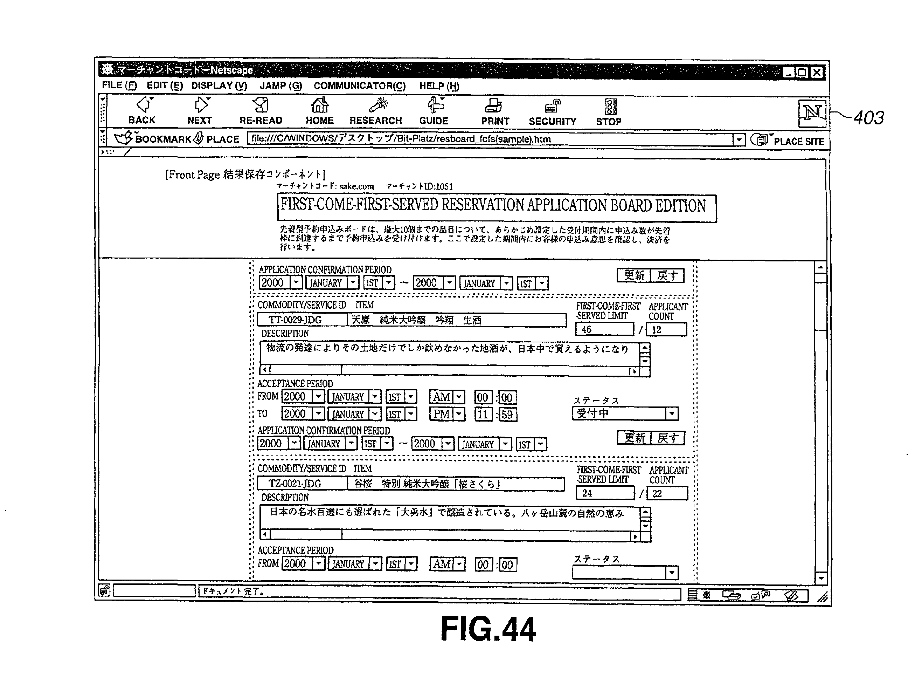

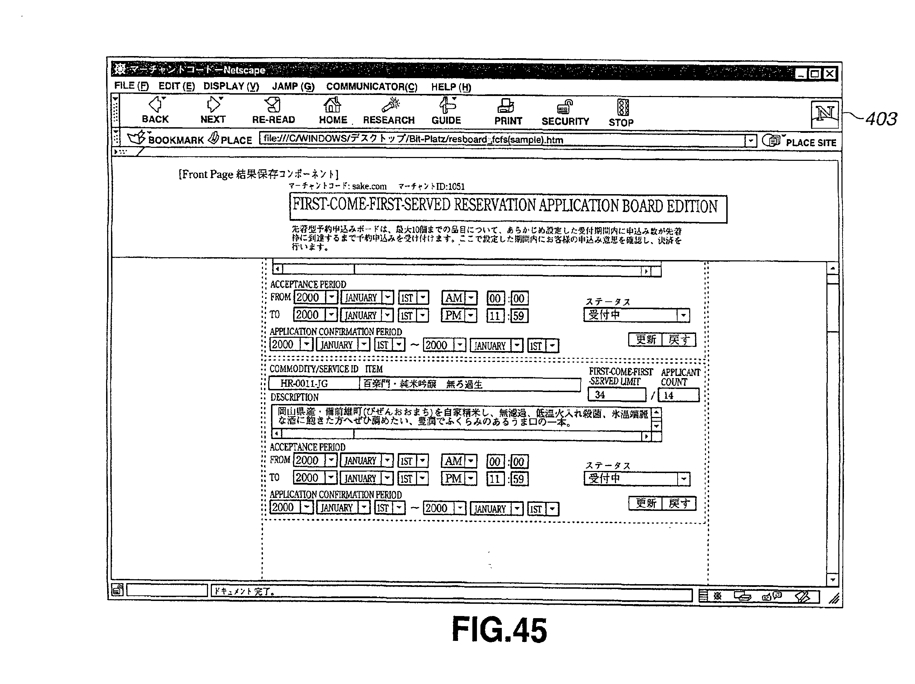

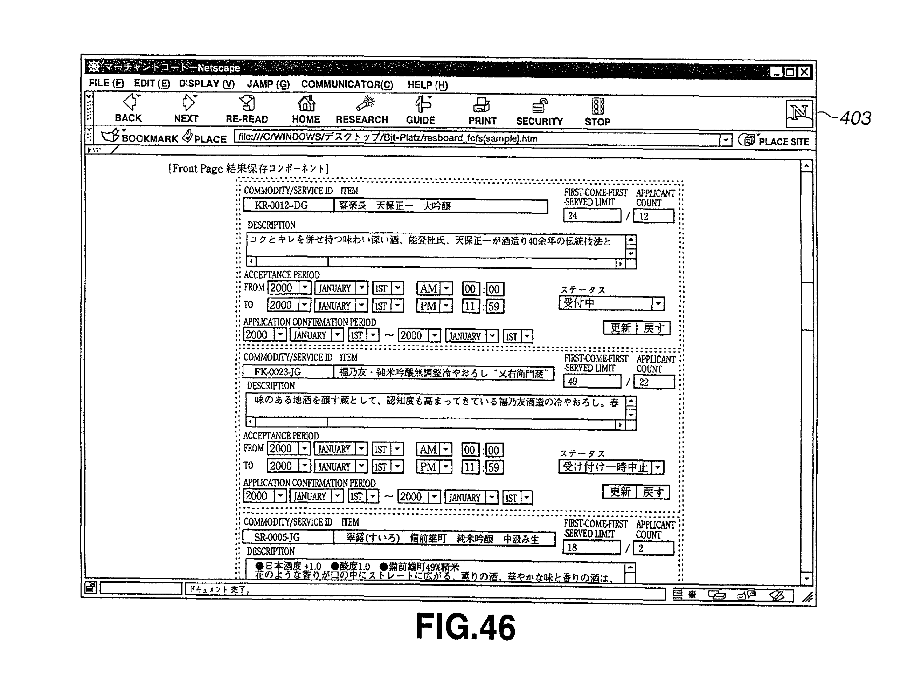

FIGs. 41 through 46 show the reservation target resource registration/management screen 403.

The board ID 422 is a number for identifying the board. When the administrator performs editing of the board, the administrator edits the board based on the board ID.

The board name 441 corresponds to a commodity name, service name, etc. The description 443 is a comment on the commodity or service. An option setting 444 provides options of displaying the reservation type and the current remainder. On the reservation target resource registration/management screen 403, the administrator further enters a commodity/service ID 445, the item 447, the first-come-first-served limit 449, the applicant count 451, the description 453, an acceptance period 455, application confirmation period 457, etc.

The item 447 corresponds to the commodity name, etc. The first-come-first-served limit 449 indicates the number of applicants who can purchase the commodity. The applicant count 451 represents the number of applicants at that time. The description 453 explains the commodity, etc. The acceptance period 455 shows a valid period during which the customer 9 can apply for the first-come-first-served reservation. The application confirmation period 457 indicates an effective period during which the customer 9 confirm the application contents.

The service surrogate server 13 registers the contents of the digital ticket to the reservation target resource database 53 (step S1506). At this time, the service surrogate server 13 automatically generates the first-come-first-served reservation screen 407 (step S1507).

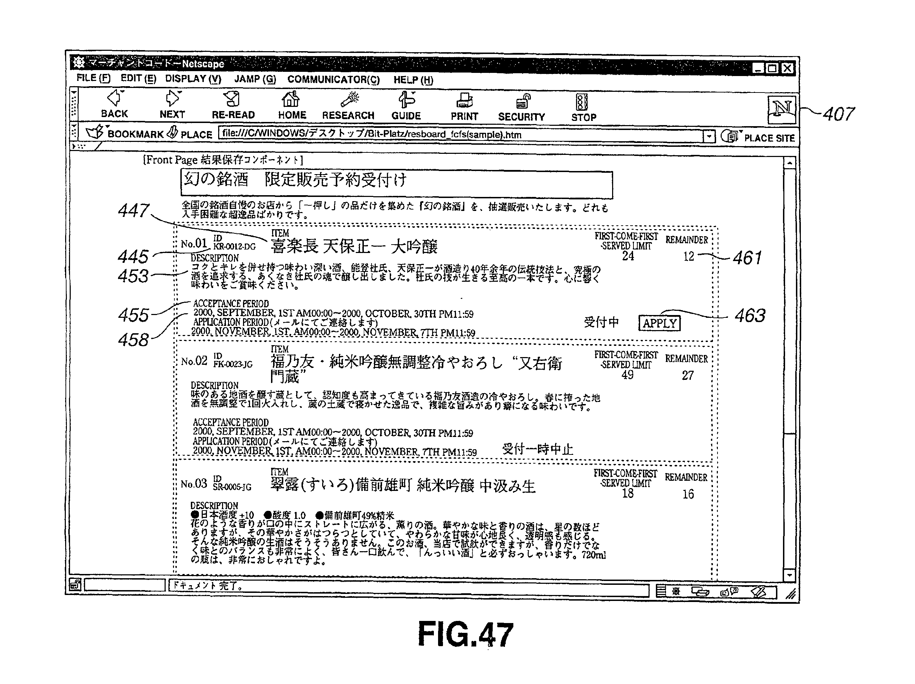

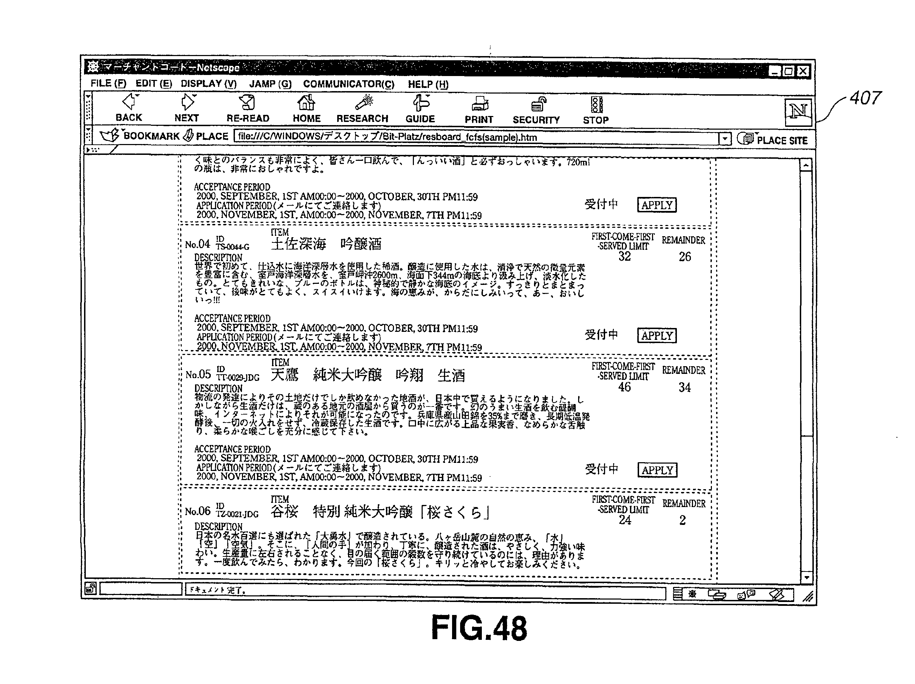

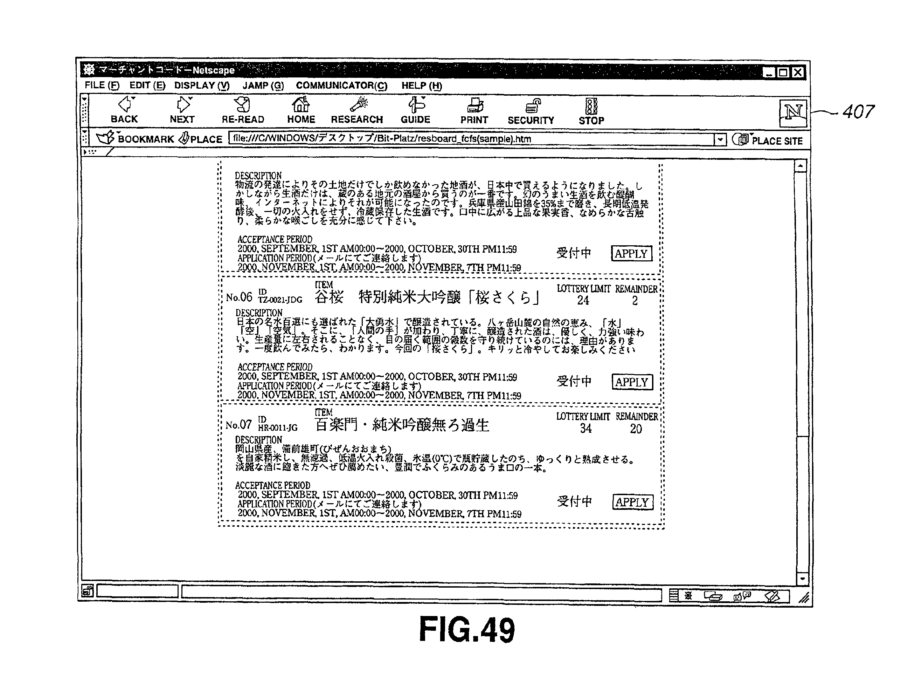

FIGs. 47 through 49 show the first-come-first-served reservation screen 407. The first-come-first-served reservation screen 407 includes the commodity/service ID 445, the item 447, the description 453, the acceptance period 455, an application period 458, a first-come-first-served limit and remainder 461, etc. Using the reservation target resource registration/management screen 403, the administrator of the member store 11 enters the commodity's item 447, description 453, acceptance period 455, etc. The entered data is maintained in the reservation target resource database 53. Using the data, the service surrogate server generates the first-come-first-served reservation screen 407.

The customer 9 as an ordinary user accesses the member store server 7 of the member store 11 via the terminal 5 (step S 1508). The member store server 7 displays the service catalog screen 405 (step S1509). Viewing the service catalog screen 405, the customer 9 makes a reservation (step S1510).

The service surrogate server 13 displays the first-come-first-served reservation screen 407 (step S1511). Using the first-come-first-served reservation screen 407, the customer 9 clicks an application button 463 to make a reservation (step S1512). At the time the customer 9 makes the reservation, the first-come-first-served limit and remainder 461 is displayed. The customer 9 can determine if he or she is eligible for the application. When the remainder is available, the customer 9 clicks the application button 463 to complete the application.

The information entered by the customer 9 on the first-come-first-served reservation screen 407 is registered to the reservation information management database 51. Namely, the reservation information management database 51 registers information about the customer who made the reservation such as the customer ID, information about the reserved commodity such as the commodity/service ID 445, item 447, description 453, etc.

When the first-come-first-served reservation is completed, the service surrogate server 13 notifies the member store 11 of the reservation information (step S1513). The reservation information indicates that the customer 9 reserved for purchasing the commodity etc. by using the first-come-first-served reservation screen 407. Namely, the information sent to the member store 11 is almost the same as that registered to the reservation information management database 51.

When the customer 9 selects the credit-card transaction, the service surrogate server 13 performs the billing processing by sending billing information to a credit company (step S1514).

The member store 11 provides the customer 9 with commodities and services (step S1515). In the example as shown in FIGs. 47 through 49, the member store 11 provides sake. When the customer 9 reserves purchase of the sake, the member store 11 delivers the sake to the customer 9 later on. When the service provision server 8 provides games, for example, the customer 9 can receive an online game service.

According to the embodiment, the member store 11 accesses the service surrogate server 13 and enters necessary information in the first-come-first-served reservation board registration/management screen 401 and the reservation target resource registration/management screen 403, and then creates the service catalog screen 405. Just by doing so, the member store 11 can provide first-come-first-served reservation services. The service surrogate server 13 performs all processing concerning the first-come-first-served reservation.

Accordingly, the member store 11 itself need not build a reservation surrogate system, etc. Since the service surrogate server 13 performs all billing processing concerning the first-come-first-served reservation, the member store 11 itself need not own the billing system.

A fifth embodiment will now be described. The fifth embodiment concerns a lottery reservation. In the lottery reservation, the member store member store 11 prepares the limited number of commodities, e.g., three commodities. When a plurality of customers 9 makes applications, the member store 11 selects applicable customers 9 by lot.

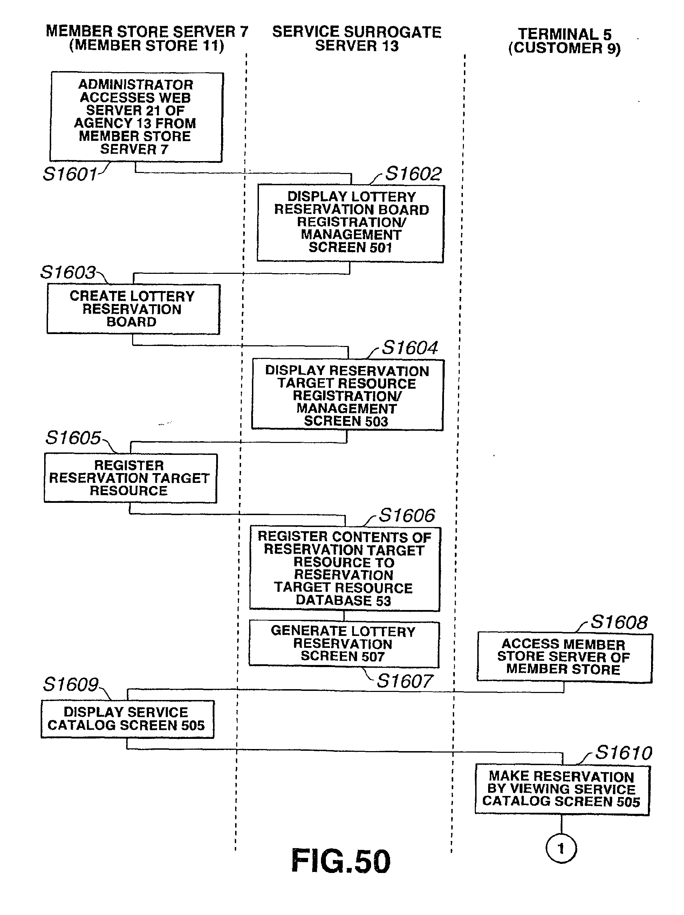

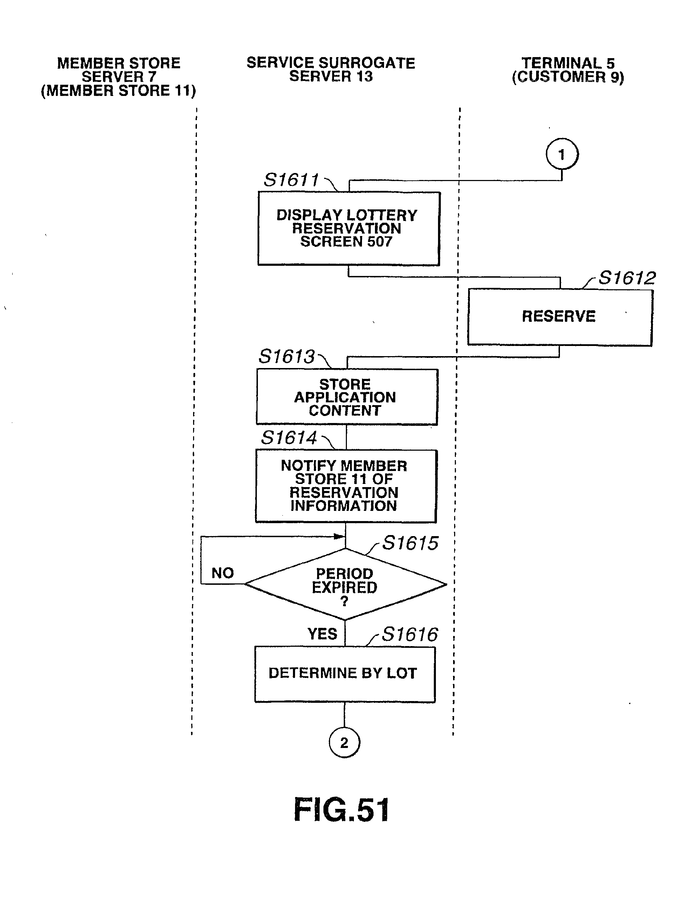

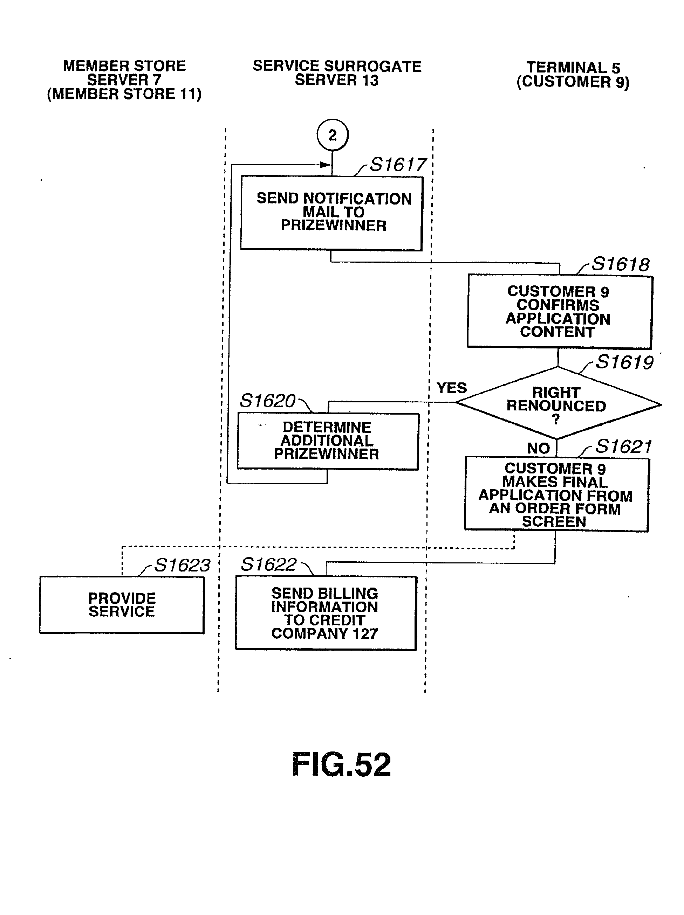

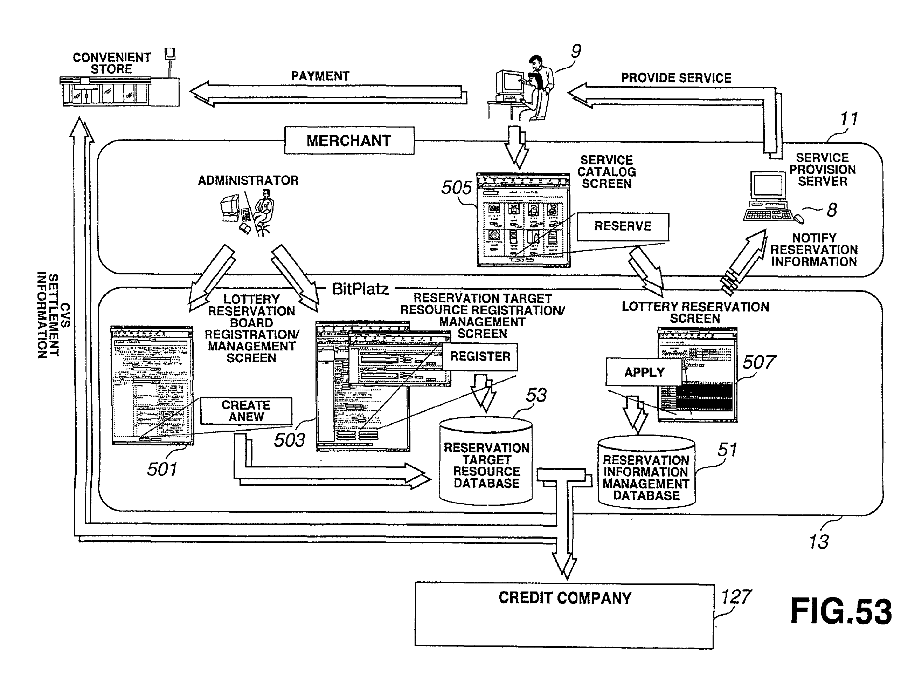

FIGs. 50, 51, and 52 are flowcharts showing the processing according to the fifth embodiment. FIG. 53 schematically shows the processing according to the fifth embodiment.

As shown in FIGs. 50 through 52, the administrator of the member store 11 accesses the web server 21 of the agency 13 via a terminal etc. connected to the member store server 7 (step S1601). The service surrogate server 13 displays a lottery reservation board registration/management screen 501 (step S1602). The lottery reservation board registration/management screen 501 is the same as the first-come-first-served reservation board registration/management screen 401 as shown in FIG. 40. The administrator of the member store 11 creates a lottery reservation board on the lottery reservation board registration/management screen 501 (step S1603).

Namely, the lottery reservation type 427 is selected from the first-come-first-served reservation board registration/management screen 401 in FIG. 40 for the above-mentioned first-come-first-served reservation.

The service surrogate server 13 displays the reservation target resource registration/management screen 503 (step S1604). The administrator of the member store 11 registers a reservation target resource (step S1605).

FIG. 54 shows the reservation target resource registration/management screen 503. The board ID 522 is an identification number assigned to the board. The board name 541 indicates the commodity or service name. The description 543 is used as a comment on the commodity or service. An option setting 544 is available for displaying the current competitive rate. The administrator enters data in the fields such as the board name 541 and the description 543. Further, the administrator enters data for the commodity/service ID 545, the item 547, the lottery limit 549, the applicant count 551, the description 553, the acceptance period 555, etc.

The item 547 shows the commodity name, etc. The lottery limit 549 denotes the number of applicants who can purchase the commodity. The applicant count 551 indicates the number of applicants at that point. The description 553 is used to explain the commodity etc. The acceptance period 555 specifies a valid period during which the customer 9 can apply for the lottery reservation.

The service surrogate server 13 registers the contents of the reservation target resource to the reservation target resource database 53 (step S1606). Namely, when the administrator enters the information on the reservation target resource registration/management screen 503, that information is registered to the reservation target resource database 53 as the reservation target resource. At this point, the service surrogate server 13 automatically generates a lottery reservation screen 507 (step S1607).

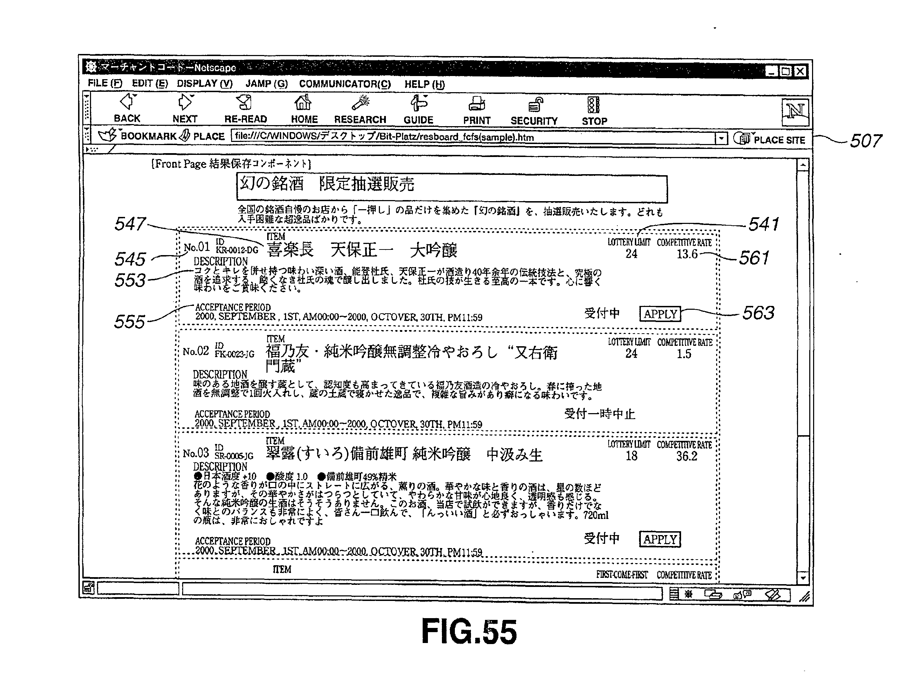

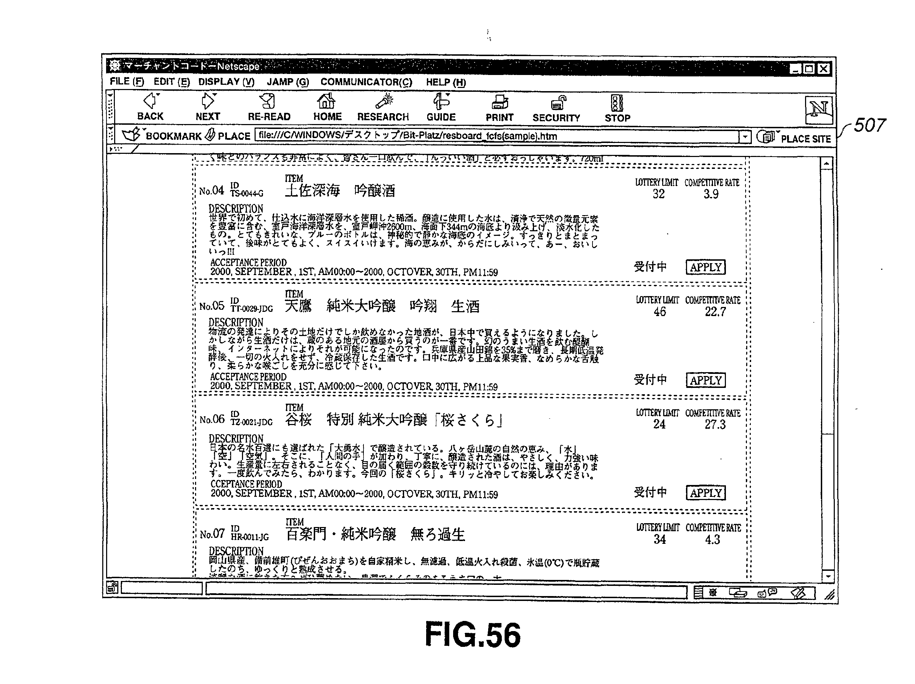

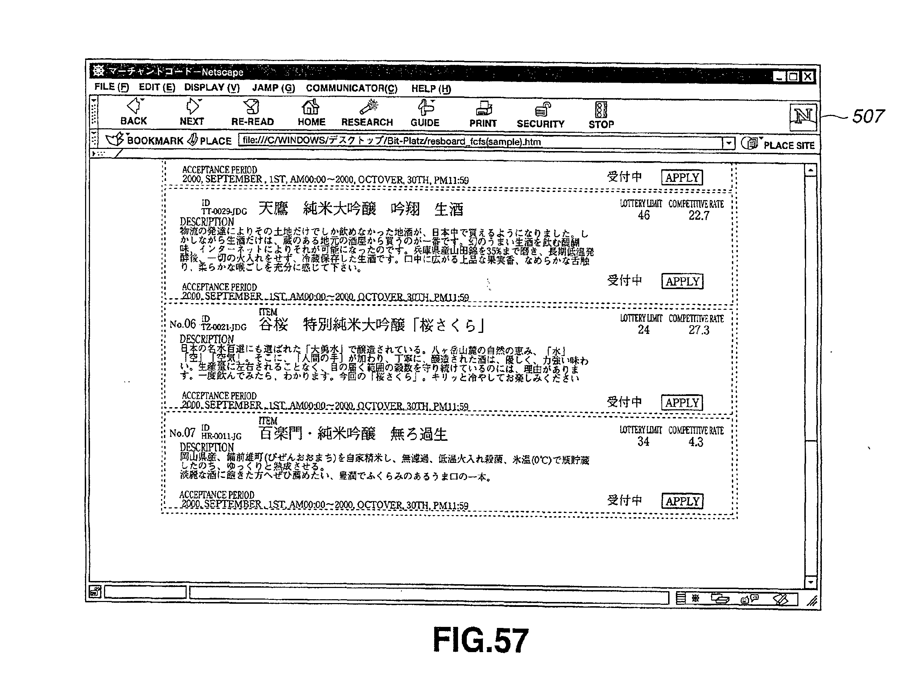

FIGs. 55 through 57 show the lottery reservation screen 507. The lottery reservation screen 507 includes the commodity/service ID 545, the item 547, the description 553, the acceptance period 555, the lottery limit 549, a competitive rate 561, an application button 563, etc. The item 547, the description 553, the acceptance period 555, and the lottery limit 549 correspond to the information entered by the administrator at step S1605. The service surrogate server displays the information as is on the lottery reservation screen 507. The competitive rate 561 indicates the number of applicants with reference to the lottery limit 549.

The customer 9 as an ordinary user accesses the member store server 7 of the member store 11 (step S1608). The member store server 7 displays the service catalog screen 505 (step S1609). The service catalog screen 505 presents the commodities or services provided by the member store 11. Viewing the service catalog screen 505, the customer 9 makes a reservation (step S1610). Namely, the customer 9 selects a commodity or service to be reserved, and then clicks the "Reserve" button on the service catalog screen 505.

When the customer 9 clicks the "Reserve" button, the service surrogate server 13 displays the lottery reservation screen 507 (step S1611). As mentioned above, the lottery reservation screen 507 shows infonnation about various commodities or services. Specifically, that screen represents the commodity/service ID 545 the item 547, the description 553, the acceptance period 555, the lottery limit 549, the current competitive rate 561, etc.

The customer 9 can apply for the reservation by clicking the application button 563 on the lottery reservation screen 507 (step S1612). The service surrogate server 13 registers the application content entered by the customer 9 to the reservation information management database 51 (step S1613). The application content includes the information about the commodity reserved by the customer 9 and about the customer 9 such as the customer ID, etc. on the lottery reservation screen 507.

The service surrogate server 13 notifies the member store 11 of the reservation information (step S1614). The reservation information is almost the same as the information registered to the reservation information management database 51. It contains the information about the customer 9 and the commodity or service reserved by the customer 9.

When the specified period expires (step S1615), the service surrogate server 13 draws lots (step S1616) to determine prizewinners, and sends notification mail to the prizewinning customers 9 (step S1617). The specified period here means the acceptance period 555 or a specified period after the acceptance period 555 expires.

When two weeks have passed after expiration of the acceptance period 555, for example, in case there are a plurality of reservations for a given commodity, the service surrogate server 13 draws lots to determine, e.g., three prizewinners for the given commodity. The service surrogate server 13 uses e-mail etc. to notify the selected three customers 9 that they are prizewinners.

The customer 9 reads the notification mail from the service surrogate server 13 and confirms the application content (step S1618). When the customer 9 renounces the right to be a prizewinner (step S 1619), he or she clicks a "Renounce" button (not shown). The service surrogate server 13 is notified of the renunciation. The service surrogate server 13 determines additional prizewinners (step S1620), and then returns to step S1617.

When there are a plurality of reservations for a given commodity and, for example, three applicants are determined to be prizewinners for the given commodity, in case one of them renounces the prizewinning right, the service surrogate server 13 re-draws lots for rejected customers to determine an additional prizewinner. The notification mail is also sent to the additional prizewinner (step S1617). When the customer 9 does not renounce the right at step S1619, he or she makes the final application from the order form screen or the like (step S1621). The information about the final application is sent to the service surrogate server 13.

Concerning the final application, the service surrogate server 13 sends the billing information about the commodity or service to the credit company 127. The service surrogate server 13 notifies the member store server 7 that the customer 9 should receive the commodity or service. The member store 11 delivers the commodity to the customer 9. Alternatively, in order to receive the service from the member store 11, the customer 9 accesses the member store 11 to receive the service provided by the service provision server 8.

In the example as shown in FIGs. 55 through 57, the member store 11 provides sake. The customer 9 reserves purchase of the sake. When the customer 9 becomes a prizewinner by lot, the member store 11 delivers the sake to the customer 9 later on.

According to the embodiment, the member store 11 accesses the service surrogate server 13 and enters necessary information in the lottery reservation board registration/management screen 501 and the reservation target resource registration/management screen 503, and then creates the service catalog screen 505. Just by doing so, the member store 11 can provide lottery reservation services. The service surrogate server 13 performs all processing concerning the lottery reservation.

Accordingly, the member store 11 itself need not build a reservation surrogate system, etc. Since the service surrogate server 13 performs all billing processing concerning the lottery reservation, the member store 11 itself need not own the billing system.

A sixth embodiment will now be described. The sixth embodiment concerns a time-based reservation. The time-based reservation is applicable when the member store 11 is a game server provider, for example. The time-based reservation is used to reserve a time slot during which the customer 9 can select and use games. When the member store 11 is a service provider for managing electronic meeting rooms, the time-based reservation allows the customer 9 to reserve a date to use the electronic meeting room.

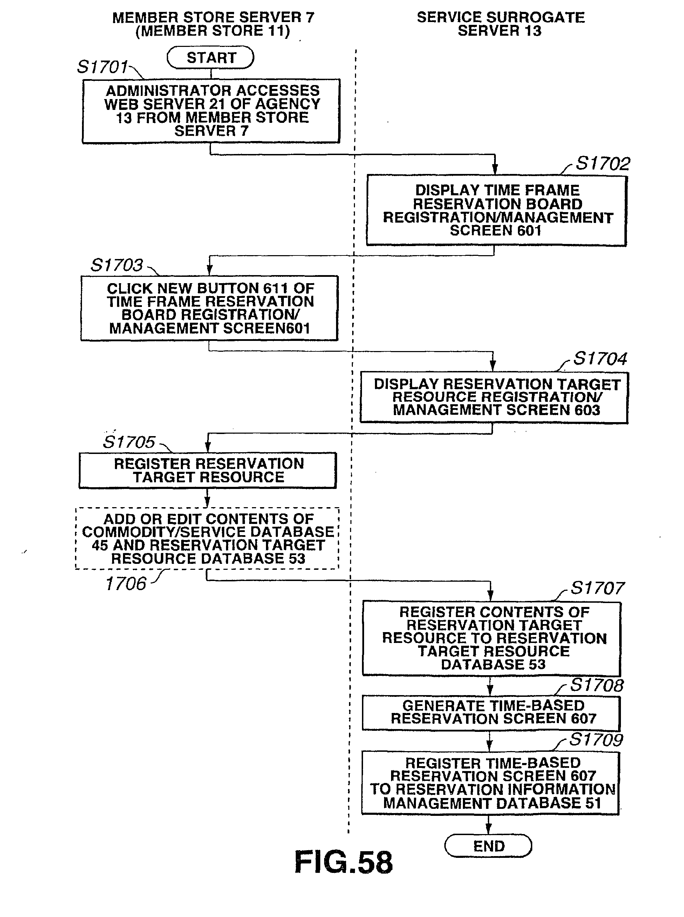

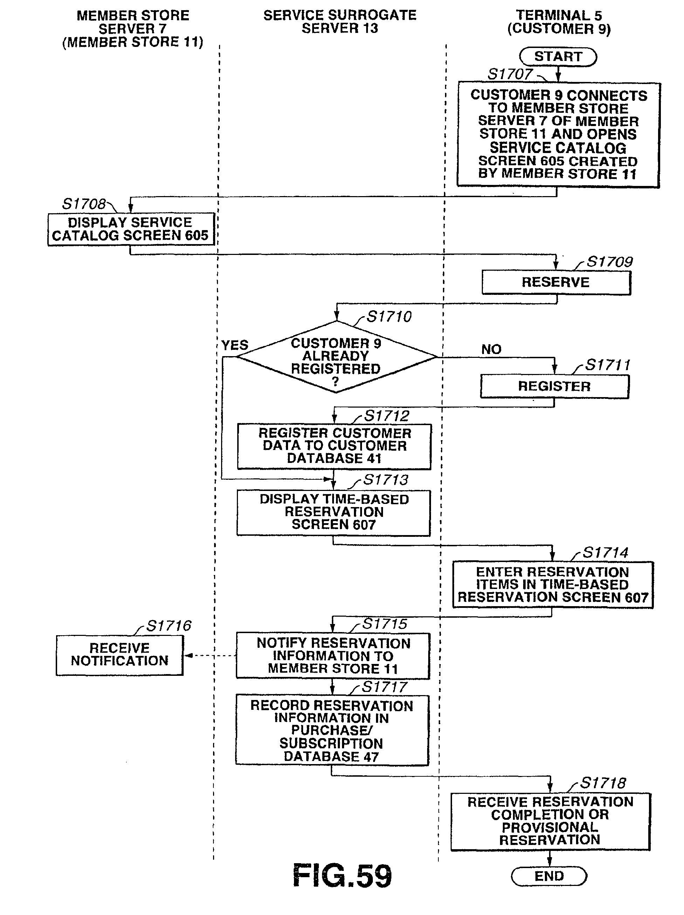

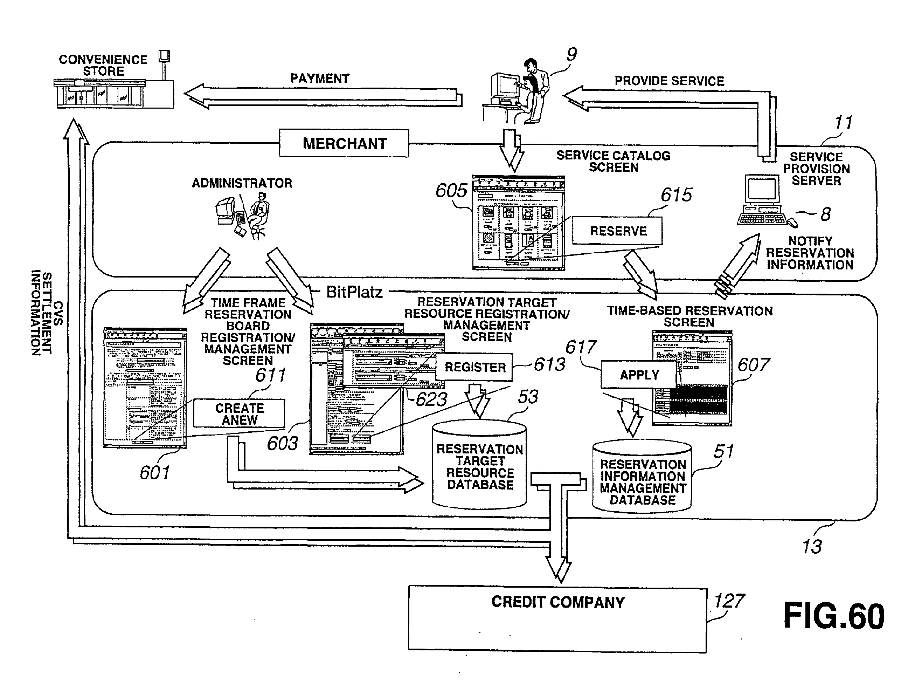

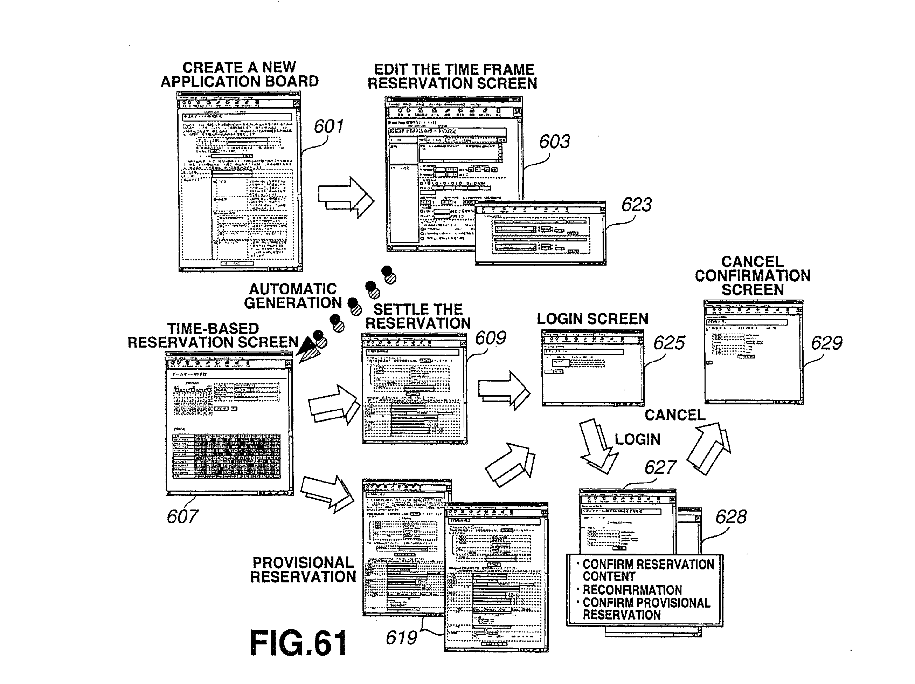

FIGs. 58 and 59 are flowcharts which show the processing according to the sixth embodiment. FIG. 60 schematically shows the processing according to the sixth embodiment. FIG. 61 represents a display screen according to the sixth embodiment.

FIG. 58 is a flowchart showing that the member store 11 uses the service surrogate server 13 and creates a time-based reservation screen 607 for commodities, services, etc. Here, it is assumed that data about the member store 11 itself (the member store database 43 in FIG. 4) is already registered to the service surrogate server 13.

First, the administrator of the member store 11 accesses the web server 31 of the agency 13 via the terminal 5 etc. connected to the member store server 7 (step S1701). The service surrogate server 13 displays a time-based reservation board registration/management screen 601 (step S1702). Then, the administrator of the member store 11 clicks a "New" button 611 of the time-based reservation board registration/management screen 601 (step S1703). The service surrogate server 13 displays a reservation target resource registration/management screen 603 (step S1704).

The administrator registers a reservation target resource in the reservation target resource registration/management screens 603 and 623 (step S1705). The reservation target resource is data for creating the time-based reservation screen (application board) 607 (to be described). The time-based reservation board registration/management screen 601 is the same as the first-come-first-served reservation board registration/management screen 401 for the above-mentioned first-come-first-served reservation.

The administrator selects the time-based reservation type 429 from the first-come-first-served reservation board registration/management screen 401 (i.e., time-based reservation board registration/management screen 601) in FIG. 40 during the above-mentioned first-come-first-served reservation. The time-based reservation type 429 includes the fixed time-based type 431, the free time-based type 433, and the date reservation type 435. The fixed time-based type 431 is used for accepting reservations in the order of arrival within a predetermined time-based. The example here explains that the administrator of the member store 11 selects the fixed time-based type 431 and creates a time-based reservation screen for a game server. The free time-based type 433 allows an applicant to reserve a time-based anytime. The date reservation type 435 accepts reservations on a day basis. There are displayed the reservation target resource registration/management screens 603 corresponding to the fixed time-based type 431, the free time-based type 433, and the date reservation type 435, respectively.

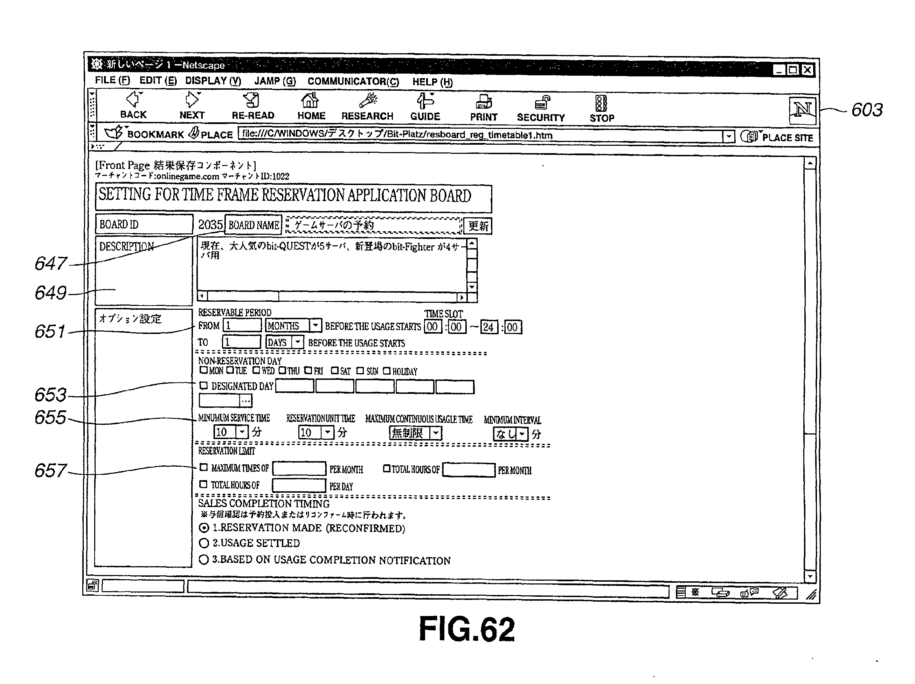

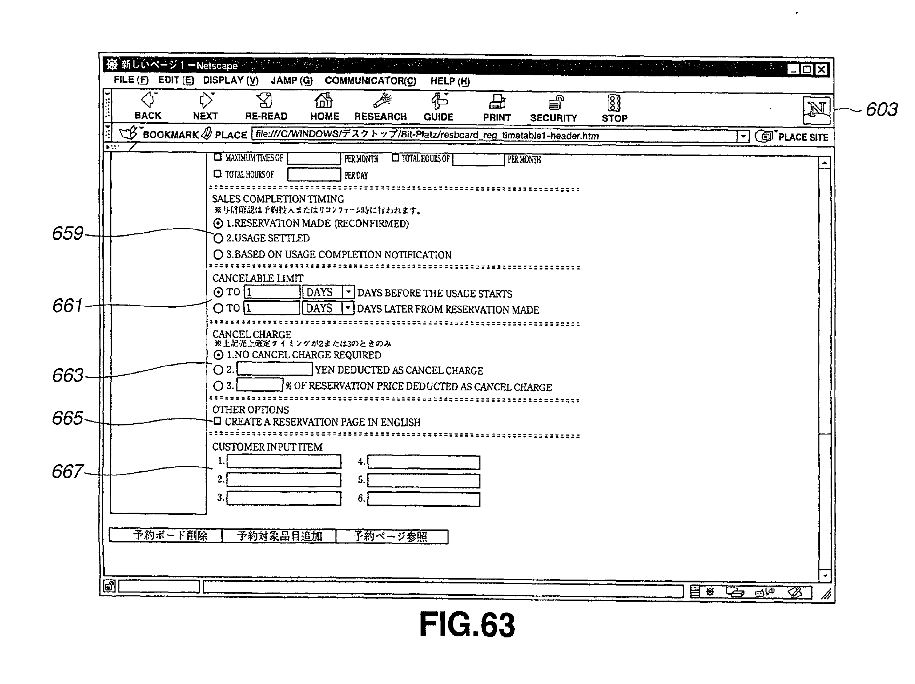

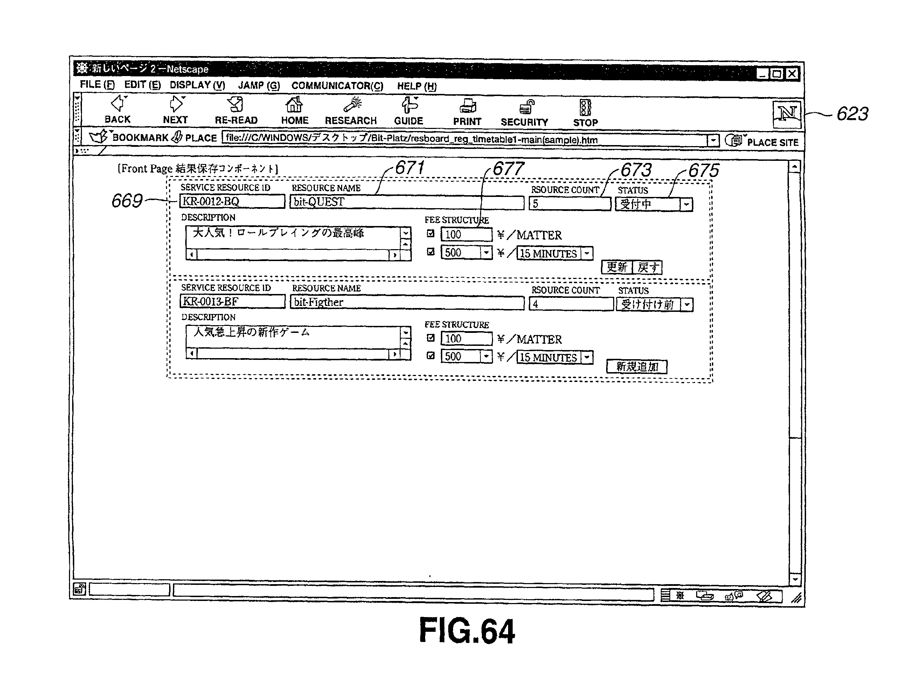

FIGs. 62 through 64 show the reservation target resource registration/management screens 603 and 623. The board name 647 indicates a service name corresponding to "Reserving a game server", the service provided by the member store 11 in the example. The description 649 is a comment about the service. As time reservation options, the administrator of the member store 11 further enters the reservable period and time slot 651, the non-reservation day 653, the minimum service time, reservation unit time, maximum continuous usable time, minimum interval 655, the reservation limit 657, the sales completion timing 659, the cancelable limit 661, the cancel charge 663, the other options 665, a customer input item for reservation 667, etc. on the reservation target resource registration/management screen 603. The reservation target resource registration/management screen 623 is used to enter a service resource ID 669, a resource name 671, a resource count 673, status 675, a fee structure 677, etc.

The reservable period and time slot 651 is used to enter a period and a time slot during which the service can be reserved. As far as the time slot setting is concerned, it is possible to previously exclude a maintenance and inspection time slot etc. for the game server which provides services. The non-reservation day 653 specifies a day when no service can be reserved. For example, the non-reservation day may be every Monday or an explicitly predetermined day. The minimum service time indicates the minimum reservable service time. The reservation unit time is used for the reservation time setting, e.g., in units of 15 minutes. The maximum continuous usable time specifies a maximum time that can be used continuously at one time. The minimum interval specifies a minimum interval between aplurality of service usage reservations.

The reservation limit 657 places limitations on the reservation such as the maximum number of accesses per day and the total time per month or day. The sales completion timing 659 is selectable from "1. Reservation made (reconfirmed)", "2. Usage settled", and "3. Based on usage completion notification" in relation to settlement means.

The cancelable limit 661 specifies a time limit capable of cancellation. For example, it is specified like "One day before the usage starts". The cancel charge 663 specifies how to demand the cancel charge. It is selectable from "1. No cancel charge required", "2. [ ] yen deducted as cancel charge", and "3. [ ] % of reservation price deducted as cancel charge", for example. The other options 665 here specifies whether or not to create a reservation page in English.

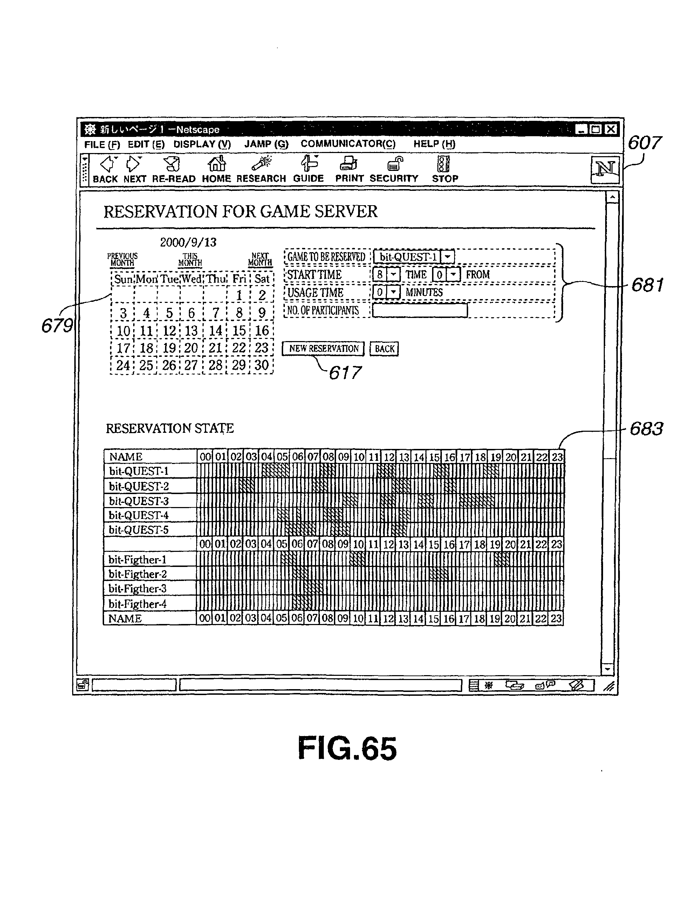

The customer input item for reservation 667 specifies an item to be entered by the customer 9 on the time-based reservation screen 607. For example, the member store 11 is a service provider for managing meeting rooms and intends to create the time-based reservation screen 607 for "meeting room reservation board". When "No. of participants" is defined for the customer input item 667, an item for entering "No. of participants" is automatically created in the time-based reservation screen 607 (an entry area 681 in FIG. 65 to be described).

In the reservation target resource registration/management screen 623, the service resource ID 669 is given to the service. The resource name 671 denotes the name of the service. The resource count 673 indicates the number of services. The example shows that the game server of the member store 11 can concurrently provide five services of the game software "bit-QUEST".

The status 675 shows the state of the service such as "Being accepted", "Not accepted yet", etc. The fee structure 677 shows a base fee, a unit fee, etc. of the service. For example, the base fee is specified as 100 yen and the unit fee as 500 yen per 15 minutes.

The administrator of the member store 11 can add or edit the contents of the existing time-based reservation screen (application board) 607 (step S1706). This screen can be read from the commodity/service database 45 and the reservation target resource database 53 of the service surrogate server 13.

The service surrogate server 13 registers the contents of the time-based reservation target resource registration/management screen 603 to the reservation target resource database 53 (step S1707) and generates time-based reservation screen 607 (step S1708). The service surrogate server 13 registers the time-based reservation screen 607 to the reservation information management database 51 (step S1709).

FIG. 59 shows how the customer 9 makes a time-based reservation for the game server of the member store 11 FIG. 59 is explained in conjunction with FIGs. 60, 61, and 65.

The customer 9 as an ordinary user connects to the member store server 7 of the member store 11 via the terminal 5 and accesses the service catalog screen 605 created by the member store 11 (step S1707). The member store server 7 displays the service catalog screen 605 (step S1708). For example, on the service catalog screen 605, a plurality of game catalogs, e.g. comments on the games, fees, etc, provided by the game server are displayed. The customer 9 selects a service (game "bit-QUEST" in this example) and reserves it (step S1709 and 615 in FIG: 60).

The service surrogate server 13 checks if the customer 9 is already registered to the service (step S1710). If not, the service surrogate server 13 accepts the registration from the customer 9 (step S1711). The service surrogate server 13 registers the customer data as shown in FIGs. 2 and 3 to the customer database 41 (step S1712) and displays the time-based reservation screen 607 (step S1713). If the customer 9 is already registered, the service surrogate server 13 displays the time-based reservation screen 607 (step S1713).

FIG. 65 shows the time-based reservation screen 607 displayed on the terminal 5 of the customer 9. The time-based reservation screen 607 comprises a date selection section 679, an entry area 681, a reservation state 683, etc. The reservation state 683 is represented in a time table. The vertical axis shows game names such as "bit-QUEST-1 through bit-QUEST-5" and "bit-Fighter-1 through bit-Fighter-4". The horizontal axis shows reservable time-baseds. For example, the shaded time-baseds indicate that the reservations are already made.

The customer 9 selects a reservation date from the date selection section 679. The customer 9 enters items target to be reserved, the start time, etc. in the entry area 681, and then clicks a reservation button 617 to complete the reservation (step S1714). The date selection section 679 may be used to click an intended date on the calendar or directly enter that date. The reservation state 683 may be configured so that clicking an unreserved time-based reserves it.

When the time-based reservation is completed, the service surrogate server 13 notifies the reservation state to the service provision server 8 of the member store 11 (steps S1715 and S1716). The service surrogate server 13 records the reservation information in the purchase/subscription management database 47 (step S 1717). The customer 9 receives reservation completion or provisional reservation (step S1718). The reservation completion or provisional reservation will be described in a seventh embodiment.

When the member store 11 builds and operates the time-based reservation, the embodiment allows the service surrogate server 13 to support creation of the time-based reservation screen and surrogately operate it.

Accordingly, the member store 11 itself need not own a time-based reservation system. Supported by the service surrogate server 13, the member store 11 can start the time-based reservation system with a small initial investment and in a short time. Since the service surrogate server 13 surrogately performs operations, the member store 11 itself need not be responsible for operations or system maintenance, improving economical efficiency and reliability.

The example here has explained the fixed time-based type 639 in the time-based reservation. The service surrogate server 13 also creates time-based reservation screens for the free time slot 641 and the date reservation type 643 correspondingly.

The service surrogate server 13 creates and edits time-based reservation pages for the services provided by the member store 11. The customer 9 performs operations such as application, confirmation, etc. of a service for the time-based reservation. In response to the operations, the service surrogate server 13 processes the reservation screen data created by a reservation screen creation means and the reservation data specified by the customer 9.

The service surrogate server 13 receives conditions about the time-based reservation method requested by the member store 11. Based on the condition, the service surrogate server 13 builds a time-based reservation system corresponding to the member store 11. Based on the time-based reservation system, the service surrogate server 13 can provide surrogate services for the time-based reservation on behalf of the member store 11.

The service surrogate server 13 receives a time-based reservation condition corresponding to the commodity or service provided to the customer 9 from the member store 11. Based on the time-based reservation condition, the service surrogate server 13 prepares a time-based reservation function corresponding to the member store 11. Using the time-based reservation function, the service surrogate server 13 can surrogately make time-based reservations for commodities or services provided to the customer 9 by the member store 11.

The service surrogate server 13 receives a time-based reservation condition concerning the commodity or service for the customer 9 from the member store 11. Based on the time-based reservation condition, the service surrogate server 13 builds a time-based reservation function corresponding to the member store 11. Using the time-based reservation function, the service surrogate server 13 can make a time-based reservation of the commodity or service for the customer 9 on behalf of the member store 11.

The service surrogate server 13 prepares a time-based reservation support function for supporting the time-based reservation of commodities or services provided to the customer 9 by the member store 11. When the customer 9 requests the member store 11 to make a tune-based reservation for the commodity or service, the above-mentioned time-based reservation support function allows the customer 9 to make the time-based reservation according to the condition specified by the member store 11.

The service surrogate server 13 prepares a tune-based reservation support function for supporting the time-based reservation of commodities or services provided to the customer 9 by the member store 11. When the customer 9 requests the member store 11 to make a time-based reservation for the commodity or service, the above-mentioned time-based reservation support function can make the time-based reservation according to the condition specified by the member store 11 to the customer 9.

A seventh embodiment will now be described. The seventh embodiment relates to reservation completion or a provisional reservation and particularly to reconfirmation. It is assumed that the customer 9 reserves a service provided by the member store 11 via the service surrogate server 13.

The settlement method may use the credit card as shown in FIG. 11. In many cases, the service surrogate server 13 must inquire at the credit company about the credit for confirmation within a sales booking month or in a month preceding to the sales booking month at the latest. On the contrary, if the service surrogate server 13 accepts a reservation for the service before a given period, the credit company may not be able to complete the credit confirmation.

As a solution, a specified period is defined as the reconfirmation period, e.g., from one month before a date scheduled to start the service to Y hours before the scheduled time. A reservation made before the reconfirmation period is assumed to be a provisional reservation. At the time the reconfirmation period becomes valid, the customer 9 is requested to confirm the contents of the provisional reservation. Then, the reservation is reconfirmed and settled. When a reservation is made shorter than one month before a date scheduled to start the service, the reservation completion is performed.

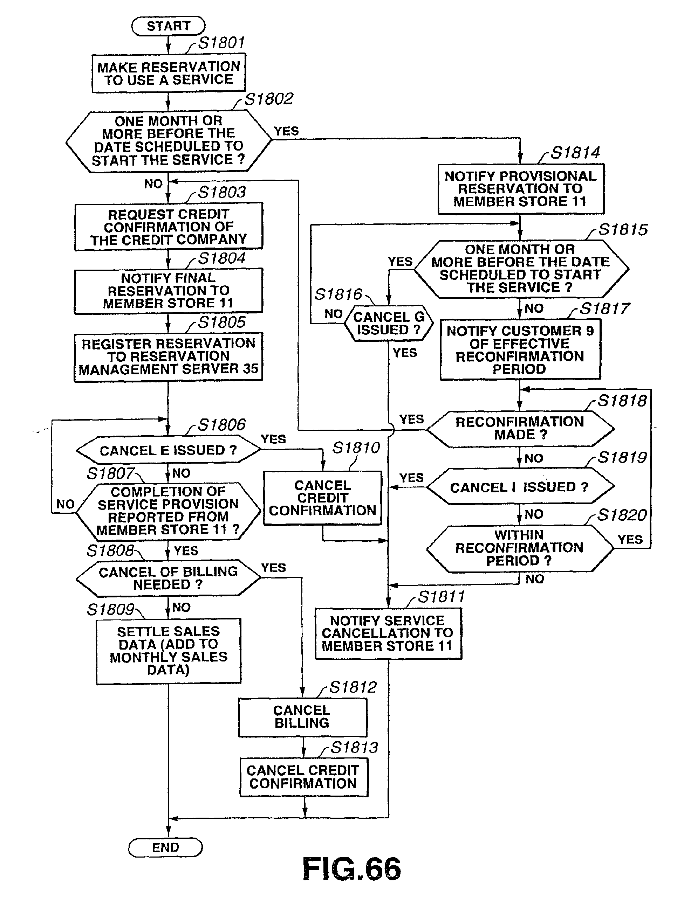

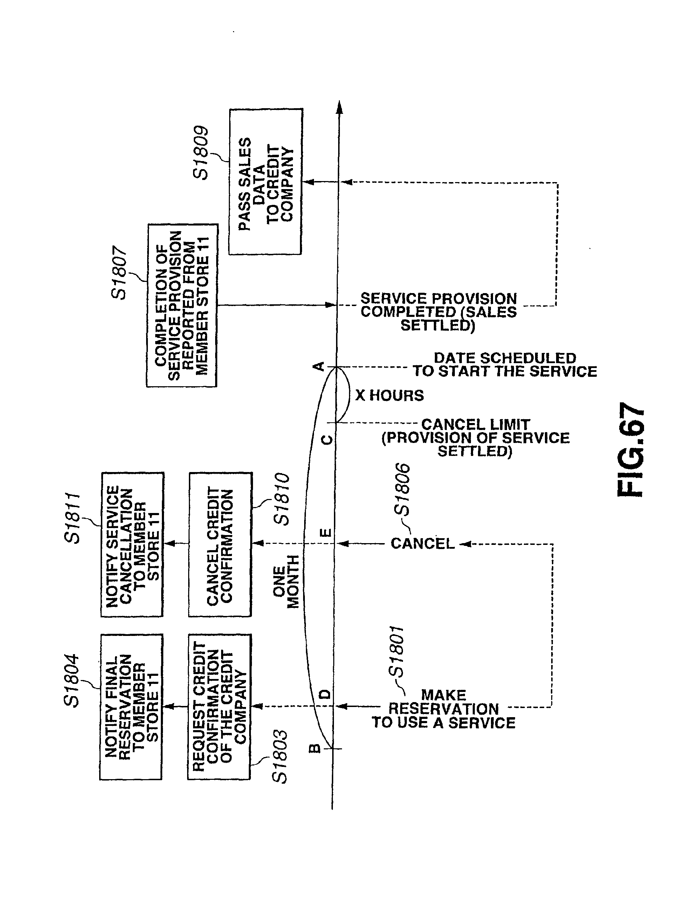

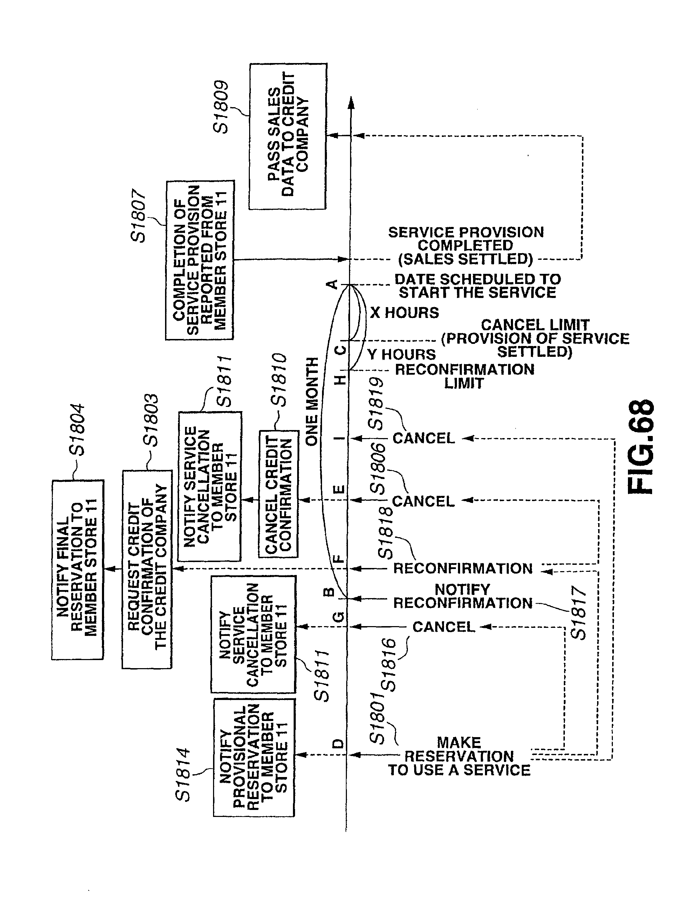

FIG. 66 is a flowchart showing the processing according to the seventh embodiment. FIGs. 67 and 68 diagram time scales according to the seventh embodiment. The embodiment will now be described with reference to the confirmation screen 609 for the reservation content, the confirmation screen 619 for the provisional reservation, the login screen 625, the reconfirmation screens 627 and 628, and the cancel confirmation screen 629 for the provisional reservation in FIG. 61.

As shown in FIGs. 66 through 68, the customer 9 as an ordinary user accesses the member store server 7 of the member store 11 via the terminal 5. The customer 9 uses, e.g., the time-based reservation screen 607 in FIG. 61 via the service surrogate server 13 and makes a reservation to use a service provided by the member store 11 (step S1801). Here, it is assumed that the customer 9 selects an online game provided by the member store 11 and makes a time-based reservation to use that game.

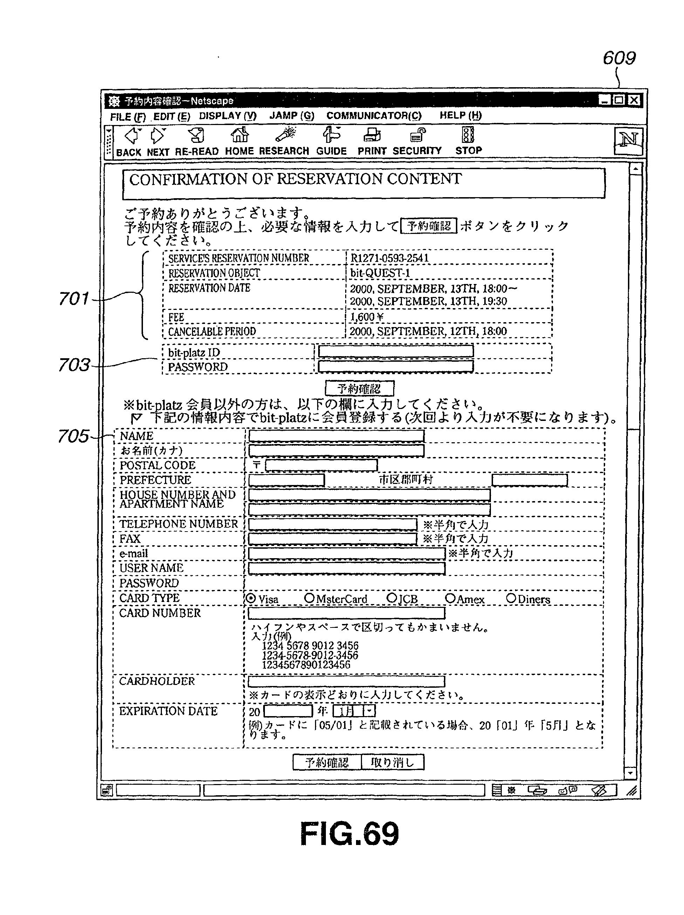

When service reservation D is made shorter than one month before a date A scheduled to start the service (see NO at step S1802 and the time scale in FIG. 67), the terminal 5 of the customer 9 displays the confirmation screen 609 for the reservation content as shown in FIG. 69. The confirmation screen 609 for the reservation content comprises a reservation content 701, a customer authentication area 703, a customer registration area 705, etc. The reservation content 701 includes a service's reservation number, reservation target, reservation date, fee, cancelable period, etc. The reservation target is a name of the game etc. provided by the game server, for example. The cancelable period takes effect, e.g., up to limit C which is X hours before the date scheduled to start the service. During this period, no cancel charge is required.

In the customer authentication area 703, the customer 9 enters his or her ID and password. When the customer 9 is not registered for the service, he or she needs to complete the registration by entering necessary items such as the name, postal code, address, telephone number, e-mail address, card type, card number, etc. in the customer registration area 705. The entered content is registered to the customer database 41. The customer 9 confirms the reservation content 701 and enters necessary information in the customer authentication area 703 or the customer registration area 705. Then, he or she clicks the reservation completion button in the confirmation screen 609 for the reservation content.

The service surrogate server 13 requests credit confirmation of the credit company via the settlement server 37 (step S1803). The service surrogate server 13 notifies the final reservation to the member store server 7 of the member store 11 (step S1804) and registers the reservation to the reservation management server 35 (step S1805). The credit card settlement needs to register sales in advance. This is called the credit confirmation.

When a cancel E does not occur (NO at step S1806), the customer 9 receives the service from the service provision server 8 of the member store 11. The service surrogate server 13 is notified of completion ofthe service provision from the member store server 7 of the member store 11 (step S1807).

When the billing to the customer 9 need not be canceled (NO at step S1808), the service surrogate server 13 passes monthly sales data as the service charge to the credit company via the settlement server 37 (step S1809).

When a cancel limit C is reached without processing for the cancel E by the customer 9, the usage of the service is settled independently of whether or not the customer 9 actually uses the service. Accordingly, the customer 9 is charged.

The billing to the customer 9 may be canceled (YES at step S1808) when the service provision server 8 of the member store 11 malfunctions to unsuccessfully provide the service, for example. In such a case, the service surrogate server 13 cancels the billing (step S1812) and cancels the credit confirmation for the credit company via the settlement server 37 (step S1813).

The customer 9 may cancel (E) the reservation prior to the cancel limit C (YES step S1806). The service surrogate server 13 cancels the credit confirmation for the credit company via the settlement server 37 (step S1810). Then, the service surrogate server 13 notifies the service cancellation to the member store server 7 of the member store 11 (step S1811).

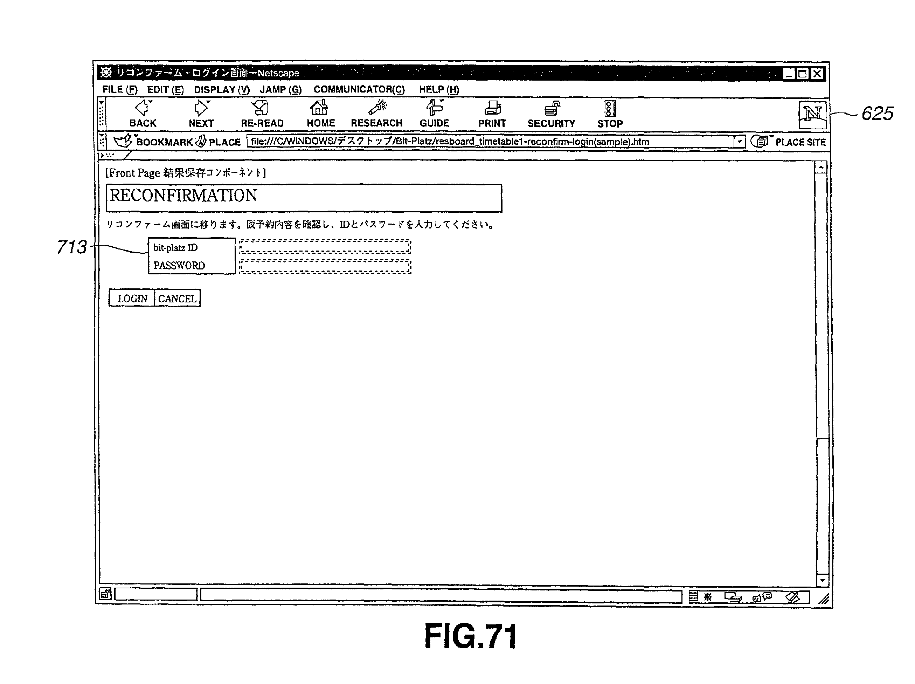

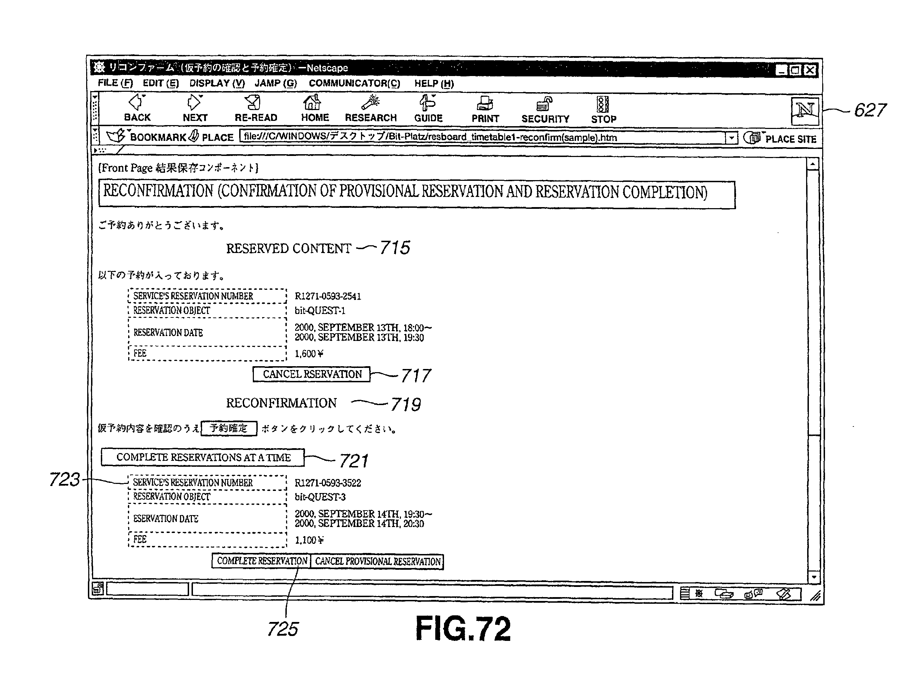

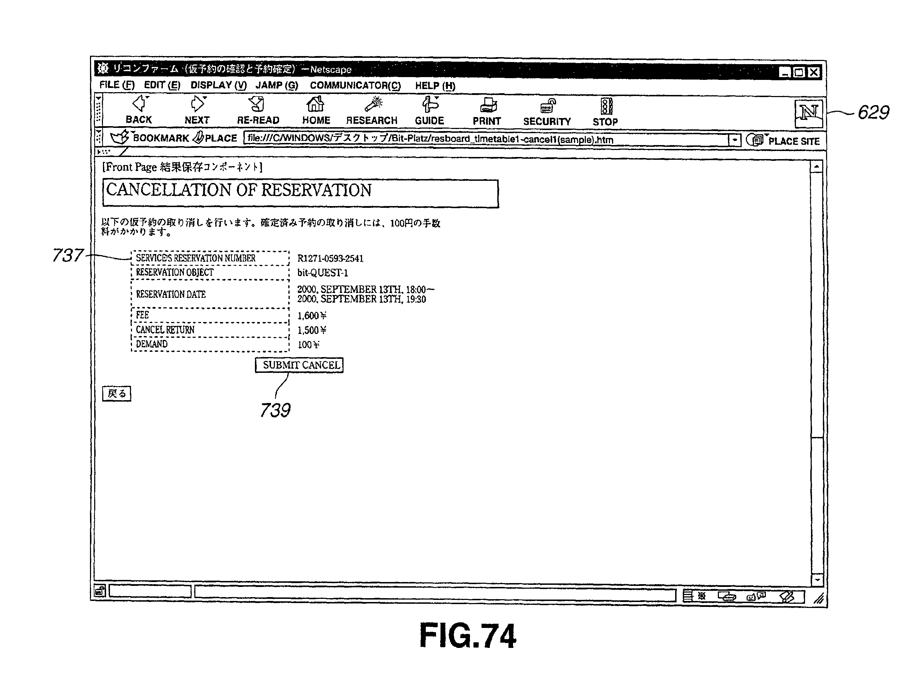

When canceling the reservation (E), the customer 9 first accesses the login screen 625 in FIG. 71 of the service surrogate server 13. The customer 9 then enters the customer ID and the password in an authentication area 713 to open the reconfirmation screen 627 in FIG. 72. The customer 9 confirms a content 715 of the completed reservation, and then clicks a cancel reservation button 717. The cancel confirmation screen 629 in FIG. 74 opens. The customer 9 reconfirms the reservation content 737 in the cancel confirmation screen 629. The reservation content 737 includes a cancel charge, a cancel return, etc. as well as the reservation target, the reservation date, and the reservation fee. The customer 9 clicks a submit cancel button 739 to determine the cancel E.

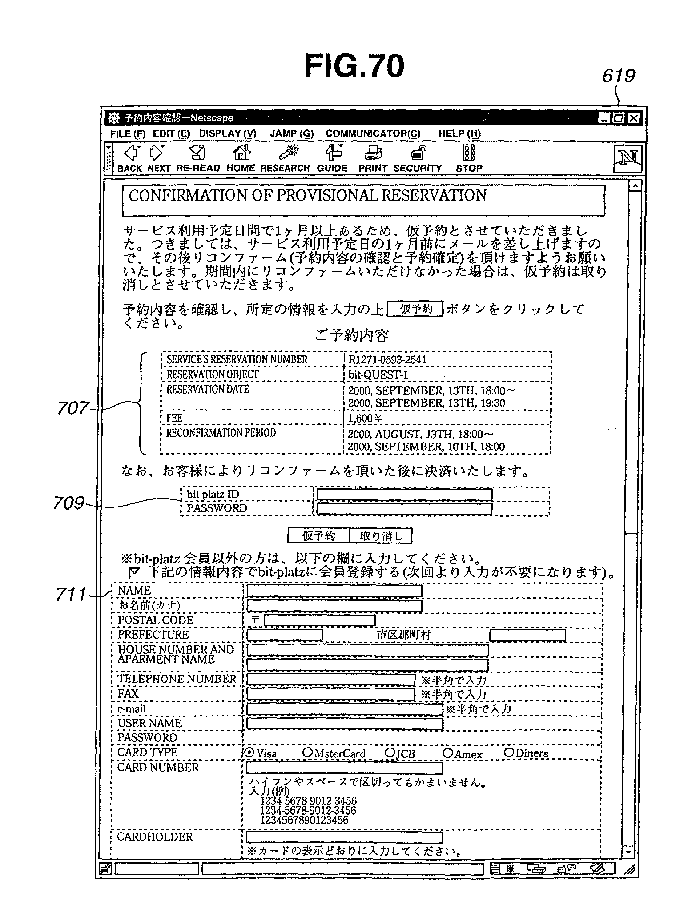

When a reservation is made at a time point D over one month (B) before the date A scheduled to start the service (see YES at step S1802 and the time scale in FIG. 68), the terminal 5 of the customer 9 displays the confirmation screen 619 for the provisional reservation as shown in FIG. 70. The confirmation screen 619 for the provisional reservation comprises a reservation content 707, a customer authentication area 709, and a customer registration area 711. The reservation content 707 includes the service reservation number, reservation target, scheduled date, fee, reconfirmation period, etc. The reservation target is a name of the game etc. provided by the game server, for example. The reconfirmation period is used to reconfirm the reservation. The reconfirmation period is valid, e.g., from a time point B one month before a date scheduled to start the service to a time point H for Y hours before the scheduled time.

In the customer authentication area 709, the customer 9 enters his or her ID and password. When the customer 9 is not registered for the service, he or she needs to complete the registration by entering necessary items such as the name, postal code, address, telephone number, e-mail address, card type, card number, etc. in the customer registration area 711. The entered content is registered to the customer database 41. The customer 9 confirms the reservation content 707 and enters necessary information in the customer authentication area 709 or the customer registration area 711. Then, he or she clicks the provisional reservation button in the confirmation screen 619 for the provisional reservation.

The reservation management server 35 of the service surrogate server 13 notifies the provisional reservation to the member store server 7 of the member store 11 (step S1814).

When a reservation is made at a time point over one month (B) before the date A scheduled to start the service (YES at step S1815), the customer 9 may cancel (G) the service (YES at step S1816). The reservation management server 35 of the service surrogate server 13 notifies the cancel to the member store server 7 of the member store 11 (step S1811).

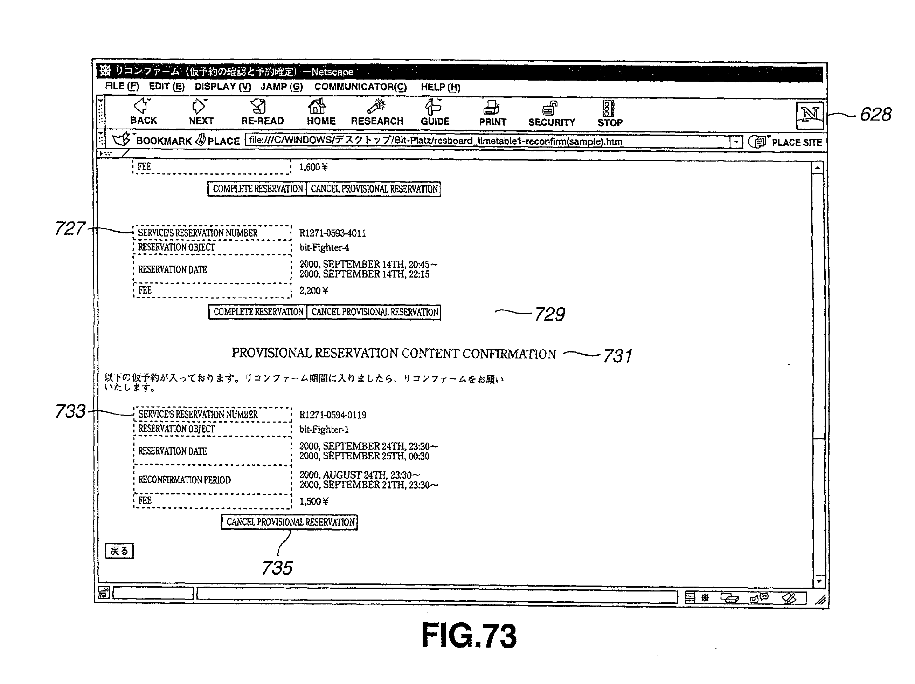

To cancel the service (G), the customer 9 logs on to the system using the login screen 625 in FIG. 71 of the service surrogate server 13 to open the reconfirmation screens 627 and 628 in FIGs. 72 and 73. The customer 9 confirms a content 733 of provisional reservation content confirmation 731, and then clicks a cancel provisional reservation button 735 to open a cancel confirmation screen 629 in FIG. 74. The customer 9 reconfirms the reservation content 737 of the cancel confirmation screen 629, and then clicks the submit cancel button 739 to settle the cancel G. In the example, the cancel confirmation screen 629 is accompanied by a cancel charge. There may be a case where no cancel charge occurs.

When there remains one month (B) or shorter before the date A scheduled to start the service (NO at step S1815), the reservation management server 35 of the service surrogate server 13 notifies the customer 9 of validation of the reconfirmation period (step S1817). A notification means uses e-mail, etc. When there is a very long period between the date A scheduled to start the service and the date D to make the reservation, the customer 9 may lose an intention to use the service or forget reserving the service. Therefore, it is absolutely necessary to notify validation of the reconfirmation period.

When the customer 9 makes reconfirmation F (YES at step S1818), the process takes effect from the above-mentioned step S1803. For making the reconfirmation F, the customer 9 first logs on to the system using the login screen 625 in FIG. 71 of the service surrogate server 13 to open the reconfirmation screens 627 and 628 in FIGs. 72 and 73. Using these screens, the customer 9 confirms a reconfirmation content 719.

Clicking a "Complete reservations at a time" button 721 completes the contents of a plurality of provisional reservations at a time. It may be preferable to individually complete provisional reservation contents 723 and 727 by clicking complete reservation buttons 725 and 729. The already reserved service is displayed in a field of "Reserved content" 715.

During a reconfirmation period, the customer 9 may cancel (I) the reservation (NO at step S1819) without making reconfirmation F ((NO at step S1818). The following describes canceling the provisional reservation during a reconfirmation period.

To cancel the service, the customer 9 first logs on to the system using the login screen 625 in FIG. 71 of the service surrogate server 13 to open the reconfirmation screens 627 and 628 in FIGs. 72 and 73. Using these screens, the customer 9 confirms the reconfirmation content 719. When the reconfirmation period takes effect, the content of the provisional reservation is transferred to the "Reconfirmation content" section 719 from the "Provisional reservation content confirmation" section 731. To cancel the provisional reservation, the customer 9 needs to click a cancel provisional reservation button adjacent to each of the complete reservation buttons 725 and 729 for the provisional reservation contents 723 and 727 individually. Then, the cancel confirmation screen 629 in FIG. 74 opens. The customer 9 reconfirms the reservation content 737 in the cancel confirmation screen 629. Clicking the submit cancel button 739 settles the cancel I. The reservation management server 35 of the service surrogate server 13 notifies the cancel to the member store server 7 of the member store 11 (step S1811).

A reconfirmation limit H may be reached without reconfirmation F (NO at step S1820). When the time reaches the point Y hours before the date A scheduled to start the service, for example, the provisional reservation of the customer 9 is automatically removed. Then, the reservation management server 35 of the service surrogate server 13 notifies the service cancellation to the member store server 7 of the member store 11 (step S1811).

According to the embodiment, when the member store 11 needs to reconfirm the service reservation, the service surrogate server 13 actually supports the reconfirmation and performs billing processing.

The service surrogate server 13 surrogately performs a complicated function which combines the reservation surrogate function and the settlement function. Accordingly, the member store 11 can easily operate the reservation system without using a reservation system or a settlement system. The reconfirmation function enables the customer 9 to make a provisional reservation at a time point considerably preceding the date scheduled to start the service. There is provided an effect of avoiding restrictions on credit processing in a credit company.

### Industrial Applicability

As mentioned above in detail, the present invention can provide a surrogate system etc. for allowing a member store etc. to eliminate the need for building a reservation system, a billing system, a digital ticket issuing system, etc. or performing complicated reconfirmation and to comply with continued services in the electronic business transaction by using the Internet, etc.

## Claims

1. A service surrogate system comprising:
a plurality of provider servers;
a plurality of terminals; and
a service surrogate server, wherein said plurality of provider servers, terminals, and service surrogate server are networked, said terminal accesses said provider server for being provided with a commodity or service, and then said service surrogate server performs billing processing.

2. A service surrogate server networked to a plurality of provider servers and terminals, comprising:
a registration means for receiving registration of a commodity or service from said provider server;
an order form creation means for creating an order form screen for a commodity or service registered by said registration means from said provider server; and
a billing means for performing billing processing of said commodity or service on behalf of said provider server in response to an order according to said order form from said terminal.

3. The service surrogate server according to claim 2, further comprising a transmission means for creating order information about an order received from said terminal according to said order form screen and transmitting order information to said provider server.

4. A service surrogate server to process billing processing corresponding to an order of a commodity or service to a provider server from a terminal on behalf of said provider server, comprising:
a reception means for receiving from said provider server a billing condition about billing for a commodity or service provided according to a request from said terminal;
a billing means building means for building a billing means for said provider server based on said billing condition received by said reception means; and
a billing surrogate means for performing billing processing of said commodity or service on behalfof said provider server based on said billing condition received by said reception means.

5. The service surrogate server according to claim 4, wherein said billing means building means builds a billing means based on said billing condition that said terminal is continuously charged for a specified period.

6. The service surrogate server according to claim 5, wherein a daily rate is applied to billing for the first month when said billing means building means builds a billing means based on said billing condition that the billing is continuously performed on a monthly basis.

7. A service surrogate method for a plurality of networked provider servers and terminals, comprising the steps of:
receiving registration of a commodity or service from said provider server;
creating an order form screen for a commodity or service registered from said provider server; and
performing billing processing of said commodity or service on behalf of said provider server in response to an order according to said order form from said terminal.

8. The service surrogate method according to claim 7, further comprising the step of creating order information about an order received from said terminal according to said order form screen and transmitting order infonnation to said provider server.

9. A service surrogate method to perform billing processing corresponding to an order of a commodity or service placed to a provider server from a terminal on behalf of said provider server, comprising the steps of:
receiving from said provider server a billing condition about billing for a commodity or service provided according to a request from said terminal;
building a billing means for said provider server based on said received billing condition; and
performing billing processing of said commodity or service on behalf of said provider server based on said billing condition.

10. The service surrogate method according to claim 9, wherein said step of building a billing means builds a billing means based on said billing condition that said terminal is continuously charged for a specified period.

11. The service surrogate method according to claim 10, wherein a daily rate is applied to billing for the first month when said step of building a billing means builds a billing means based on said billing condition that the billing is continuously performed on a monthly basis.

12. A computer-readable recording medium to store a program which allows a computer to function as:
a reception means for receiving from a provider server a billing condition about billing for a commodity or service provided according to a request from a tenninal;
a billing means building means for building a billing means for said provider server based on said billing condition received by said reception means; and
a billing surrogate means for performing billing processing of said commodity or service on behalf of said provider server based on said billing condition received by said reception means.

13. A computer-readable recording medium to store a program which allows a computer to function as:
a registration means for receiving registration of a commodity or service from a provider server;
an order form creation means for creating an order form screen for a commodity or service registered by said registration means from said provider server; and
a billing surrogate means for performing billing processing of said commodity or service on behalf of said provider server in response to an order according to said order form from said terminal.

14. A provider server networked to a plurality of terminals and a service surrogate server comprising:
a registration means for registering a commodity or service to said service surrogate server; and
a transmission means for transmitting a catalog screen of a commodity or service in response to an access from said terminal, wherein
when an order is placed via said catalog screen, said service surrogate server surrogately performs billing processing.

15. The provider server according to claim 14, further comprising an order information reception means for receiving order information about an order transmitted from said service surrogate server when said terminal places said order via said catalog screen.

16. The provider server according to claim 14, wherein said registration means registers a commodity or service to said service surrogate server so that billing for said commodity or service is continuously performed during a specified period.

17. A provider service method using a plurality of terminals and a service surrogate server networked with each other, comprising the steps of:
registering a commodity or service to said service surrogate server; and
transmitting a catalog screen of a commodity or service in response to an access from said terminal, wherein
when an order is placed via said catalog screen, said service surrogate server surrogately performs billing processing.

18. The provider service method according to claim 17, further comprising an order information reception means for receiving order information about an order transmitted from said service surrogate server when said terminal places said order via said catalog screen.

19. The provider service method according to claim 17, wherein said registration step registers a commodity or service to said service surrogate server so that billing for said commodity or service is continuously performed during a specified period.

20. A service surrogate server networked to a plurality of provider servers and terminals, comprising:
a means for creating a digital ticket according to a request to create a digital ticket from said provider server; and
an acceptance means for accepting purchase of a digital ticket at said terminal via said provider server to provide said digital ticket in response to a request for a digital ticket from said terminal.

21. The service surrogate server according to claim 20, further comprising a digital ticket purchase screen creation means for creating a digital ticket purchase screen to purchase a digital ticket from said terminal, wherein
said digital ticket creation means creates a digital ticket; and
said digital ticket purchase screen is provided to said provider server in response to a request from said terminal.

22. The service surrogate server according to claim 20, further comprising a transmission means for creating order information about an order of a digital ticket upon acceptance of purchase of said digital ticket by said acceptance means and transmitting order information to said provider server which sells said digital ticket.

23. The service surrogate server according to claim 20, wherein said registration means places usage restrictions on said digital ticket.

24. The service surrogate server according to claim 20, wherein when a digital ticket is used to purchase a commodity or service, validity of said digital ticket is confirmed.

25. The service surrogate server according to claim 20, wherein when requested to create a specified number of digital tickets from said provider server, said digital ticket creation means creates said specified number of digital tickets and accepts purchase of a specified number of digital tickets.

26. A service surrogate method for a plurality of networked provider servers and terminals, comprising the steps of:
creating digital tickets according to a request to create a digital ticket for a commodity or service from said provider server; and
accepting purchase of a digital ticket at said terminal via said provider server to provide said digital ticket in response to a request for a digital ticket from said terminal.

27. The service surrogate method according to claim 26, further comprising the step of creating a digital ticket purchase screen to purchase a digital ticket from said terminal, wherein
said step of creating a digital ticket creates a digital ticket; and
said digital ticket purchase screen is provided to said provider server in response to a request from said terminal.

28. The service surrogate method according to claim 26, further comprising the step of creating order information about an order of a digital ticket upon acceptance of purchase of said digital ticket by said step of accepting a digital ticket and transmitting order information to said provider server which sells said digital ticket.

29. The service surrogate method according to claim 26, wherein said step of creating a digital ticket purchase screen places usage restrictions on said digital ticket.

30. The service surrogate method according to claim 26, wherein when a digital ticket is used to purchase a commodity or service, validity of said digital ticket is confirmed.

31. The service surrogate method according to claim 26, wherein when requested to create a specified number of digital tickets from said provider server, said step of creating a digital ticket creates said specified number of digital tickets and accepts purchase of a specified number of digital tickets.

32. A computer-readable recording medium to store a program which allows a computer to function as:
a means for creating a digital ticket according to a request to create a digital ticket for a commodity or service from said provider server; and
an acceptance means for accepting purchase of a digital ticket at said terminal via said provider server to provide said digital ticket in response to a request for a digital ticket from said terminal.

33. A service surrogate server networked to a plurality of provider servers and terminals, comprising:
a registration means for registering reservation target information about a commodity or service from said provider server;
a means for creating a reservation board of a commodity or service registered by said registration means; and
a service surrogate means for making a reservation on behalf of said provider server upon acceptance of a reservation of said commodity or service from said terminal via said provider server.

34. The service surrogate server according to claim 33, wherein when said registration means registers a reservation of a commodity or service on a first-come-first-served basis, a specified number of reservations are made in the order of arrival.

35. The service surrogate server according to claim 33, wherein said service surrogate means surrogately reserves a commodity or service and notifies reservation information to a provider server of said commodity or service.

36. The service surrogate server according to claim 34, wherein said creation means creates a reservation board so that the reservation board displays the number of first arrived reservations and the remaining number of available reservations.

37. The service surrogate server according to claim 33, wherein: when said registration means registers a reservation of a commodity or service on a time-based basis, said server surrogately makes a reservation according to the registered time-based.

38. The service surrogate server according to claim 33, wherein: when said registration means makes a lottery reservation of a commodity or service, there is further provided a selection means for selecting a specified number of prizewinners registered by said registration means out of the number of reservations accepted by said service surrogate means.

39. The service surrogate server according to claim 38, wherein successful lottery is notified to at least one terminal that won a lottery for said number of reservations according to said selection means.

40. The service surrogate server according to claim 33, wherein said registration means registers information about the time to start using said commodity or service, and then said service surrogate means accepts a reservation made until a time point specified by said time information as a provisional reservation.

41. The service surrogate server according to claim 40, wherein said service surrogate means makes a provisional reservation, settles the reservation after a time point specified by said time information, and notifies reservation settlement information to said provider server.

42. The service surrogate server according to claim 40, wherein said service surrogate means makes a provisional reservation and notifies a reconfirmation period for said reservation before a time point specified by said time information.

43. The service surrogate server according to claim 42, wherein said server notifies reservation cancel to said provider server when no reconfirmation is made during said reconfirmation period from said terminal which made a provisional reservation of said commodity or service.

44. A service surrogate method for a plurality of networked provider servers and terminals, comprising the steps of:
registering reservation target infonnation about a commodity or service from said provider server;
creating a reservation board for a commodity or service registered at said step; and
receiving a reservation of said commodity or service from said terminal via said provider server and processes a reservation on behalf of said provider server.

45. The service surrogate method according to claim 44, wherein: when said step of registering reservation target information registers a reservation of a commodity or service on a first-come-first-served basis, a specified number of reservations are made in the order of arrival.

46. The service surrogate method according to claim 44, wherein said step of surrogately making a reservation reserves a commodity or service and notifies reservation information to a provider server of said commodity or service.

47. The service surrogate method according to claim 44, wherein said step of creating a reservation board creates a reservation board so that the reservation board displays the number of first arrived reservations and the remaining number of available reservations.

48. The service surrogate method according to claim 44, wherein: when said step of registering reservation target information registers a reservation of a commodity or service on a time-based basis, said method surrogately makes a reservation according to the registered time-based.

49. The service surrogate method according to claim 44, wherein: when said step of registering reservation target information makes a lottery reservation of a commodity or service, there is further provided the step of selecting a specified number of prizewinners registered by said registration step out of the number of reservations accepted by said step of making reservations.

50. The service surrogate method according to claim 49, wherein successful lottery is notified to at least one terminal that won a lottery for said number of reservations according to said step of selecting a specified number of registered prizewinners.

51. The service surrogate method according to claim 44, wherein said step of registering reservation target information registers information about the time to start using said commodity or service, and then said step of surrogately making reservations accepts a reservation made until a time point specified by said time information as a provisional reservation.

52. The service surrogate method according to claim 51, wherein said step of surrogately making reservations makes a provisional reservation, settles the reservation after a time point specified by said time information, and notifies reservation settlement information to said provider server.

53. The service surrogate method according to claim 51, wherein said step of surrogately making reservations makes a provisional reservation and notifies a reconfirmation period for said reservation before a time point specified by said time information.

54. The service surrogate method according to claim 53, wherein said method notifies reservation cancel to said provider server when no reconfirmation is made during said reconfirmation period from said terminal which made a provisional reservation of said commodity or service.

55. A computer-readable recording medium to store a program which allows a computer to function as:
a registration means for registering reservation target information about a commodity or service from a provider server;
a means for creating a reservation board of a commodity or service registered by said registration means; and
a service surrogate means for making a reservation on behalf of said provider server upon acceptance of a reservation of said commodity or service from said terminal via said provider server.

56. The recording medium according to claim 55, wherein said registration means for registering reservations registers information about the time to start using said commodity or service, and then said service surrogate means accepts a reservation made until a time point specified by said time information as a provisional reservation.
